# EUROPEAN PATENT APPLICATION

(11) **EP 4 676 022 A1**
(43) Date of publication of application: **07.01.2026**
(21) Application number: 25187663.7
(22) Date of filing: 04.07.2025
(51) Int. Cl.: H04N 7/15

(54) **VISUAL REPRESENTATIONS OF USERS IN MULTI-USER COMMUNICATION SESSIONS AND AUDIO EXPERIENCES IN MULTI-USER COMMUNICATION SESSIONS**

(30) Priority: 05.07.2024 US 202463667978 P; 14.05.2025 US 202563805656 P; 20.06.2025 US 202519245107
(71) Applicant: Apple Inc., Cupertino, CA 95014 (US)
(72) Inventor: CERRA, Joseph P., Cupertino, 95014 (US); BARSOTTI, Hayden James, Cupertino, 95014 (US); SMITH, Connor A., Cupertino, 95014 (US); PIEMONTE, Patrick, San Francisco, 94117 (US); ROCHETTE, Tommy, Cupertino, 95014 (US); PICCOLO, Jacob A., Cupertino, 95014 (US)
(74) Representative: Barton, Russell Glen

(57) **Abstract**

This includes example systems and methods for changing a visual appearance of a user in a multi-user communication session in response to detecting that the user transitions from being a non-collocated user (e.g., a remote user) within the multi-user communication session to being a collocated user within the multi-user communication session and/or vice versa. This also includes example systems and methods for determining a mode of visual representation of a user of an electronic device that is joined into a multi-user communication session that is already active between users of other electronic devices. This also includes example systems and methods for enhancing audio experiences of collocated users of electronic devices in a multi-user communication session.

## Description

### Cross Reference To Related Applications

This application claims the benefit of U.S. Provisional Application No. 63/667,978, filed July 5, 2024, U.S. Provisional Application No. 63/805,656, filed May 14, 2025, and U.S. Patent Application No. 19/245,107, filed June 20, 2025, the contents of which are herein incorporated by reference in their entireties for all purposes.

### Field of the Disclosure

This relates generally to systems and methods involving visual representations of users and audio experiences in a multi-user communication session.

### Background of the Disclosure

Some computer graphical environments provide two-dimensional and/or three-dimensional environments where at least some objects displayed for a user's viewing are virtual and generated by a computer. In some examples, the three-dimensional environments are presented by multiple devices communicating in a multi-user communication session. In some examples, an avatar (e.g., a representation) of each non-collocated user participating in the multi-user communication session (e.g., via the computing devices) is displayed in the three-dimensional environment of the multi-user communication session. In some examples, content can be shared in the three-dimensional environment for viewing and interaction by multiple users participating in the multi-user communication session.

### Summary of the Disclosure

A multi-user communication session may include collocated users and/or remote users. Users in the multi-user communication session are optionally in the multi-user communication session via respective electronic devices associated with the respective users.

A collocated user is optionally a user in the multi-user communication session whose electronic device (and person (e.g., body or part of a body of the user)) shares a visual space of a physical environment with another electronic device (and person) of another user and/or whose electronic device (and person) shares an audio space of a physical environment with the other electronic device (and person) of the other user. When a first electronic device shares a visual space of a physical environment with a second electronic device, one or more first portions of the physical environment are optionally captured by the first electronic device and one or more second portions of the physical environment are captured by the second electronic device and these first and second captured portions are optionally analyzed to determine an overlap in characteristics associated with the first and second captured portions, and further, are optionally analyzed in view of metadata associated with the capturing of the first and second captured portions, such as the orientation of the first electronic device in the physical environment when the one or more first portions are captured and the orientation of the second electronic device in the physical environment when the one or more second portions are captured. When a first electronic device shares an audio space of a physical environment with a second electronic device, audio data detected by one or more first microphones in communication with the first electronic device is optionally also detected by one or more second microphones in communication with the second electronic device.

A remote user (e.g., a non-collocated user) is optionally a user of the multi-user communication session whose electronic device (and person) does not share a visual space of a physical environment with another electronic device (and person) of another user and/or whose electronic device (and person) does not share an audio space of a physical environment with the other electronic device (and person) of the other user.

When a first electronic device is collocated with a second electronic device and is not collocated with a third electronic device, the second electronic device is optionally not collocated with the third electronic device either. When a first electronic device is collocated with a second electronic device and is collocated with a third electronic device, the second electronic device is optionally also collocated with the third electronic device.

Some examples of the disclosure are directed to systems and methods for changing a visual appearance of a user of an electronic device in a multi-user communication session in response to detecting that the user of the electronic device transitions from being a non-collocated user within the multi-user communication session to being a collocated user within the multi-user communication session.

Some examples of the disclosure are directed to systems and methods for changing a visual appearance of a user in a multi-user communication session in response to detecting that the user transitions from being a collocated user within the multi-user communication session to being a non-collocated user within the multi-user communication session.

Some examples of the disclosure are directed to systems and methods for determining a mode of visual representation of a user of an electronic device that is joined into a multi-user communication session that is already active between users of other electronic devices, according to some examples of the disclosure.

Some examples of the disclosure are directed to systems and methods for enhancing audio experiences of collocated users in the multi-user communication session. For example, at a first electronic device of a first user who is collocated with a second user of a second electronic device in the multi-user communication session, and while a first audio property of the first electronic device is at a first level, the first electronic device optionally changes in level the first audio property in response to changes in distance between the first electronic device and the second electronic device.

The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.
FIG. 1 illustrates an electronic device presenting an extended reality environment according to some examples of the disclosure.
FIG. 2 illustrates a block diagram of an example architecture for a system according to some examples of the disclosure.
FIG. 3 illustrates an example of a spatial group in a multi-user communication session that includes a first electronic device and a second electronic device according to some examples of the disclosure.
FIGs. 4A-4H generally illustrate examples of changing a mode of visual representation of a user in a multi-user communication session in response to detecting that the user changes from being a non-collocated user in the multi-user communication session to a collocated user in the multi-user communication session or in response to detecting that the user changes from being a collocated user in the multi-user communication session to being a non-collocated user in the multi-user communication session according to some examples of the disclosure.
FIGs. 4I-4O illustrate examples of joining a user of an electronic device into a multi-user communication session that is already active between users of other electronic devices according to some examples of the disclosure.
FIGs. 5A-5H illustrate examples of an electronic device in a multi-user communication session changing a level of a first audio property based on changes in distance between the electronic device and another electronic device that is collocated with the electronic device in the multi-user communication session according to some examples of the disclosure.
FIG. 6 is a flow diagram illustrating an example method for changing a mode of visual representation of a user in a multi-user communication session in response to detecting that the user changes from being a non-collocated user in the multi-user communication session to a collocated user in the multi-user communication session according to some examples of the disclosure.
FIG. 7 is a flow diagram illustrating an example method for determining a mode of visual representation of a user of an electronic device that is joined into a multi-user communication session that is already active between users of other electronic devices according to some examples of the disclosure.
FIG. 8 is a flow diagram illustrating an example method for changing a level of a first audio property of a first electronic device that is collocated with a second electronic device in a multi-user communication session according to some examples of the disclosure.

### Detailed Description

A multi-user communication session may include collocated users and/or remote users. Users in the multi-user communication session are optionally in the multi-user communication session via respective electronic devices associated with the respective users.

A collocated user is optionally a user in the multi-user communication session whose electronic device (and person (e.g., body or part of a body of the user)) shares a visual space of a physical environment with another electronic device (and person) of another user and/or whose electronic device (and person) shares an audio space of a physical environment with the other electronic device (and person) of the other user. When a first electronic device shares a visual space of a physical environment with a second electronic device, one or more first portions of the physical environment are optionally captured by the first electronic device and one or more second portions of the physical environment are captured by the second electronic device and these first and second captured portions are optionally analyzed to determine an overlap in characteristics associated with the first and second captured portions, and further, are optionally analyzed in view of metadata associated with the capturing of the first and second captured portions, such as the orientation of the first electronic device in the physical environment when the one or more first portions are captured and the orientation of the second electronic device in the physical environment when the one or more second portions are captured. When a first electronic device shares an audio space of a physical environment with a second electronic device, audio data detected by one or more first microphones in communication with the first electronic device is optionally also detected by one or more second microphones in communication with the second electronic device.

A remote user (e.g., a non-collocated user) is optionally a user of the multi-user communication session whose electronic device (and person) does not share a visual space of a physical environment with another electronic device (and person) of another user and/or whose electronic device (and person) does not share an audio space of a physical environment with the other electronic device (and person) of the other user.

When a first electronic device is collocated with a second electronic device and is not collocated with a third electronic device, the second electronic device is optionally not collocated with the third electronic device either. When a first electronic device is collocated with a second electronic device and is collocated with a third electronic device, the second electronic device is optionally also collocated with the third electronic device.

Some examples of the disclosure are directed to systems and methods for changing a visual appearance of a user in a multi-user communication session in response to detecting that the user transitions from being a non-collocated user within the multi-user communication session to being a collocated user within the multi-user communication session.

Some examples of the disclosure are directed to systems and methods for changing a visual appearance of a user of an electronic device in a multi-user communication session in response to detecting that the user of the electronic device transitions from being a non-collocated user within the multi-user communication session to being a collocated user within the multi-user communication session.

Some examples of the disclosure are directed to systems and methods for determining a mode of visual representation of a user of an electronic device that is joined into a multi-user communication session that is already active between users of other electronic devices.

Some examples of the disclosure are directed to systems and methods for enhancing audio experiences of collocated users in the multi-user communication session. For example, at a first electronic device of a first user who is collocated with a second user of a second electronic device in the multi-user communication session, and while a first audio property of the first electronic device is at a first level, the first electronic device optionally changes in level the first audio property in response to changes in distance between the first electronic device and the second electronic device.

It should be noted that herein when a first user of a first electronic device is collocated with a second user of a second electronic device, the first and second electronic devices are collocated relative to each other. Similarly, when a first user of a first electronic device is non-collocated with a second user of a second electronic device, the first and second electronic devices are non-collocated relative to each other.

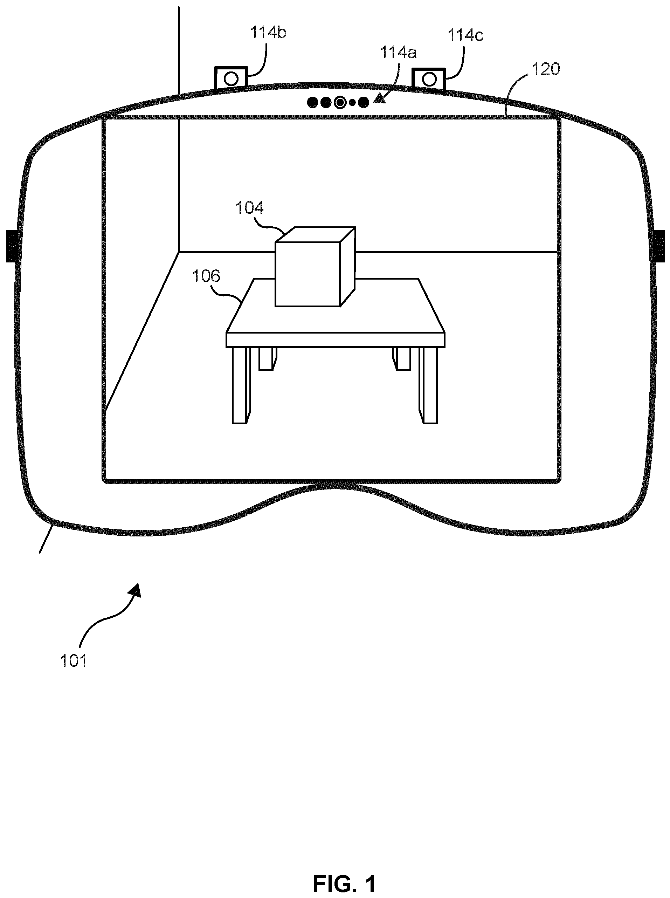

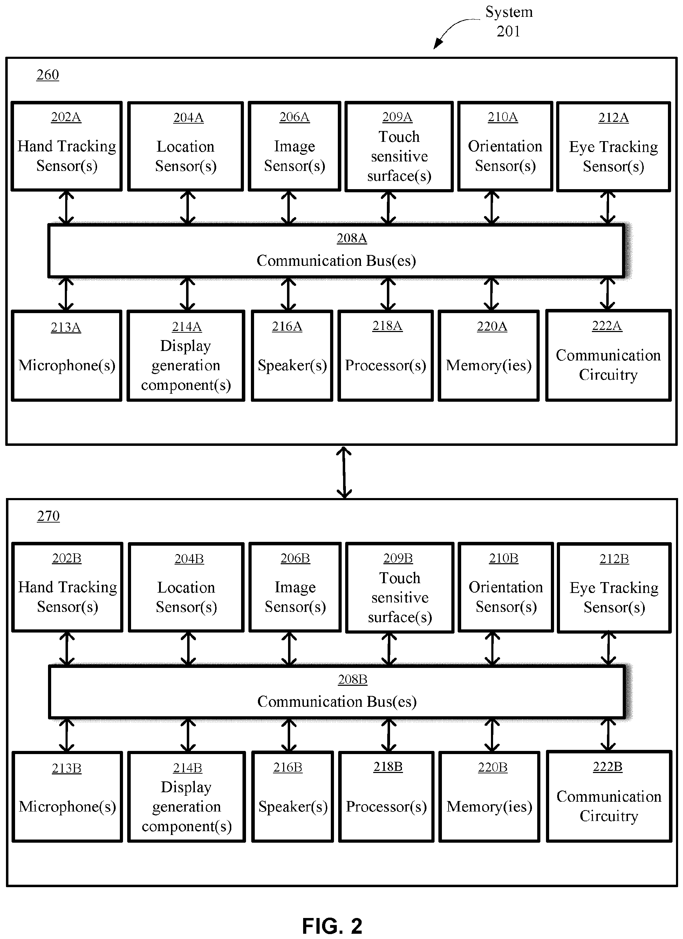

FIG. 1 illustrates an electronic device 101 presenting an extended reality (XR) environment (e.g., a computer-generated environment optionally including representations of physical and/or virtual objects) according to some examples of the disclosure. In some examples, as shown in FIG. 1, electronic device 101 is a head-mounted display or other head-mountable device configured to be worn on a head of a user of the electronic device 101. Examples of electronic device 101 are described below with reference to the architecture block diagram of FIG. 2. As shown in FIG. 1, electronic device 101 and table 106 are located in a physical environment. The physical environment may include physical features such as a physical surface (e.g., floor, walls) or a physical object (e.g., table, lamp, etc.). In some examples, electronic device 101 may be configured to detect and/or capture images of physical environment including table 106 (illustrated in the field of view of electronic device 101).

In some examples, as shown in FIG. 1, electronic device 101 includes one or more internal image sensors 114a oriented towards a face of the user (e.g., eye tracking cameras described below with reference to FIG. 2). In some examples, internal image sensors 114a are used for eye tracking (e.g., detecting a gaze of the user). Internal image sensors 114a are optionally arranged on the left and right portions of display 120 to enable eye tracking of the user's left and right eyes. In some examples, electronic device 101 also includes external image sensors 114b and 114c facing outwards from the user to detect and/or capture the physical environment of the electronic device 101 and/or movements of the user's hands or other body parts.

In some examples, display 120 has a field of view visible to the user (e.g., that may or may not correspond to a field of view of external image sensors 114b and 114c). Because display 120 is optionally part of a head-mounted device, the field of view of display 120 is optionally the same as or similar to the field of view of the user's eyes. In other examples, the field of view of display 120 may be smaller than the field of view of the user's eyes. In some examples, electronic device 101 may be an optical see-through device in which display 120 is a transparent or translucent display through which portions of the physical environment may be directly viewed. In some examples, display 120 may be included within a transparent lens and may overlap all or only a portion of the transparent lens. In other examples, electronic device may be a video-passthrough device in which display 120 is an opaque display configured to display images of the physical environment captured by external image sensors 114b and 114c. While a single display 120 is shown, it should be appreciated that display 120 may include a stereo pair of displays.

In some examples, in response to a trigger, the electronic device 101 may be configured to display a virtual object 104 in the XR environment represented by a cube illustrated in FIG. 1, which is not present in the physical environment, but is displayed in the XR environment positioned on the top of real-world table 106 (or a representation thereof). Optionally, virtual object 104 can be displayed on the surface of the table 106 in the XR environment displayed via the display 120 of the electronic device 101 in response to detecting the planar surface of table 106 in the physical environment 100.

It should be understood that virtual object 104 is a representative virtual object and one or more different virtual objects (e.g., of various dimensionality such as two-dimensional or other three-dimensional virtual objects) can be included and rendered in a three-dimensional XR environment. For example, the virtual object can represent an application or a user interface displayed in the XR environment. In some examples, the virtual object can represent content corresponding to the application and/or displayed via the user interface in the XR environment. In some examples, the virtual object 104 is optionally configured to be interactive and responsive to user input (e.g., air gestures, such as air pinch gestures, air tap gestures, and/or air touch gestures), such that a user may virtually touch, tap, move, rotate, or otherwise interact with, the virtual object 104.

In some examples, displaying an object in a three-dimensional environment may include interaction with one or more user interface objects in the three-dimensional environment. For example, initiation of display of the object in the three-dimensional environment can include interaction with one or more virtual options/affordances displayed in the three-dimensional environment. In some examples, a user's gaze may be tracked by the electronic device as an input for identifying one or more virtual options/affordances targeted for selection when initiating display of an object in the three-dimensional environment. For example, gaze can be used to identify one or more virtual options/affordances targeted for selection using another selection input. In some examples, a virtual option/affordance may be selected using hand-tracking input detected via an input device in communication with the electronic device. In some examples, objects displayed in the three-dimensional environment may be moved and/or reoriented in the three-dimensional environment in accordance with movement input detected via the input device.

In the discussion that follows, an electronic device that is in communication with a display generation component (e.g., one or more displays) and one or more input devices is described. Further, the electronic device is optionally in communication with one or more output devices such as one or more audio output devices. It should be understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it should be understood that the described electronic device, display and touch-sensitive surface are optionally distributed amongst two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information. In some embodiments, the electronic device has (e.g., includes or is in communication with) a display generation component (e.g., a display device such as a head-mounted device (HMD), a display, a projector, a touch-sensitive display (also known as a "touch screen" or "touch-screen display"), or other device or component that presents visual content to a user, for example on or in the display generation component itself or produced from the display generation component and visible elsewhere.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIG. 2 illustrates a block diagram of an example architecture for a system 201 according to some examples of the disclosure. In some examples, system 201 includes multiple devices. For example, the system 201 includes a first electronic device 260 and a second electronic device 270, wherein the first electronic device 260 and the second electronic device 270 are in communication with each other. In some examples, the first electronic device 260 and the second electronic device 270 are a portable device, such as a mobile phone, smart phone, a tablet computer, a laptop computer, an auxiliary device in communication with another device, a head-mounted display, etc., respectively. In some examples, the first electronic device 260 and the second electronic device 270 correspond to electronic device 101 described above with reference to FIG. 1.

As illustrated in FIG. 2, the first electronic device 260 optionally includes various sensors (e.g., one or more hand tracking sensors 202A, one or more location sensors 204A, one or more image sensors 206A, one or more touch-sensitive surfaces 209A, one or more motion and/or orientation sensors 210A, one or more eye tracking sensors 212A, one or more microphones 213A or other audio sensors, one or more body tracking sensors (e.g., torso and/or head tracking sensors), one or more display generation components 214A, one or more speakers 216A, one or more processors 218A, one or more memories 220A, and/or communication circuitry 222A. In some examples, the second device 270 optionally includes various sensors (e.g., one or more hand tracking sensors 202B, one or more location sensors 204B, one or more image sensors 206B, one or more touch-sensitive surfaces 209B, one or more motion and/or orientation sensors 210B, one or more eye tracking sensors 212B, one or more microphones 213B or other audio sensors, one or more body tracking sensors (e.g., torso and/or head tracking sensors), one or more display generation components 214B, one or more speakers 216, one or more processors 218B, one or more memories 220B, and/or communication circuitry 222B. In some examples, the one or more display generation components 214A, 214B correspond to display 120 in FIG. 1. One or more communication buses 208A and 208B are optionally used for communication between the above-mentioned components of electronic devices 260 and 270, respectively. First electronic device 260 and second electronic device 270 optionally communicate via a wired or wireless connection (e.g., via communication circuitry 222A, 222B) between the two devices.

Communication circuitry 222A, 222B optionally includes circuitry for communicating with electronic devices, networks, such as the Internet, intranets, a wired network and/or a wireless network, cellular networks, and wireless local area networks (LANs). Communication circuitry 222A, 222B optionally includes circuitry for communicating using near-field communication (NFC) and/or short-range communication, such as Bluetooth^{®}.

Processor(s) 218A, 218B include one or more general processors, one or more graphics processors, and/or one or more digital signal processors. In some examples, memory 220A, 220B is a non-transitory computer-readable storage medium (e.g., flash memory, random access memory, or other volatile or non-volatile memory or storage) that stores computer-readable instructions configured to be executed by processor(s) 218A, 218B to perform the techniques, processes, and/or methods described below. In some examples, memory 220A, 220B can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on compact disc (CD), digital versatile disc (DVD), or Blu-ray technologies, as well as persistent solid-state memory such as flash, solid-state drives, and the like.

In some examples, display generation component(s) 214A, 214B include a single display (e.g., a liquid-crystal display (LCD), organic light-emitting diode (OLED), or other types of display). In some examples, display generation component(s) 214A, 214B includes multiple displays. In some examples, display generation component(s) 214A, 214B can include a display with touch capability (e.g., a touch screen), a projector, a holographic projector, a retinal projector, a transparent or translucent display, etc. In some examples, electronic devices 260 and 270 include touch-sensitive surface(s) 209A and 209B, respectively, for receiving user inputs, such as tap inputs and swipe inputs or other gestures. In some examples, display generation component(s) 214A, 214B and touch-sensitive surface(s) 209A, 209B form touch-sensitive display(s) (e.g., a touch screen integrated with electronic devices 260 and 270, respectively, or external to electronic devices 260 and 270, respectively, that is in communication with electronic devices 260 and 270).

Electronic devices 260 and 270 optionally include image sensor(s) 206A and 206B, respectively. Image sensors(s) 206A/206B optionally include one or more visible light image sensors, such as charged coupled device (CCD) sensors, and/or complementary metal-oxide-semiconductor (CMOS) sensors operable to obtain images of physical objects from the real-world environment. Image sensor(s) 206A/206B also optionally include one or more infrared (IR) sensors, such as a passive or an active IR sensor, for detecting infrared light from the real-world environment. For example, an active IR sensor includes an IR emitter for emitting infrared light into the real-world environment. Image sensor(s) 206A/206B also optionally include one or more cameras configured to capture movement of physical objects in the real-world environment. Image sensor(s) 206A/206B also optionally include one or more depth sensors configured to detect the distance of physical objects from electronic device 260/270. In some examples, information from one or more depth sensors can allow the device to identify and differentiate objects in the real-world environment from other objects in the real-world environment. In some examples, one or more depth sensors can allow the device to determine the texture and/or topography of objects in the real-world environment.

In some examples, electronic devices 260 and 270 use CCD sensors, event cameras, and depth sensors in combination to detect the physical environment around electronic devices 260 and 270. In some examples, image sensor(s) 206A/206B include a first image sensor and a second image sensor. The first image sensor and the second image sensor work in tandem and are optionally configured to capture different information of physical objects in the real-world environment. In some examples, the first image sensor is a visible light image sensor and the second image sensor is a depth sensor. In some examples, electronic device 260/270 uses image sensor(s) 206A/206B to detect the position and orientation of electronic device 260/270 and/or display generation component(s) 214A/214B in the real-world environment. For example, electronic device 260/270 uses image sensor(s) 206A/206B to track the position and orientation of display generation component(s) 214A/214B relative to one or more fixed objects in the real-world environment.

In some examples, electronic device 260/270 includes microphone(s) 213A/213B or other audio sensors. Device 260/270 uses microphone(s) 213A/213B to detect sound from the user and/or the real-world environment of the user. In some examples, microphone(s) 213A/213B includes an array of microphones (a plurality of microphones) that optionally operate in tandem, such as to identify ambient noise or to locate the source of sound in space of the real-world environment.

In some examples, device 260/270 includes location sensor(s) 204A/204B for detecting a location of device 260/270 and/or display generation component(s) 214A/214B. For example, location sensor(s) 204A/204B can include a global positioning system (GPS) receiver that receives data from one or more satellites and allows electronic device 260/270 to determine the device's absolute position in the physical world.

In some examples, electronic device 260/270 includes orientation sensor(s) 210A/210B for detecting orientation and/or movement of electronic device 260/270 and/or display generation component(s) 214A/214B. For example, electronic device 260/270 uses orientation sensor(s) 210A/210B to track changes in the position and/or orientation of electronic device 260/270 and/or display generation component(s) 214A/214B, such as with respect to physical objects in the real-world environment. Orientation sensor(s) 210A/210B optionally include one or more gyroscopes and/or one or more accelerometers.

Electronic device 260/270 includes hand tracking sensor(s) 202A/202B and/or eye tracking sensor(s) 212A/212B (and/or other body tracking sensor(s), such as leg, torso, and/or head tracking sensor(s)), in some examples. Hand tracking sensor(s) 202A/202B are configured to track the position/location of one or more portions of the user's hands, and/or motions of one or more portions of the user's hands with respect to the extended reality environment, relative to the display generation component(s) 214A/214B, and/or relative to another defined coordinate system. Eye tracking sensor(s) 212A/212B are configured to track the position and movement of a user's gaze (eyes, face, or head, more generally) with respect to the real-world or extended reality environment and/or relative to the display generation component(s) 214A/214B. In some examples, hand tracking sensor(s) 202A/202B and/or eye tracking sensor(s) 212A/212B are implemented together with the display generation component(s) 214A/214B. In some examples, the hand tracking sensor(s) 202A/202B and/or eye tracking sensor(s) 212A/212B are implemented separate from the display generation component(s) 214A/214B.

In some examples, the hand tracking sensor(s) 202A/202B (and/or other body tracking sensor(s), such as leg, torso, and/or head tracking sensor(s)) can use image sensor(s) 206A/206B (e.g., one or more IR cameras, 3D cameras, depth cameras, etc.) that capture three-dimensional information from the real-world including one or more body parts (e.g., hands, legs, or torso of a human user). In some examples, the hands can be resolved with sufficient resolution to distinguish fingers and their respective positions. In some examples, one or more image sensors 206A/206B are positioned relative to the user to define a field of view of the image sensor(s) 206A/206B and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, eye tracking sensor(s) 212A/212B includes at least one eye tracking camera (e.g., infrared (IR) cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by one or more respective eye tracking cameras/illumination sources.

Electronic device 260/270 and system 201 are not limited to the components and configuration of FIG. 2, but can include fewer, other, or additional components in multiple configurations. In some examples, system 201 can be implemented in a single device. In some examples, system 201 is implemented in multiple devices. A person or persons using system 201, is optionally referred to herein as a user or users of the device(s).

Attention is now directed towards exemplary concurrent displays of a three-dimensional environment on a first electronic device (e.g., corresponding to electronic device 260) and a second electronic device (e.g., corresponding to electronic device 270). As discussed below, the first electronic device may be in communication with the second electronic device in a multi-user communication session. In some examples, an avatar (e.g., a representation of) a user of the first electronic device may be displayed in the three-dimensional environment at the second electronic device, and an avatar of a user of the second electronic device may be displayed in the three-dimensional environment at the first electronic device.

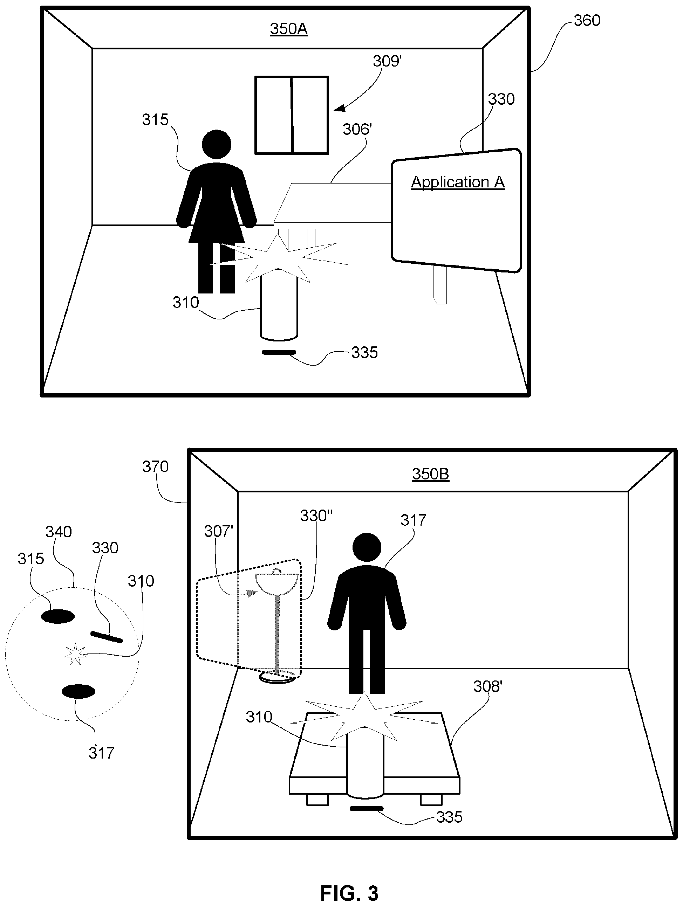

FIG. 3 illustrates an example of a spatial group 340 in a multi-user communication session that includes a first electronic device 360 and a second electronic device 370 according to some examples of the disclosure. In some examples, the first electronic device 360 may present a three-dimensional environment 350A, and the second electronic device 370 may present a three-dimensional environment 350B. The first electronic device 360 and the second electronic device 370 may be similar to electronic device 101 or 260/270, and/or may be a head mountable system/device and/or projection-based system/device (including a hologram-based system/device) configured to generate and present a three-dimensional environment, such as, for example, heads-up displays (HUDs), head mounted displays (HMDs), windows having integrated display capability, displays formed as lenses designed to be placed on a person's eyes (e.g., similar to contact lenses), respectively. In the example of FIG. 3, a first user is optionally wearing the first electronic device 360 and a second user is optionally wearing the second electronic device 370, such that the three-dimensional environment 350A/350B can be defined by X, Y and Z axes as viewed from a perspective of the electronic devices (e.g., a viewpoint associated with the electronic device 360/370, which may be a head-mounted display, for example).

As shown in FIG. 3, the first electronic device 360 may be in a first physical environment that includes a table 306 and a window 309. Thus, the three-dimensional environment 350A presented using the first electronic device 360 optionally includes captured portions of the physical environment surrounding the first electronic device 360, such as a representation of the table 306' and a representation of the window 309'. Similarly, the second electronic device 370 may be in a second physical environment, different from the first physical environment (e.g., separate from the first physical environment), that includes a floor lamp 307 and a coffee table 308. Thus, the three-dimensional environment 350B presented using the second electronic device 370 optionally includes captured portions of the physical environment surrounding the second electronic device 370, such as a representation of the floor lamp 307' and a representation of the coffee table 308'. Additionally, the three-dimensional environments 350A and 350B may include representations of the floor, ceiling, and walls of the room in which the first electronic device 360 and the second electronic device 370, respectively, are located.

As mentioned above, in some examples, the first electronic device 360 is optionally in a multi-user communication session with the second electronic device 370. For example, the first electronic device 360 and the second electronic device 370 (e.g., via communication circuitry 222A/222B) are configured to present a shared three-dimensional environment 350A/350B that includes one or more shared virtual objects (e.g., content such as images, video, audio and the like, representations of user interfaces of applications, etc.). As used herein, the term "shared three-dimensional environment" refers to a three-dimensional environment that is independently presented, displayed, and/or visible via two or more electronic devices via which content, applications, data, and the like may be shared and/or presented to users of the two or more electronic devices. In some examples, while the first electronic device 360 is in the multi-user communication session with the second electronic device 370, an avatar corresponding to the user of one electronic device is optionally displayed in the three-dimensional environment that is displayed via the other electronic device. For example, as shown in FIG. 3, at the first electronic device 360, an avatar 315 corresponding to the user of the second electronic device 370 is displayed in the three-dimensional environment 350A. Similarly, at the second electronic device 370, an avatar 317 corresponding to the user of the first electronic device 360 is displayed in the three-dimensional environment 350B. In some examples, three-dimensional environments 350A/350B are spatially aligned.

In some examples, the presentation of avatars 315/317 as part of a shared three-dimensional environment is optionally accompanied by an audio effect corresponding to a voice of the users of the electronic devices 370/360. For example, the avatar 315 displayed in the three-dimensional environment 350A using the first electronic device 360 is optionally accompanied by an audio effect corresponding to the voice of the user of the second electronic device 370. In some such examples, when the user of the second electronic device 370 speaks, the voice of the user may be detected by the second electronic device 370 (e.g., via the microphone(s) 213B) and transmitted to the first electronic device 360 (e.g., via the communication circuitry 222B/222A), such that the detected voice of the user of the second electronic device 370 may be presented as audio (e.g., using speaker(s) 216A) to the user of the first electronic device 360 in three-dimensional environment 350A. In some examples, the audio effect corresponding to the voice of the user of the second electronic device 370 may be spatialized such that it appears to the user of the first electronic device 360 to emanate from the location of avatar 315 in the shared three-dimensional environment 350A (e.g., despite being outputted from the speakers of the first electronic device 360). Similarly, the avatar 317 displayed in the three-dimensional environment 350B using the second electronic device 370 is optionally accompanied by an audio effect corresponding to the voice of the user of the first electronic device 360. In some such examples, when the user of the first electronic device 360 speaks, the voice of the user may be detected by the first electronic device 360 (e.g., via the microphone(s) 213A) and transmitted to the second electronic device 370 (e.g., via the communication circuitry 222A/222B), such that the detected voice of the user of the first electronic device 360 may be presented as audio (e.g., using speaker(s) 216B) to the user of the second electronic device 370 in three-dimensional environment 350B. In some examples, the audio effect corresponding to the voice of the user of the first electronic device 360 may be spatialized such that it appears to the user of the second electronic device 370 to emanate from the location of avatar 317 in the shared three-dimensional environment 350B (e.g., despite being outputted from the speakers of the first electronic device 360).

In some examples, while in the multi-user communication session, the avatars 315/317 are displayed in the three-dimensional environments 350A/350B with respective orientations that correspond to and/or are based on orientations of the electronic devices 360/370 (and/or the users of electronic devices 360/370) in the physical environments surrounding the electronic devices 360/370. For example, as shown in FIG. 3, in the three-dimensional environment 350A, the avatar 315 is optionally facing toward the viewpoint of the user of the first electronic device 360, and in the three-dimensional environment 350B, the avatar 317 is optionally facing toward the viewpoint of the user of the second electronic device 370. As a particular user moves the electronic device (and/or themself) in the physical environment, the viewpoint of the user changes in accordance with the movement, which may thus also change an orientation of the user's avatar in the three-dimensional environment. For example, with reference to FIG. 3, if the user of the first electronic device 360 were to look leftward in the three-dimensional environment 350A such that the first electronic device 360 is rotated (e.g., a corresponding amount) to the left (e.g., counterclockwise), the user of the second electronic device 370 would see the avatar 317 corresponding to the user of the first electronic device 360 rotate to the right (e.g., clockwise) relative to the viewpoint of the user of the second electronic device 370 in accordance with the movement of the first electronic device 360.

Additionally, in some examples, while in the multi-user communication session, a viewpoint of the three-dimensional environments 350A/350B and/or a location of the viewpoint of the three-dimensional environments 350A/350B optionally changes in accordance with movement of the electronic devices 360/370 (e.g., by the users of the electronic devices 360/370). For example, while in the communication session, if the first electronic device 360 is moved closer toward the representation of the table 306' and/or the avatar 315 (e.g., because the user of the first electronic device 360 moved forward in the physical environment surrounding the first electronic device 360), the viewpoint of the three-dimensional environment 350A would change accordingly, such that the representation of the table 306', the representation of the window 309' and the avatar 315 appear larger in the field of view. In some examples, each user may independently interact with the three-dimensional environment 3 50A/3 50B, such that changes in viewpoints of the three-dimensional environment 350A and/or interactions with virtual objects in the three-dimensional environment 350A by the first electronic device 360 optionally do not affect what is shown in the three-dimensional environment 350B at the second electronic device 370, and vice versa.

In some examples, the avatars 315/317 are representations (e.g., a full-body rendering) of the users of the electronic devices 370/360. In some examples, the avatar 315/317 is a representation of a portion (e.g., a rendering of a head, hand(s), face, head and torso, etc.) of the users of the electronic devices 370/360. In some examples, the avatars 315/317 are user-personalized, user-selected, and/or user-created representations displayed in the three-dimensional environments 350A/350B that are representative of the users of the electronic devices 370/360. It should be understood that, while the avatars 315/317 illustrated in FIG. 3 correspond to full-body representations of the users of the electronic devices 370/360, respectively, alternative avatars may be provided, such as those described above.

As mentioned above, while the first electronic device 360 and the second electronic device 370 are in the multi-user communication session, the three-dimensional environments 350A/350B may be a shared three-dimensional environment that is presented using the electronic devices 360/370. In some examples, content that is viewed by one user at one electronic device may be shared with another user at another electronic device in the multi-user communication session. In some such examples, the content may be experienced (e.g., viewed and/or interacted with) by both users (e.g., via their respective electronic devices) in the shared three-dimensional environment. For example, as shown in FIG. 3, the three-dimensional environments 350A/350B include a shared virtual object 310 (e.g., which is optionally a three-dimensional virtual sculpture) that is viewable by and interactive to both users. As shown in FIG. 3, the shared virtual object 310 may be displayed with a grabber affordance (e.g., a handlebar) 335 that is selectable to initiate movement of the shared virtual object 310 within the three-dimensional environments 350A/350B.

In some examples, the three-dimensional environments 350A/350B include unshared content that is private to one user in the multi-user communication session. For example, in FIG. 3, the first electronic device 360 is displaying a private application window 330 in the three-dimensional environment 350A, which is optionally an object that is not shared between the first electronic device 360 and the second electronic device 370 in the multi-user communication session. In some examples, the private application window 330 may be associated with a respective application that is operating on the first electronic device 360 (e.g., such as a media player application, a web browsing application, a messaging application, etc.). Because the private application window 330 is not shared with the second electronic device 370, the second electronic device 370 optionally displays a representation of the private application window 330" in three-dimensional environment 350B. As shown in FIG. 3, in some examples, the representation of the private application window 330" may be a faded, occluded, discolored, and/or translucent representation of the private application window 330 that prevents the user of the second electronic device 370 from viewing contents of the private application window 330.

As mentioned previously above, in some examples, the user of the first electronic device 360 and the user of the second electronic device 370 are in a spatial group 340 within the multi-user communication session. In some examples, the spatial group 340 may be a baseline (e.g., a first or default) spatial group within the multi-user communication session. For example, when the user of the first electronic device 360 and the user of the second electronic device 370 initially join the multi-user communication session, the user of the first electronic device 360 and the user of the second electronic device 370 are automatically (and initially, as discussed in more detail below) associated with (e.g., grouped into) the spatial group 340 within the multi-user communication session. In some examples, while the users are in the spatial group 340 as shown in FIG. 3, the user of the first electronic device 360 and the user of the second electronic device 370 have a first spatial arrangement (e.g., first spatial template) within the shared three-dimensional environment. For example, the user of the first electronic device 360 and the user of the second electronic device 370, including objects that are displayed in the shared three-dimensional environment, have spatial truth within the spatial group 340. In some examples, spatial truth requires a consistent spatial arrangement between users (or representations thereof) and virtual objects. For example, a distance between the viewpoint of the user of the first electronic device 360 and the avatar 315 corresponding to the user of the second electronic device 370 may be the same as a distance between the viewpoint of the user of the second electronic device 370 and the avatar 317 corresponding to the user of the first electronic device 360. As described herein, if the location of the viewpoint of the user of the first electronic device 360 moves, the avatar 317 corresponding to the user of the first electronic device 360 moves in the three-dimensional environment 350B in accordance with the movement of the location of the viewpoint of the user relative to the viewpoint of the user of the second electronic device 370. Additionally, if the user of the first electronic device 360 performs an interaction on the shared virtual object 310 (e.g., moves the virtual object 310 in the three-dimensional environment 350A), the second electronic device 370 alters display of the shared virtual object 310 in the three-dimensional environment 350B in accordance with the interaction (e.g., moves the virtual object 310 in the three-dimensional environment 350B).

It should be understood that, in some examples, more than two electronic devices may be communicatively linked in a multi-user communication session. For example, in a situation in which three electronic devices are communicatively linked in a multi-user communication session, a first electronic device would display two avatars, rather than just one avatar, corresponding to the users of the other two electronic devices. It should therefore be understood that the various processes and exemplary interactions described herein with reference to the first electronic device 360 and the second electronic device 370 in the multi-user communication session optionally apply to situations in which more than two electronic devices are communicatively linked in a multi-user communication session.

In some examples, it may be advantageous to provide mechanisms for facilitating a multi-user communication session that includes collocated and non-collocated users (e.g., collocated and non-collocated electronic devices associated with the users). For example, it may be desirable to enable users who are collocated in a first physical environment to establish a multi-user communication session with one or more users who are non-collocated in the first physical environment, such that virtual content may be shared and presented in a three-dimensional environment that is optionally viewable by and/or interactive to the collocated and non-collocated users in the multi-user communication session. As used herein, relative to a first electronic device, a collocated user corresponds to a local user and a non-collocated user corresponds to a remote user. As similarly discussed above, the three-dimensional environment optionally includes avatars corresponding to the remote users of the electronic devices that are non-collocated in the multi-user communication session. In some examples, the presentation of virtual objects (e.g., avatars and shared virtual content) in the three-dimensional environment within a multi-user communication session that includes collocated and non-collocated users (e.g., relative to a first electronic device) is based on positions and/or orientations of the collocated users in a physical environment of the first electronic device. It should be noted that, when a first user in a multi-user communication session is a remote user relative to a second user in the multi-user communication session, the second user is a remote user relative to the first user, and when the first user is a collocated user relative to the second user, the second user is a collocated user relative to the first user.

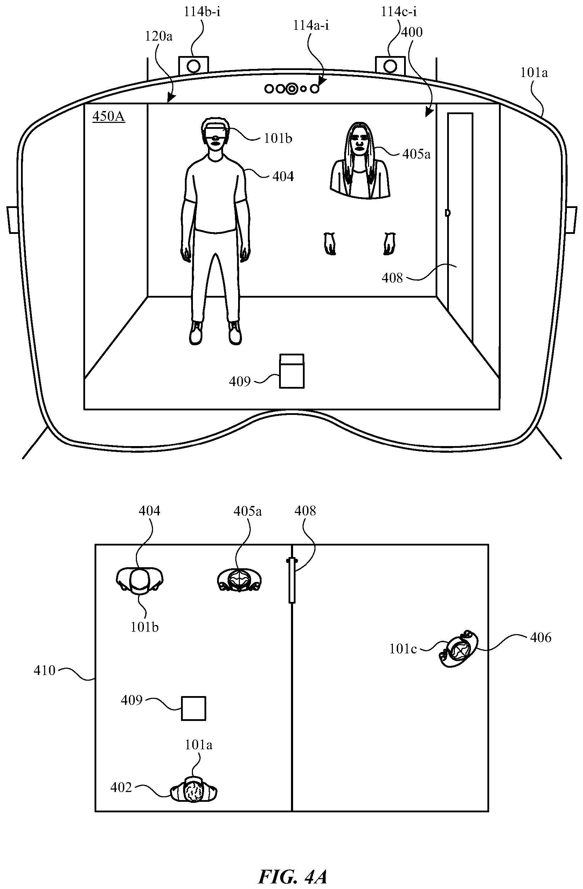

FIGs. 4A-4H generally illustrate examples of changing a mode of visual representation of a user in a multi-user communication session in response to detecting that the user changes from being a remote user in the multi-user communication session to a collocated user in the multi-user communication session or in response to detecting that the user changes from being a collocated user in the multi-user communication session to being a non-collocated user in the multi-user communication session according to some examples of the disclosure.

In FIGs. 4A-4H, the multi-user communication session includes users 402, 404, and 406, each of whom are in the multi-user communication session via their respective electronic devices 101a/101b/101c. In some examples, while electronic device 101a is in the multi-user communication session with electronic device 101b and electronic device 101c, a first three-dimensional environment (e.g., three-dimensional environment 450A) is presented using electronic device 101a (e.g., via display 120a), a second three-dimensional environment is presented using the electronic device 101b (e.g., via a display in communication with electronic device 101b), and a third three-dimensional environment is presented using electronic device 101c (e.g., via a display in communication with electronic device 101c). In some examples, electronic devices 101a/101b optionally correspond to or are similar to electronic devices 360/370 discussed above and/or electronic devices 260/270 in FIG. 2. In addition, electronic device 101c optionally includes one or more or characteristics of electronic devices 360/370 discussed above and/or electronic devices 260/270 in FIG. 3. In some examples, as shown in FIG. 4A, electronic device 101a is being used by (e.g., worn on a head of) a first user 402, electronic device 101b is being used by (e.g., worn on a head of) a second user 404, and electronic device 101c is being used by (e.g., worn on a head of) a third user 406.

In FIG. 4A, top-down view 410 shows users 402/404 (e.g., with their electronic devices 101a/101b) in a first room and shows user 406 (e.g., with electronic device 101c) in a different room. Top-down view 410 also shows physical door 408 in between the first room in which users 402/404 (e.g., with their electronic devices 101a/101b) are collocated and the second room in which user 406 (e.g., with electronic device 101c) is present. The first room optionally corresponding to a first physical environment (e.g., physical environment 400) and the second room optionally corresponding to a second physical environment, different from the first physical environment.

In FIG. 4A, electronic device 101a and electronic device 101b are collocated in physical environment 400 (e.g., share a visual space of physical environment 400). For example, electronic devices 101a/101b are both located in the same room that is on a first side of physical door 408. In FIG. 4A, electronic devices 101a/101b optionally share a visual space of the physical environment 400, optionally in addition to sharing an audio space of the physical environment 400. For example, in FIG. 4A, electronic device 101a presents, via display 120a, user 404 and electronic device 101b optionally because electronic device 101a is facing user 404 and electronic device 101b (e.g., user 404 and electronic device 101b are in a field of view of the electronic device 101a). In some examples, the presentation of user 404 and electronic device 101b via the electronic device 101a is an optical passthrough presentation (or another type of passthrough presentation). For example, one or more portions of display 120a is optionally at least partially transparent such that one or more objects in physical environment 400 that are in a field of view of the electronic device 101a are visible via the one or more (e.g., transparent or translucent) portions of display 120a. As another example, when the presentation of user 404 and electronic device 101b is a video passthrough presentation, electronic device 101a optionally captures, via one or more cameras in communication with electronic device 101a, one or more portions of the physical environment and displays images of the captured portions via display 120a, including the portions of the physical environment where user 404 and electronic device 101b are located.

As described above with reference to FIG. 3, while electronic devices are communicatively linked in a multi-user communication session, users may be represented by avatars corresponding to the users of the electronic devices. In FIG. 4A, because electronic device 101a and electronic device 101b are collocated in the physical environment 400, the users of the electronic devices 101a and 101b are represented in the multi-user communication session via their physical personas (e.g., bodies) that are visible in passthrough of the physical environment 400 (e.g., rather than via virtual avatars). For example, as shown in FIG. 4A, the second user 404 is visible in the field of view of electronic device 101a (and the first user 402 would optionally be visible in the field of view of electronic device 101b while electronic device 101a and electronic device 101b are in the multi-user communication session).

In FIG. 4A, electronic device 101a displays, via display 120a, a spatial avatar 405a corresponding to user 406 (e.g., a three-dimensional representation of a visual appearance of user 406), who is in the multi-user communication session via electronic device 101c. Relative to user 402 and user 404 (e.g., relative to electronic devices 101a/101b), user 406 is a remote user in the multi-user communication session. In other words, electronic device 101c is optionally not collocated with electronic devices 101a/101b. Spatial avatar 405a of user 406 in the multi-user communication session in FIG. 4A optionally includes one or more features of avatar 315 in FIG. 3 and is optionally accompanied by an audio effect corresponding to a voice of the user 406, such as discussed with reference to avatar 315 in FIG. 3. As such, in some examples, a non-collocated user in a multi-user communication session is displayed as a virtual three-dimensional object.

The multi-user communication session in FIG. 4A also includes shared content 409 that is visible and/or interactable between users of the multi-user communication session from their respective three-dimensional environments. For example, electronic devices 101a/101b/101c optionally present shared content 409 (e.g., a virtual cube). In some examples, the multi-user communication session of FIG. 4A is initiated in response to an input from one of users 402-406 to share content 409 with the other users 402-406. Shared content 409 is representative of visual content, such as presentation, a movie, and/or audio. Shared content 409 optionally includes one or more features described with reference to shared virtual object 310 in FIG. 3.

FIGs. 4A to 4B illustrate an example of electronic device 101a maintaining a location of display of spatial avatar 405a of user 406 of electronic device 101c in response to movement of user 406 that does not result in the user 406 being collocated with users 402/404. In the illustrated example of FIGs. 4A-4B, though the location of user 406 in the respective physical environment of user 406 changes, the location of display of spatial avatar 405a corresponding to a visual appearance of user 406 displayed by electronic device 101a is maintained. It should be noted that alternatively, in some examples the location of display of spatial avatar 405a changes in response to movement of user 406 in the physical environment of user 406. For example, if a movement of user 406 results in user 406 being closer to a visual appearance of user 402 being displayed by electronic device 101c, a corresponding change in a distance between the avatar 405a of the user 406 and the user 402 is optionally displayed via electronic device 101a, 101b, and/or 101c, as similarly described above with reference to FIG. 3. As such, the visual appearance of remote users optionally includes one or more characteristics of those described above with reference to avatar 315 in FIG. 3.

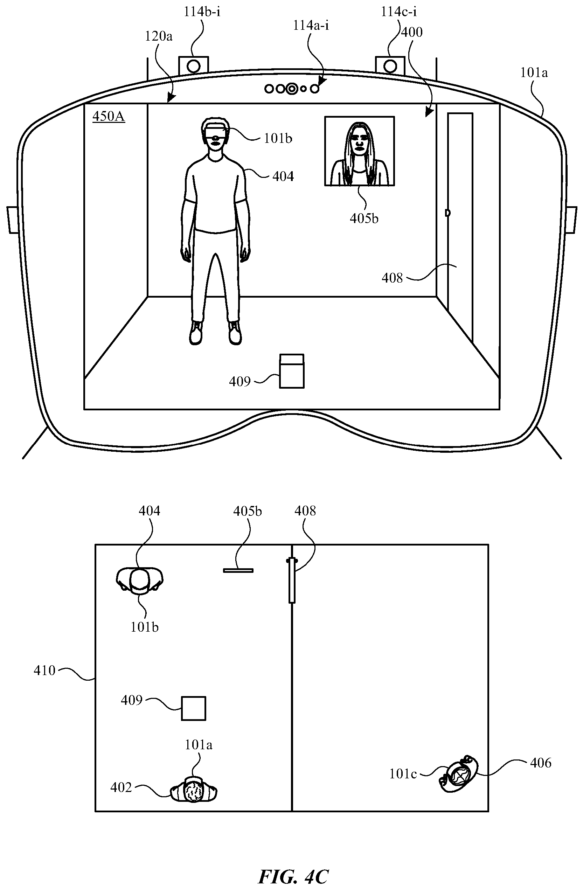

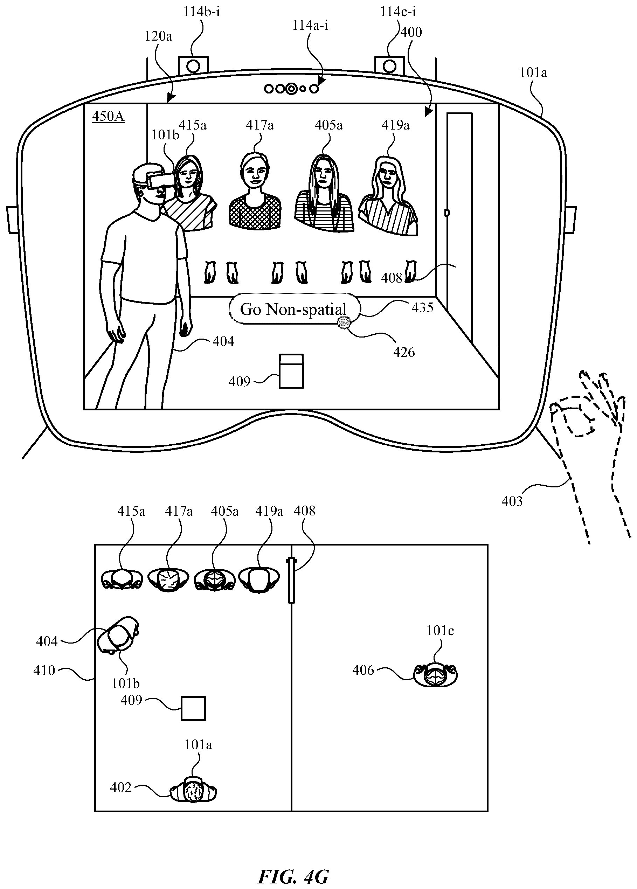

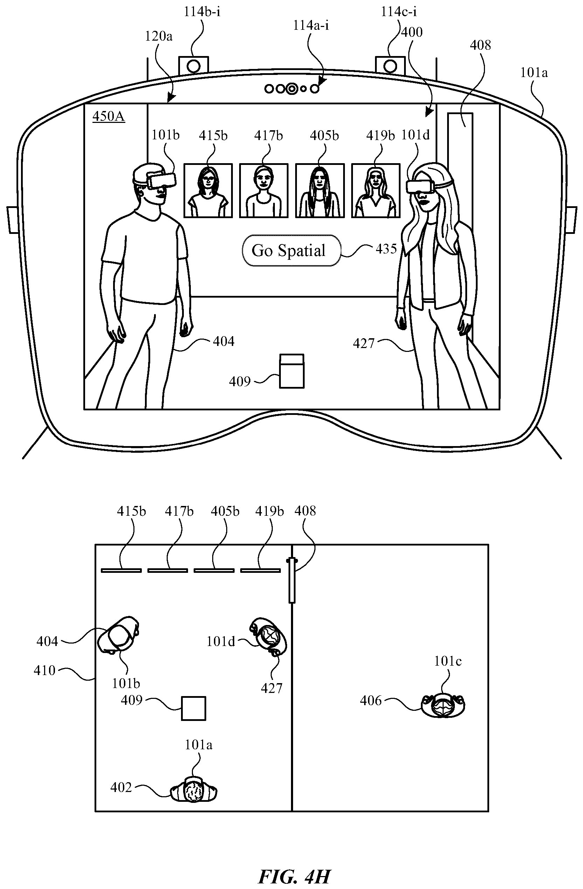

FIG. 4C illustrates an example of electronic device 101a displaying a representation 405b (e.g., a two-dimensional representation) of remote user 406 instead of spatial avatar 405a of remote user 406. In some examples, representation 405b includes live camera feed from an image capturing device in communication with electronic device 101c. As shown in top-down view 410 in FIGs. 4A to 4C, the representation 405b of user 406 of electronic device 101c optionally consumes less space (e.g., less surface area or volume) than spatial avatar 405a of user 406 of electronic device 101c in the environment (e.g., the extended reality environment) visible via display 120a. As such, in some examples, a non-collocated user in the multi-user communication session is displayed as a virtual two-dimensional object. In some examples, the non-collocated user in the multi-user communication session is displayed as a virtual two-dimensional object in response to input provided by the user 406 designating to be represented in the multi-user communication session in that way. For example, the user 406 of the electronic device 101c optionally has selected an option (e.g., displayed at electronic device 101c) for being represented non-spatially and without an avatar instead of spatially with an avatar. In some examples, electronic device 101a transitions between displaying representation 405b of user 406 of electronic device 101c and spatial avatar 405a of user 406 of electronic device 101c, such as described further later with reference to FIGs. 4G and 4H.

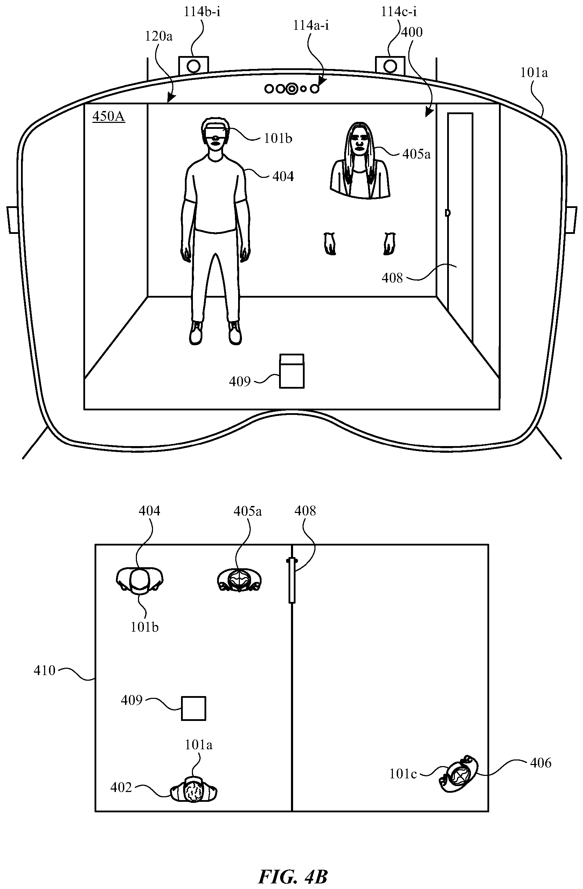

In some examples, the electronic device 101a detects that electronic device 101c is collocated with electronic device 101a. For example, while displaying, via display 120a, spatial avatar 405a or representation 405b of user 406 of electronic device 101c, the electronic device 101a detects an event corresponding to collocation of electronic devices 101a/101c. For example, electronic device 101a optionally detects that electronic device 101c shares a visual and/or audio space of the physical environment 400 with electronic device 101a. In response, electronic device 101a ceases display of spatial avatar 405a of user 406 of electronic device 101c, such as shown from FIG. 4B to 4D.

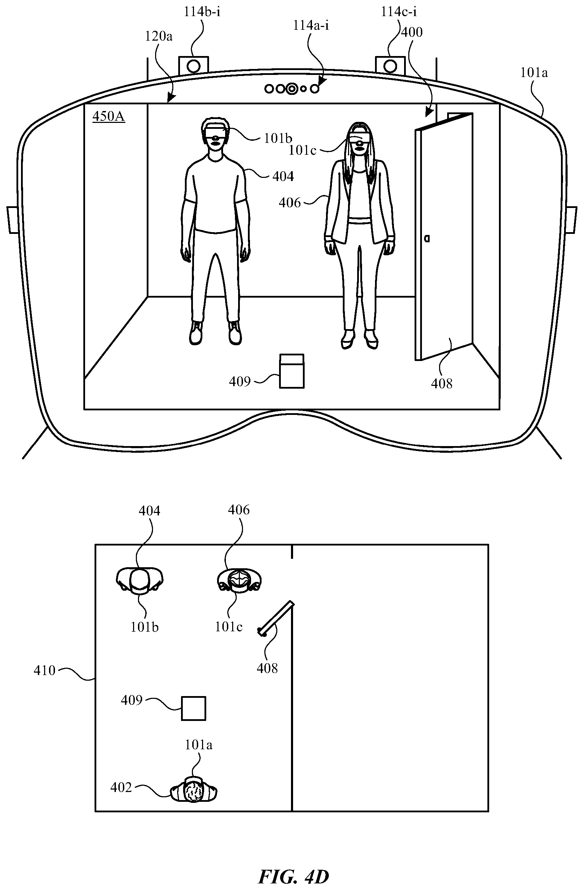

From FIG. 4B to 4D (e.g., or from FIG. 4C to 4D), electronic device 101c has entered the physical environment 400. For example, user 406 of electronic device 101c has walked through physical door 408. In some examples, in response to determining that user 406 is in physical environment 400, which is the same environment of user 402, electronic device 101a determines that electronic device 101c is collocated with electronic device 101a (e.g., shares a visual space of physical environment 400), and presents, via display 120a, user 406 of electronic device 101c, such as via optical passthrough, such as shown with the presentation of user 406 via display 120a in FIG. 4D.

In some examples, the determination that electronic device 101a and electronic device 101c are collocated in the physical environment 400 is based on a distance between electronic device 101a and electronic device 101c. For example, in FIG. 4D, electronic device 101a and electronic device 101c are collocated in the physical environment 400 because electronic device 101a is within a threshold distance (e.g., 0.1, 0.5, 1, 2, 3, 5, 10, 15, 20, etc. meters) of electronic device 101c.

In some examples, the determination that electronic device 101a and electronic device 101c are collocated in the physical environment 400 is based on communication between electronic device 101a and electronic device 101c. For example, in FIG. 4D, electronic device 101a and electronic device 101c are configured to communicate (e.g., wirelessly, such as via Bluetooth, Wi-Fi, or a server (e.g., wireless communications terminal)). In some examples, electronic device 101a and electronic device 101c are connected to a same wireless network in the physical environment 400, and the collocation is optionally based on the electronic devices 101a/101c being connected to the same network (e.g., the same wireless network, such as block 430a of FIG. 40), such that if the electronic devices 101a/101c are collocated in the physical environment 400, the electronic devices 101a/101c are optionally connected to the same wireless network, and if the electronic devices 101a/101c are not collocated in the multi-user communication session, the electronic devices 101a/101c are not connected to the same wireless network.

In some examples, the determination that electronic device 101a and electronic device 101c are collocated in the physical environment 400 is based on a strength of a wireless signal transmitted between the electronic device 101a and 101c. For example, in FIG. 4D, electronic device 101a and electronic device 101c are collocated in the physical environment 400 because a strength of a Bluetooth signal (or other wireless signal) transmitted between the electronic devices 101a and 101c is greater than a threshold strength.

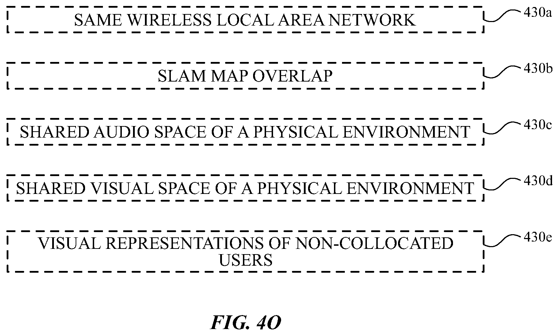

In some examples, the determination that electronic device 101a and electronic device 101c are collocated in the physical environment 400 is based on visual detection of the electronic devices 101a and 101b in the physical environment 400 (e.g., block 430d of FIG. 4O). For example, as shown in FIG. 4D, electronic device 101c is positioned in a field of view of electronic device 101a (e.g., because the third user 406 is standing in the field of view of electronic device 101a similar to how the second user 404 is in the field of view of electronic device 101a), which enables electronic device 101a to visually detect (e.g., identify or scan, such as via object detection or other image processing techniques) electronic device 101c (e.g., in one or more images captured by electronic device 101a, such as via external image sensors 114b-i and 114c-i). Similarly, as shown in FIG. 4D, electronic device 101a is optionally positioned in a field of view of electronic device 101c (e.g., because the first user 402 is in the field of view of electronic device 101c), which enables electronic device 101c to visually detect electronic device 101a (e.g., in one or more images captured by electronic device 101c, such as via external image sensors that are in communication with electronic device 101c (e.g., external image sensors having one or more characteristics of external image sensors 114b-i and 114c-i, but being in communication with electronic device 101c instead of electronic device 101a).

In some examples, the determination that electronic device 101a and electronic device 101c are collocated in the physical environment 400 is based on overlap of Simultaneous Localization and Mapping (SLAM) data (e.g., block 430b of FIG. 4O) exchanged between electronic device 101a and electronic device 101c (e.g., SLAM data individually stored on the electronic devices 101a and 101c or SLAM data stored on one of the electronic devices 101a and 101b). For example, electronic device 101a and electronic device 101c optionally utilize the SLAM data to facilitate shared understanding of one or more physical properties of the physical environment 400, such as dimensions of the physical environment, physical objects within the physical environment, a visual appearance (e.g., color and lighting characteristics) of the physical environment, etc. In some examples, electronic device 101a and electronic device 101c are each configured to analyze the physical environment 400 to determine a common reference point (e.g., a shared reference point or object) in the physical environment 400 based on one or more characteristics of the other electronic device as perceived by the electronic devices individually. For example, based on one or more images captured via the external image sensors 114b-i and 114c-i, electronic device 101a analyzes a position of electronic device 101c in the physical environment relative to the viewpoint of electronic device 101a and, based on one or more images captured via the external image sensors in communication with electronic device 101c, electronic device 101c analyzes a position of electronic device 101a in the physical environment 400 relative to the viewpoint of the user 406 to establish spatial truth. In some examples, electronic device 101a detects the overlap of SLAM maps between the first and third electronic devices 101a/101c, and/or electronic device 101c detects the overlap of SLAM maps between the first and third electronic devices 101a/101c.

In some examples, the determination that electronic device 101a and electronic device 101c are collocated in the physical environment 400 is based on a determination that electronic devices 101a/101c share an audio space of a physical environment. For example, electronic devices 101a/101c optionally share an audio space of a physical environment when audio data detected by one or more first microphones in communication with electronic device 101a is also detected by one or more second microphones in communication with electronic device 101c. As another example, electronic devices 101a/101c optionally emit specific sounds, such as a specific sound that is not detectable by a human ear, and in response to a respective electronic device (e.g., of electronic devices 101a/101c) detecting the sound emitted by speakers(s) in communication with the other electronic device, it is determined that the electronic devices 101a/101c are collocated.

In some examples, the electronic devices 101a and 101b were determined to be collocated similarly as described above with reference to FIG. 4D and the determination of the collocation of electronic device 101a with electronic device 101c.

FIG. 4O is a block diagram showing various features of a multi-user communication session from the perspective of collocated electronic devices, in accordance with some examples. In some examples, these collocated electronic devices in the multi-user communication session are connected to the same network (at block 430a), such as the same wireless local area network, Wi-Fi, etc., such as described above. In some examples, these collocated electronic devices in the multi-user communication session have overlap in respective SLAM maps associated with the collocated electronic devices (at block 430b), such as described above. In some examples, these collocated electronic devices in the multi-user communication session share an audio space of a physical environment of the electronic devices (at block 430c), such as described above. In some examples, these collocated electronic devices in the multi-user communication session share a visual space of a physical environment of the electronic devices (at block 430d), such as described above with reference to visual detection of the physical environment (e.g., objects and/or walls, and/or other physical space identifying characteristics in the physical environment). In some examples, these collocated electronic devices in the multi-user communication session present, via optical passthrough, representations of the users of the collocated electronic devices (at block 430e), such as described above.

Returning to FIG. 4D, in some examples, in response to determining that user 406 (e.g., electronic device 101c) is in physical environment 400, which is the same environment of user 402, during the multi-user communication session, electronic device 101a determines that electronic device 101c is collocated with electronic device 101a (e.g., shares a visual space of physical environment 400), and ceases display of spatial avatar 405a and presents, via display 120a, user 406, such as via optical passthrough, such as shown with the presentation of user 406 of electronic device 101c via display 120a in FIG. 4D. Thus, in response to electronic device 101a detecting that electronic device 101c is collocated with electronic device 101a, electronic device 101a changes the visual appearance of user 406 in the three-dimensional environment that is visible via display 120a of electronic device 101a. **In** some examples, electronic device 101a utilizes less computational resources in presenting user 406 when the user 406 is collocated compared to when the user 406 is remote. For example, when the user 406 is remote, electronic device 101a displays a virtual representation (e.g., spatial avatar 405a or representation 405b) of user 406 and when the user 406 is collocated (e.g., shares a visual space of physical environment 400 with electronic device 101a), electronic device 101a ceases display of the virtual representation of user 406 (e.g., spatial avatar 405a or representation 405b) and optionally presents the user 406 via optical passthrough, which is optionally less resource-intensive. As such, in some examples, electronic device 101a changes an appearance of a user 406 in a three-dimensional environment visible via display 120a in response to the electronic device 101c transitioning from being remote to collocated in the physical environment 400 while in the multi-user communication session. In some examples, if the user 406 of electronic device is not in a field of view of electronic device 101a when the user 406 of electronic device 101c enters the physical environment 400, electronic device 101a maintains presentation of the spatial avatar 405a or representation 405b of user 406 of electronic device 101c, and then if the user 406 of electronic device 101c is within (e.g., comes within) the field of view of electronic device 101a, such as via movement of user 406 of electronic device 101c to a position that is within the field of view of electronic device 101a or via movement of user 402 of electronic device 101a (e.g., head rotation of user 402 that changes that which is within the field of view of the electronic device 101a) that causes user 406 of electronic device 101c to be within the field of view of electronic device 101a, electronic device 101a ceases display of the spatial avatar 405a or representation 405b of user 406 of electronic device 101c and presents the user 406 via optical passthrough as the user is within the field of view of the electronic device 101a. As such, in some examples, the determination that electronic device 101a and electronic device 101c are collocated is further based on user 406 of electronic device 101c being within the field of view of electronic device 101a. In some examples, when it is determined that electronic devices 101a/101c are collocated, even if electronic device 101c ceases being in the field of view of electronic device 101a, electronic device 101a maintains enablement of optical passthrough for user 406 of electronic device 101c, and would optionally not present spatial avatar 405a or representation 405b of user 406 until it is determined that electronic devices 101a/101c are no longer collocated. Thus, in some examples, after determining that two electronic devices are collocated, a determination that the electronic devices are no longer collocated includes additional criteria (e.g., ceasing of SLAM map overlap, and/or another criterion), beyond a determination that one of the two electronic devices are not within a field of view of the other electronic device. Alternatively, in some examples, after determining that two electronic devices are collocated, a determination that the electronic devices are no longer collocated does not include additional criteria beyond a determination that one of the two electronic devices are not within a field of view of the other electronic device.

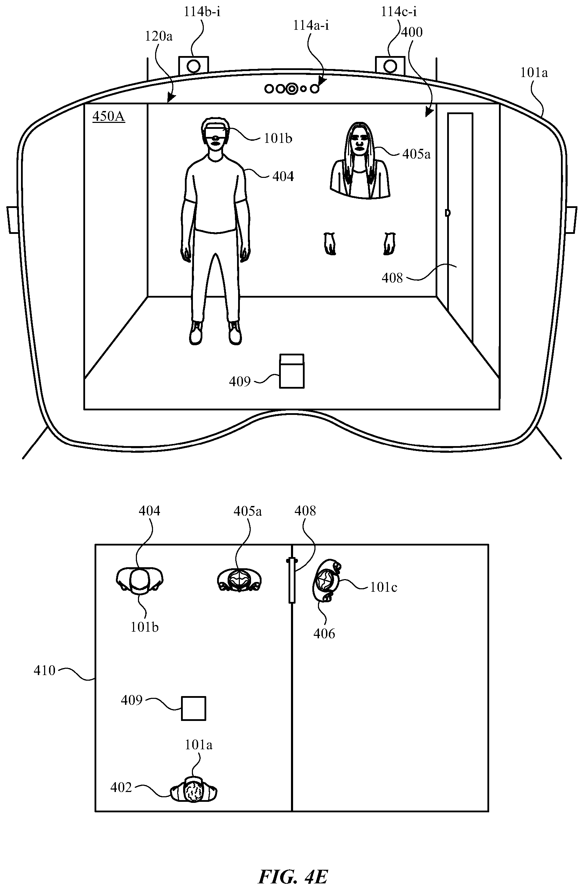

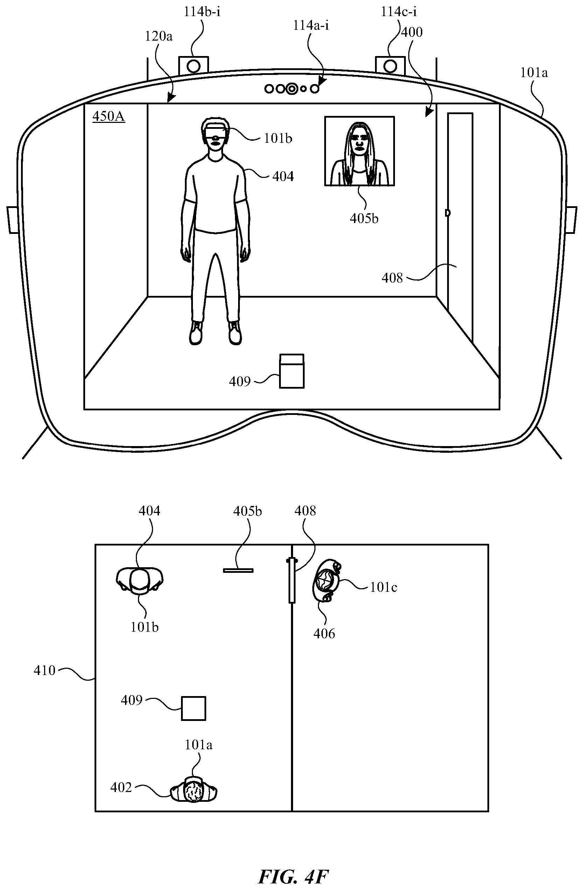

From FIG. 4D to 4E, the user 406 (and electronic device 101c) leaves the physical environment 400, while the user 402 (and electronic device 101a) stays in the physical environment 400 and while remaining in the multi-user communication session (that is between users 402-406 (via electronic devices 101a-101c)). Thus, in FIG. 4E, electronic device 101a and electronic device 101c no longer share visual space of physical environment 400, as the electronic device 101c is on the opposite side of the physical door 408 (e.g., an opaque door), which is illustrated as closed in FIG. 4E. Electronic device 101a optionally determines that electronic device 101c is no longer collocated with the electronic device 101c while still in the multi-user communication session with electronic device 101c. In response, electronic device 101a initiates display, via display 120a, a virtual representation of user 406, such as shown with the spatial avatar 405a in FIG. 4E or alternatively, the representation 405b as shown in FIG. 4F. Thus, in some examples, electronic device 101a optionally transitions between presenting a passthrough representation of a collocated user and displaying a representation of a remote user in response to detecting that the user is no longer collocated in the physical environment 400 with electronic device 101a while in the multi-user communication session. As such, in some examples, electronic device 101a changes a visual appearance of a user in a multi-user communication session with the electronic device 101a in response to detecting that the user transitions from being a collocated user within the multi-user communication session to being a remote user within the multi-user communication session.

FIGs. 4G and 4H illustrate an example of electronic device 101a transitioning a mode of display of representations of users who are non-collocated (e.g., whose electronic devices do not share a visual space of physical environment 400) with the electronic device 101a in the multi-user communication session. In FIG. 4G, remote users who are non-collocated (e.g., do not share a visual space of physical environment) with the electronic device 101a in the multi-user communication session are represented by electronic device 101a as spatial avatars. For example, in FIG. 4G, electronic device 101a displays spatial avatars 415a, 417a, and 419a, each of which correspond to a different remote user who is not collocated with electronic device 101a in physical environment 400. In addition, in FIG. 4G, electronic device 101a displays spatial avatar 405a which corresponds to user 406 who is not collocated with electronic device 101a in physical environment 400. It should be noted that the different users, of the different electronic devices, which correspond to spatial avatars 415a, 417a, and 419a may or may not be collocated with each other. That is, that the electronic devices are non-collocated with electronic device 101a (e.g., are not in physical environment 400) is optionally independent of whether the electronic devices are collocated with each other.

From FIG. 4G to 4H, user 427 of electronic device 101d joins the multi-user communication session while being collocated with electronic device 101a. For example, the user 406 has walked through physical door 408 and into the physical environment 400 of the user 402, and the user 427 initially joins the multi-user communication session while being collocated with user 402 of electronic device 101a. In response to detecting that an additional collocated user (e.g., user 427 of electronic device 101d) is in the multi-user communication session, the electronic device 101a optionally transitions display of the representations of the remote users from spatial avatars 405a, 415a, 417a, and 419a to two-dimensional representations 405b, 415b, 417b, and 419b similar as described with representation 405b of user 406 in FIG. 4C. In this way, the electronic device 101a conserves space in the three-dimensional environment visible via the display 120a, thereby accommodating the presentation of user 427 of electronic device 101d (e.g., as the passthrough representation of user 427 of electronic device 101d now takes up space in the three-dimensional environment of the user 402 visible via the display 120a). In addition, in order to maintain display of all of the remote users (e.g., user who are not collocated with electronic device 101a), electronic device 101a optionally rearranges the display of the representations 405b, 415b, 417b, and 419b of the non-collocated users in order to accommodate the optical passthrough presentation of the user 427 of electronic device 101d (e.g., to fully present their persona based on their position in the field of view of electronic device 101a), as shown in FIG. 4G. Thus, in some examples, electronic device 101a transitions display of the non-collocated users in the multi-user communication session from being represented as spatial avatars to being represented as two dimensional objects in response to a threshold number of collocated users (e.g., 3, 5, 8, 10, 16, 20, or another number of collocated users) being present in the physical environment of the user of electronic device 101a. Additionally or alternatively, in some examples, electronic device 101a transitions display of the remote users in the multi-user communication session from being represented being represented as two dimensional objects to being represented as spatial avatars in response to fewer than the threshold number of collocated users in the multi-user communication session being present in the physical environment 400 of the user 402 of electronic device 101a. Thus, the determination of how to display a non-collocated user (e.g., remote user relative to electronic device 101a) in a multi-user communication session is optionally based on a number of collocated users in the multi-user communication session with electronic device 101a. Further, displaying the non-collocated users as two-dimensional representations conserves computing resources at electronic device 101a (e.g., as the display of the two-dimensional representations is less power-consuming than the display of the three-dimensional (e.g., spatial) avatars above).

Additionally or alternatively, in some examples, electronic device 101a transitions the mode of display of the representations of users who are non-collocated (e.g., whose electronic devices do not share a visual space of physical environment 400) with the electronic device 101a in the multi-user communication session in response to detecting a change in a spatial state of the users in the multi-user communication session who are collocated in the physical environment 400. In some examples, changing the spatial state of the users in the multi-user communication session who are collocated in the physical environment 400 includes interaction with a selectable option for controlling the spatial state of the users who are collocated in the multi-user communication session (e.g., the local users in the physical environment 400). For example, as shown in FIG. 4G, electronic device 101a is displaying selectable option 435 in the three-dimensional environment 450A concurrently with the spatial avatars 415a, 417a, 405a, and 419a. In some examples, the selectable option 435 is selectable to transition the spatial state of the user 402 of the electronic device 101a and the user 404 of the electronic device 101b in the multi-user communication session (e.g., because the user 402 and the user 404 are collocated in the physical environment 400 as discussed above). For example, in FIG. 4G, electronic device 101a detects a selection provided by the user 402 directed to the selectable option 435 in the three-dimensional environment 450A, such as via an air pinch gesture performed by hand 403 of the user 402, optionally while gaze 426 of the user 402 is directed toward the selectable option 435 in the three-dimensional environment 450A. In some examples, when the electronic device 101a detects the selection of the selectable option 435, the user 402 and the user 404 are spatial within the multi-user communication session (e.g., the spatial state is "Spatial"), such that the electronic device 101a and the electronic device 101b are experiencing spatial truth with the remote users (e.g., the users in the multi-user communication session who are non-collocated with the users 402 and 404 and are being represented by representations 405a, 415a, 417a, and 419a in FIG. 4G) in the three-dimensional environment 450A as discussed herein.

In some examples, as shown in FIG. 4H, in response to detecting the selection of the selectable option 435, electronic device 101a transitions the spatial state of the collocated users (e.g., user 402 and user 404 in the physical environment 400) in the multi-user communication session from being spatial within the multi-user communication session to being non-spatial within the multi-user communication session (e.g., from the spatial state of "Spatial" to the spatial state of "Non-Spatial"). Particularly, in some examples, when the user 402 of the electronic device 101a and the user 404 of the electronic device 101b transition to participating as non-spatial within the multi-user communication session, the electronic device 101a and the electronic device 101b no longer experience spatial truth with the remote users in the multi-user communication session, which causes the electronic device 101a (e.g., and the electronic device 101b) to transition the display of the representations of the remote users from spatial avatars 405a, 415a, 417a, and 419a in FIG. 4G to two-dimensional representations 405b, 415b, 417b, and 419b in FIG. 4H, as similarly described above (optionally independent of the user 427 joining the multi-user communication session while being collocated with user 402 of electronic device 101a). For example, as illustrated in FIG. 4H, because the local users (e.g., the users 402, 404 and/or 427) in the physical environment 400 are no longer experiencing spatial truth with the remote users in the multi-user communication session, the selection of the selectable option 435 (e.g., concurrently) causes each of the remote users to no longer be represented spatially as avatars 405a, 415a, 417a, and 419a and to instead be represented non-spatially as the two-dimensional representations 405b, 415b, 417b, and 419b in the three-dimensional environment 450A. In some examples, when the spatial state of the local users in the multi-user communication session (e.g., the users 402, 404, and/or 427) is transitioned to non-spatial in FIG. 4H, because the local users remain collocated in the physical environment 400, the local users continue to experience spatial truth with each other (e.g., via their respective electronic devices), despite no longer experiencing spatial truth with the remote users in the multi-user communication session. Accordingly, in some examples, when the display of the representations of the remote users is transitioned from the spatial avatars to the two-dimensional representations at electronic device 101a in the manner discussed above, the electronic devices 101b and/or 101d similarly transition the display of the representations of the remote users to two-dimensional representations in their respective three-dimensional environments. For example, because the users 404 and 427 and their respective electronic devices 101b and 101d are still collocated with the user 402 of electronic device 101a in the physical environment 400, and thus continue to experience spatial truth with the user 402 in the three-dimensional environment 450A, the transitioning of the display of the representations of the remote users at the electronic device 101a is maintained across the collocated electronic devices in the multi-user communication session, such that the manner in which the representations of the remote users is displayed remains consistent across the collocated electronic devices (e.g., thereby preserving spatial truth within the multi-user communication session for the collocated users). Transitioning the display of the representations of the remote users in the manner discussed above when the spatial state of the local users within the multi-user communication session is changed to non-spatial maintains a consistent experience for the users within the multi-user communication session, including maintaining consistency of representation of the remote users for the local users within the multi-user communication session, thereby improving user-device interaction.

In some examples, as shown in FIG. 4H, after transitioning the spatial state of the collocated users in the physical environment 400, and thus after transitioning the display of the representations of the remote users from the spatial avatars 405a, 415a, 417a and 419a to the two-dimensional representations 405b, 415b, 417b and 419b, electronic device 101a updates the selectable option 435 to be selectable to control the display mode of the representations of the remote users in the multi-user communication session. For example, as indicated in FIG. 4H, the selectable option 435 is updated to be selectable to transition the spatial state of the collocated users (e.g., users 402, 404 and/or 427) in the physical environment 400 from non-spatial back to spatial (e.g., and thus transition the display of the representations of the remote users from the two-dimensional representations 405b, 415b, 417b and 419b back to the spatial avatars 405a, 415a, 417a and 419a), which would cause the collocated users to once again experience spatial truth with the remote users in the multi-user communication session.

In some examples, the selectable option 435 is available to (e.g., is displayed for and/or is selectable by) each of the users who are collocated in the physical environment 400. For example, in FIG. 4G, while electronic device 101a is displaying the selectable option 435 in the three-dimensional environment 450A, electronic device 101b (e.g., associated with user 404) is also and/or similarly displaying the selectable option 435 (e.g., in a three-dimensional environment presented at electronic device 101b). In some such examples, a selection of the selectable option 435 detected by electronic device 101b (e.g., provided by user 404, such as via an air pinch gesture as similarly discussed above) similarly causes the spatial state of the collocated users in the physical environment 400 to be transitioned from spatial to non-spatial within the multi-user communication session (e.g., and thus causes the display of the representations of the remote users to be transitioned from the spatial avatars to the two-dimensional representations at the electronic device 101a). Similarly, in FIG. 4H, while the user 427 of electronic device 101d is collocated with the user 402 of the electronic device 101a and the user 404 of the electronic device 101b in the physical environment 400 while in the multi-user communication session, the electronic device 101d is also and/or similarly displaying the selectable option 435 (e.g., in a three-dimensional environment presented at electronic device 101d).

In some examples, whereas the selectable option 435 is selectable by each of the users who are collocated in the physical environment 400 to change the spatial state of the collocated users within the multi-user communication session, the same selectable option (e.g., in function and/or utilization) is optionally not selectable by the remote users (e.g., users who are non-collocated with the user 402 of the electronic device 101a in the physical environment 400) to change the spatial state of the remote users within the multi-user communication session. For example, for a respective remote user, such as the user associated with spatial avatar 415a in FIG. 4G and two-dimensional representation 415b in FIG. 4H, the display of the selectable option 435 (or similar option/user interface element) is specific to the respective user at their respective electronic device. Particularly, because the remote user associated with the spatial avatar 415a in FIG. 4G and the two-dimensional representation 415b in FIG. 4H is non-collocated with the user 402 of the electronic device 101a in the physical environment 400 (and/or optionally with any other users in the multi-user communication session), a selectable option similar to the selectable option 435 that is displayed by the respective electronic device associated with the remote user is selectable to control the display mode (e.g., and thus the spatiality) of their representation individually, without affecting the display modes of the representations of the other remote users (e.g., without affecting the spatial state of the other remote users) in the multi-user communication session. Accordingly, for example, with reference to FIG. 4G, while the spatial state of the collocated users (e.g., the user 402 of the electronic device 101a and the user 404 of the electronic device 101b) is spatial within the multi-user communication session, if the electronic device associated with remote user represented by the spatial avatar 415a detects an input for controlling the display mode of the remote user (e.g., such as an input directed to a selectable option that is similar to the selectable option 435), the spatial avatar 415a would be transitioned to being redisplayed as the two-dimensional representation 415b in the three-dimensional environment 450A, without changing the display modes (e.g., without transitioning the spatial states) of the other representations of the remote users (e.g., without causing the electronic device 101a to transition the display of the two-dimensional representations 417b, 405b, and 419b back to spatial avatars).

It should be understood that, while the collocated users (e.g., the users 402, 404 and/or 427) in the physical environment 400 are non-spatial within the multi-user communication session in FIG. 4H, the display of the selectable option 435 (or similar option/user interface element) is optionally not provided to the remote users within the multi-user communication session. For example, a respective remote user is unable to individually transition to being spatial in the multi-user communication session with the local users in the physical environment 400 in the manner discussed above because the local users are currently non-spatial within the multi-user communication session (e.g., and is thus causing the representations of the remote users to remain displayed as two-dimensional representations within the multi-user communication session). Alternatively, in some examples, while the collocated users (e.g., the users 402, 404 and/or 427) in the physical environment 400 are non-spatial within the multi-user communication session in FIG. 4H, the display of the selectable option 435 (or similar option/user interface element) is provided for the remote users within the multi-user communication session, but is specific to controlling spatiality with one or more of the other remote users within the multi-user communication session. For example, a respective remote user is able to individually control their spatial state (e.g., spatial or non-spatial) via a selection of the selectable option 435 (or similar option/user interface element) relative to the other remote users within the multi-user communication session, such that, if the respective remote user is spatial with the other remote users within the multi-user communication session (e.g., despite the local users in the physical environment 400 being non-spatial with the remote users within the multi-user communication session), the respective remote user is visually represented spatially (e.g., via a spatial avatar) to the other remote users within the multi-user communication session (e.g., and independent of the current spatiality of the other remote users within the multi-user communication session). Similarly, in some examples, if the respective remote user is non-spatial within the multi-user communication session (e.g., despite the local users in the physical environment 400 being non-spatial with the remote users within the multi-user communication session), the respective remote user is visually represented non-spatially (e.g., via a two-dimensional representation) to the other remote users within the multi-user communication session (e.g., and independent of the current spatiality of the other remote users within the multi-user communication session). In some examples, the multi-user communication session remains a non-spatial multi-user communication session (e.g., such that the local users do not experience spatial truth with the remote users in the multi-user communication session) until a respective local user selects the selectable option 435 (e.g., in FIG. 4H) to cause the spatial state of the local users to be transitioned back to being spatial (e.g., which would cause the multi-user communication session to return to being a spatial multi-user communication session, such that the local users once again experience spatial truth with the remote users, as similarly discussed above).

Accordingly, as outlined above, providing systems and methods for changing a visual appearance of a user in a multi-user communication session in response to detecting that the user transitions from being a remote user within the multi-user communication session to being a collocated user within the multi-user communication session and/or vice versa enables different modes of display of users within the multi-user communication session based on whether the users are collocated or non-collocated users, thereby improving user-device interaction and efficiently utilizing computing resources. Additionally, providing a selectable option for changing a spatial state of collocated users within the multi-user communication session relative to remote users enables the collocated users to quickly and effectively change the mode of display of the remote users, which helps preserve display space within the three-dimensional environment and therefore computing resources, as another benefit.

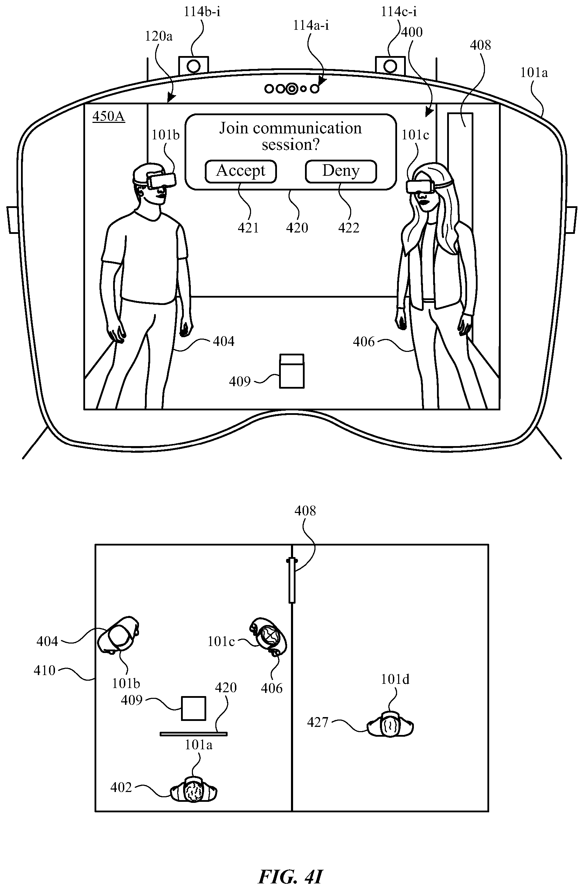

FIGs. 4I-4N illustrate examples of joining a user of an electronic device into a multi-user communication session that is already active between other users of other electronic devices, according to some examples of the disclosure.

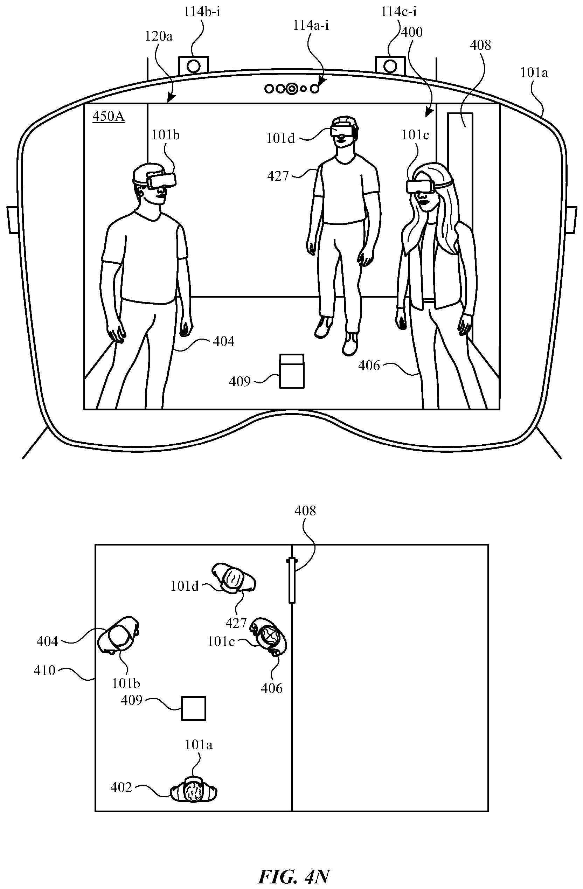

In some examples, the user of the electronic device (e.g., different from the user of electronic device 101a) joins the multi-user communication session and is presented in the multi-user communication session in a way that is based on whether the user of the electronic device is collocated with electronic device 101a. For example, if the joining user is not collocated with electronic device 101a, such as user 427 of electronic device 101d (e.g., in top down view 410) being non-collocated with user 402 of electronic device 101a in FIG. 4I, then the electronic device 101a optionally displays a representation of the joining user of the electronic device, optionally in addition to generating audio corresponding to the joining user (e.g., an audio effect corresponding to a voice of the user such as described above) in a first manner, and if the joining user of the electronic device is collocated with electronic device 101a, such as the user 427 of electronic device 101d being collocated with user 402 of electronic device 101a in FIG. 4N, then the electronic device 101a optionally does not display the representation of the joining user of the electronic device that the electronic device 101a would otherwise display if the joining user of the electronic device was non-collocated with the user 402 of the electronic device 101a and/or does not generate audio corresponding to the joining user of the electronic device in the same first manner.

In some examples, the user of the electronic device that joins the multi-user communication session is not collocated with a user of an electronic device that is in the multi-user communication session, such as user 427 of electronic device 101d being non-collocated with the user 402 of electronic device 101a in FIG. 4I, and the multi-user communication session that the user of the electronic device joins was previously a multi-user communication session that was solely between non-collocated users of electronic devices, such as solely between user 402 of electronic device 101a in FIG. 4I and a user of an electronic device that is not collocated with the electronic device 101a, and then electronic device 101a, in response to the joining of the user of the electronic device, maintains functionality within the multi-user communication session as being non-collocated with other users of electronic devices in multi-user communication session, such as the electronic device 101a displaying visual representations of the non-collocated users of electronic devices in the multi-user communication session before joining the new user that is non-collocated and maintaining display of those representations, in addition to adding a visual representation of the newly joined non-collocated user into multi-user communication session.

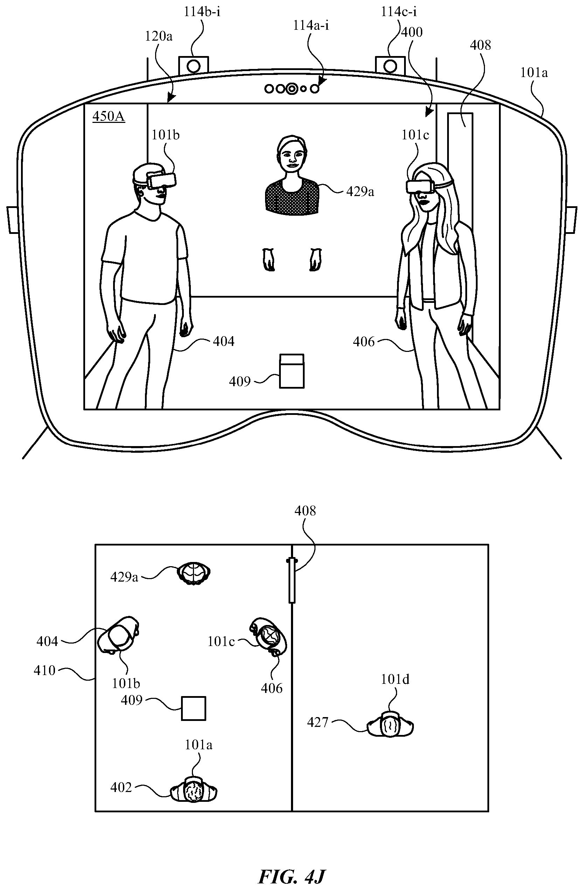

In some examples, the user of the electronic device that joins the multi-user communication session is collocated with a user of an electronic device that is in the multi-user communication session, such as the joining user being user 404 of electronic device 101b in FIG. 4I who is collocated with user 402 of electronic device 101a, and the multi-user communication session that the user of the electronic device joins was previously a multi-user communication session that was between collocated users of electronic devices and non-collocated users of electronic devices, such as between users 402 and 406 of electronic devices 101a/101c, each of which are collocated in FIG. 4J and user 427, who is not collocated with users 402 and 404 in FIG. 4J, and then the electronic devices within the multi-user communication session, in response to the joining of the user of the electronic device, perform different operations based on whether the joining user is collocated with the previously collocated users of electronic devices or is collocated with a user that was not collocated with any other user of electronic devices in the multi-user communication session. For example, if the multi-user communication session includes a first set of collocated users of electronic devices (e.g., that are collocated relative to each other) and a second set of non-collocated users of electronic devices when a request to add a new user to the multi-user communication session was accepted, and if the joining user is collocated with the first set collocated users of electronic devices, then the electronic devices of the first set of collocated users would optionally be configured to display the virtual representations of the second set of non-collocated users of electronic devices and present, via optical passthrough, the joining user, while the electronic devices of the second set of users would optionally be configured to display the virtual representations of the first set of collocated users of electronic devices, including displaying a virtual representation of the joining user, since the first set of collocated users of electronic devices and the joining user are not collocated with any of the second set of non-collocated users of electronic devices.

In some examples, the user of the electronic device that joins the multi-user communication session is collocated with a user of an electronic device that is in the multi-user communication session, such as collocated with user 402 of electronic device 101a, and the multi-user communication session that the user of the electronic device joins was previously a multi-user communication session that was just between non-collocated users of electronic devices, such as only between user 402 of electronic device 101a and user 427 of electronic device 101d in FIG. 4J, and then the multi-user communication session, in response to the joining of the user of the electronic device, includes at least one pair of collocated users of electronic devices in addition to at least one non-collocated user of an electronic device (e.g., who is non-collocated relative to the pair of collocated users of electronic devices), and the multi-user communication session would look different (e.g., represent users differently) for the pair of collocated users of electronic devices compared with the at least one non-collocated user of the electronic device. For example, the newly joined user is optionally collocated with user 402 of electronic device 101a in FIG. 4J (who in this example is not collocated with another user in the multi-user communication session), and in response to the joining of the user of the electronic device into the multi-user communication session, the newly joined user is presented via optical passthrough to the user 402 of electronic device 101a in FIG. 4J, while electronic device 101a continues display of the virtual representation of the non-collocated user (e.g., the spatial avatar 429a of user 427 of electronic device 101d in FIG. 4J), and relative to the electronic device of the non-collocated user in the multi-user communication session (e.g., electronic device 101d in FIG. 4J), the newly added user is displayed as a virtual representation along with display of a virtual representation of the user 402 of electronic device 101a.

In some examples, a first user of a first electronic device joins into a multi-user communication session that is already active just between non-collocated users of electronic devices, and the first user of the first electronic device is collocated with one of the non-collocated users of electronic devices in the active multi-user communication session. For example, the first user of the first electronic device is optionally collocated with a second user of a second electronic device who/that is in the multi-user communication session, and the second user of the second electronic device optionally accepts a request for the first user of the first electronic device to join the multi-user communication session that, before accepting the request, was just between non-collocated users of electronic devices. In some examples, the second user of the second electronic device is displaying spatial avatars or two-dimensional representations of the other non-collocated users of the electronic devices that are in the multi-user communication session when the second user of the second electronic device accepts the first user of the first electronic device into the multi-user communication session. When the second user of the second electronic device accepts the first user of the first electronic device into the multi-user communication session (that, before accepting the request, was just between non-collocated users of electronic devices), the first electronic device optionally treats differently the second user of the second electronic device compared with the non-collocated users of electronic devices in the multi-user communication session. For example, at the second electronic device, the second electronic device optionally displays the spatial avatars or two-dimensional representations of the other non-collocated users of the electronic devices that are in the multi-user communication session and presents via optical passthrough the first user of the first electronic device, since the first user of the first electronic device is collocated with the second user of the second electronic device. Continuing with this example, the second electronic device optionally does not generate or present, via audio output devices of the second electronic device, audio data (e.g., the first user speaking), since the first and second electronic devices are collocated while in the multi-user communication session (e.g., share an audio space of the physical environment in which the first and second electronic devices are collocated), while the second electronic device does generate and present audio effects corresponding to the voices of the other users of the other electronic devices that are non-collocated with the first and second electronic devices. In some examples, before the second user of the second electronic device accepts the first user of the first electronic device into the multi-user communication session that is active between just non-collocated users, if the first user of the first electronic device is in the field of view of the second electronic device, the second electronic device optionally presents, via optical passthrough, the first user of the first electronic device, even though the first user of the first electronic device is not in the multi-user communication session that includes the second user of the second electronic device. In some examples, in response to the second user of the second electronic device accepting the first user of the first electronic device into the multi-user communication session, the first electronic device optionally initiates a process for the other non-collocated electronic devices in the multi-user communication session to display a spatial avatar or two-dimensional representation of the first user of the first electronic device.

In some examples, the determination of whether to display the spatial avatar or two-dimensional representation of the first user of the first electronic device in a respective environment displayed by a respective non-collocated electronic device is based on whether the respective non-collocated electronic device is displaying other spatial avatars or two-dimensional representations of other users of other electronic devices. For example, if the respective non-collocated electronic device is displaying spatial avatars of other users of other electronic devices when the first user is joined, then the respective non-collocated electronic device optionally proceeds to also displaying a spatial avatar of the first user, and if the respective non-collocated electronic device is displaying two-dimensional representations of other users of other electronic devices when the first user is joined, then the respective non-collocated electronic device optionally proceeds to also displaying a two-dimensional representation of the first user. In some examples, the determination of whether to display the spatial avatar or two-dimensional representation of the first user of the first electronic device in a respective environment displayed by a respective non-collocated electronic device is based on the selected preference of the first user of the first electronic device, such as described herein above. In some examples, the determination of whether to display the spatial avatar or two-dimensional representation of the first user of the first electronic device in a respective environment displayed by a respective non-collocated electronic device is based on a type of shared visual content displayed within the multi-user communication session. For example, when a user interface of slide show presentation is shared in the multi-user communication session, the other users of the multi-user communication session are optionally represented as two-dimensional representations next to the slide show presentation instead of spatial avatars or are represented as spatial avatars instead of two-dimensional representations.

In FIG. 4I, a multi-user communication session is active between user 402 of electronic device 101a, user 404 of electronic device 101b, and user 406 of electronic device 101c, each of which are collocated.

In FIG. 4I, while electronic device 101a is collocated with electronic device 101b and the electronic device 101c in the physical environment 400 (e.g., and while electronic device 101a is in a multi-user communication session with electronic device 101b and electronic device 101c), electronic device 101a (and optionally electronic device 101b and electronic device 101c) detect an indication of a request to add electronic device 101d to the current multi-user communication session between electronic device 101a, electronic device 101b, and electronic device 101c. In some examples, the request is presented at electronic device 101a in response to detecting that electronic device 101d is near the electronic device 101a (e.g., in the same physical environment 400 and/or in the same building, but outside of the same physical visual and/or audio space of physical environment 400). For example, the electronic device 101a optionally detects that electronic device 101d is in a lounge or lobby area of a building and is active (e.g., electronic device 101d is head worn device that the fourth user is wearing), and electronic device 101a detects that the fourth user is in a contact list of electronic device 101a and/or electronic device 101d is discoverable (e.g., wirelessly discoverable via BLUETOOTH or another wireless communication technology) to electronic device 101a. In some examples, electronic device 101d is not discoverable until certain criteria are satisfied, such as a criterion that is satisfied when the location of electronic device 101d is a first location (e.g., collocated location or a non-collocated location), a criterion that is satisfied when electronic device 101d is wirelessly discoverable by electronic device 101a), a criterion that is satisfied when electronic device 101d is connected to the Internet, a criterion that is satisfied when electronic device 101d is in a particular mode of operation (e.g., is in an ON-state, is not in a notification restriction state (e.g., a focus mode) such as a DO NOT DISTURB state), and/or another criterion. In some examples, the request is presented in response to detecting that electronic device 101d is active and is at a specific location in physical environment 400 or outside of physical environment 400, such as in a lounge area or in an office space at a specific time, such as at a time corresponding to a meeting with user 402 of first electronic device 101a (e.g., known from data associated with a calendar or planning application running on electronic device 101a). Additionally or alternatively, in some examples, the request is presented at electronic device 101a in response to electronic device 101a initiating communication with fourth electronic device 101d, such as via a phone or video call.

In some examples, electronic device 101d is non-collocated (e.g., does not share the visual space of physical environment 400) with electronic device 101a, electronic device 101b, and third electronic device 101c, such as shown in FIG. 4I. For example, as shown in overhead view 410 in FIG. 4I, fourth electronic device 101d is located (e.g., with fourth user 427) in a different room than that of physical environment 400 (in which electronic device 101a, electronic device 101b, and electronic device 101c are located). In some examples, while electronic device 101d is in the physical environment 440, electronic device 101d is more than the threshold distance (e.g., discussed above) of electronic device 101a, electronic device 101b, and/or electronic device 101c. Additionally, in some examples, as shown in FIG. 4I, electronic device 101d is not in the field of view of electronic device 101a when the request is detected.

In some examples, when electronic device 101a (and optionally electronic device 101b and electronic device 101c) detect the indication discussed above, electronic device 101a (and optionally electronic device 101b and electronic device 101c) display message element 420 (e.g., a notification) corresponding to the request to include fourth electronic device 101d in the multi-user communication session (e.g., such that the multi-user communication session is between the electronic devices 101a through 101d). In some examples, as shown in FIG. 4I, the message element 420 includes a first option 421 that is selectable to accept the request (e.g., join into the multi-user communication session fourth electronic device 101d) and a second option 422 that is selectable to deny the request (e.g., and forgo joining into the multi-user communication session electronic device 101d). In some examples, fourth electronic device 101d is not in any multi-user communication session before joining into the multi-user communication session that is with the electronic devices 101a through 101c. In some examples, fourth electronic device 101d is in a multi-user communication session that does not include any of electronic devices 101a through 101c before joining into the multi-user communication session that is with the electronic devices 101a through 101c.

In FIG. 4I, the first electronic device optionally detects one or more inputs accepting the request to include in their active multi-user communication session electronic device 101d. For example, in FIG. 4I, electronic device 101a optionally detects a selection of the first option 421 in the message element 420. As an example, electronic device 101a optionally detects that the user of electronic device 101a has performed an air pinch gesture directed to the first option 421, such as a pinch performed by a hand of the first user 402, respectively, optionally while a gaze of the first user 402 is directed to the first option 421 (e.g., without being directed to the second option 422) at electronic device 101a. It should be understood that additional or alternative inputs are possible, such as air tap gestures, gaze and dwell inputs, verbal commands, etc.

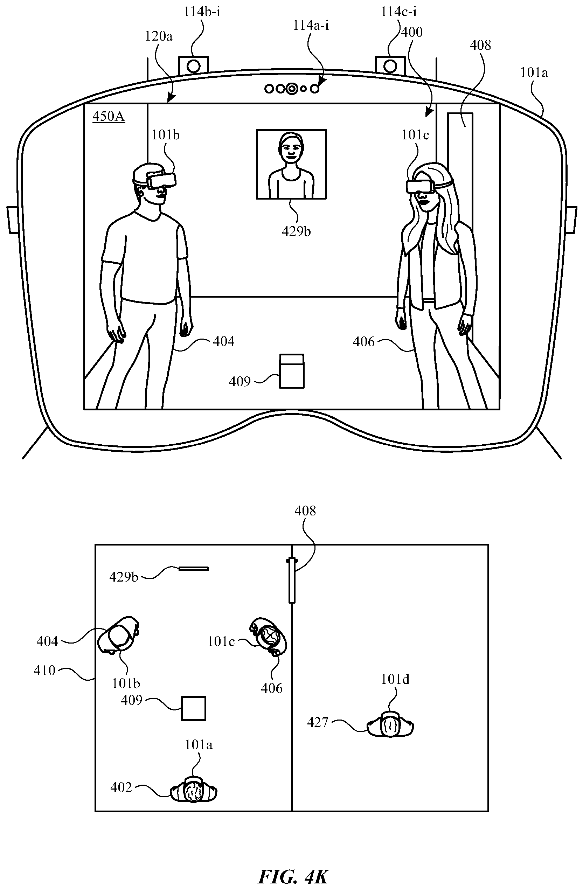

In some examples, in response to the input directed at first option 421, electronic device 101a joins into the multi-user communication session electronic device 101d and displays a spatial avatar 429a of user 427, as shown in FIG. 4J, since the user 427 is not collocated with the user 402 of electronic device 101a. Alternatively, in some examples, in response to the input directed at first option 421, electronic device 101a joins into the multi-user communication session electronic device 101d and displays a two-dimensional representation of user 427 (e.g., representation 429b in FIG. 4K), as shown in FIG. 4K, since the user 427 is not collocated with the user 402 of electronic device 101a. In some examples, electronic device 101a displays representation 429b or spatial avatar 429a of user 427 of electronic device 101d such as described with reference to electronic device 101a displaying representation 405b or spatial avatar 405a of user 406 of electronic device 101c in FIGs. 4A-4C.

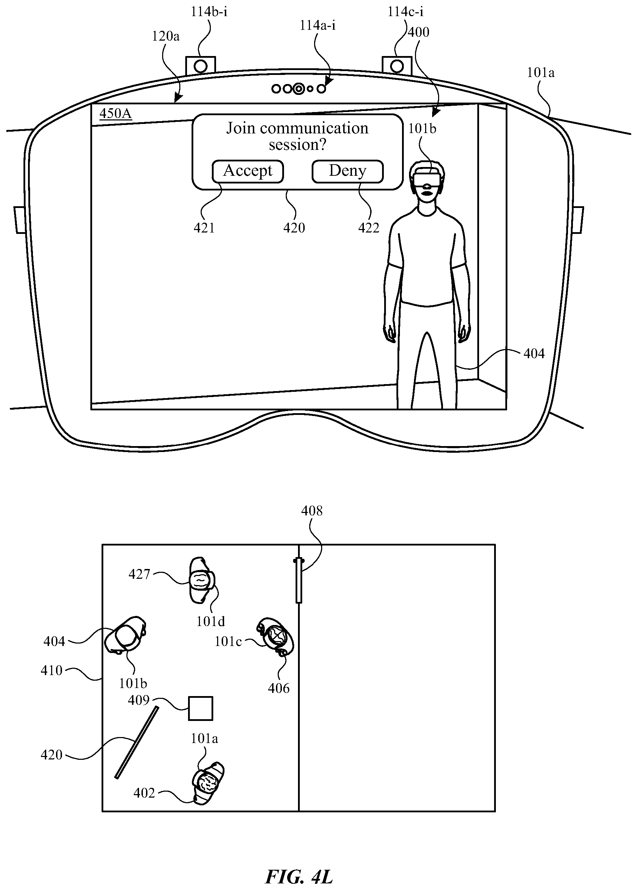

In some examples, electronic device 101d is collocated with user 402 of electronic device 101a when the electronic device 101d joins a multi-user communication session. In FIG. 4L, electronic device 101d is in the same physical environment 400 as electronic device 101a, but is not yet in the multi-user communication session. In FIG. 4L, the multi-user communication session is active between user 402 of electronic device 101a, user 404 of electronic device 101b, and user 406 of electronic device 101c, each of which are collocated. In some examples, one or more of electronic device 101a through 101c detects that the electronic device 101d is collocated with the electronic device 101a through 101c. It should be noted that since the electronic devices 101a through 101c are collocated, when a respective electronic device 101a through 101c detects that the electronic device 101d is collocated with the respective electronic device 101a through 101c, the respective electronic device that detected the collocation optionally causes display of message element 420 in the multi-user communication session by the respective electronic devices 101a through 101c. In some examples, in response to detecting the collocation, the message element 420 is displayed by the electronic device that detected the collocation. In FIG. 4L, message element 420 is displayed by electronic device 101a even though in the illustrated field of view of electronic device 101a, display 120a does not include user 427 of electronic device 101d, but just user 404 of electronic device 101b (e.g., because the user 402 of electronic device 101a is facing user 404 of electronic device 101b directly (e.g., without facing user 427 of electronic device 101d)).

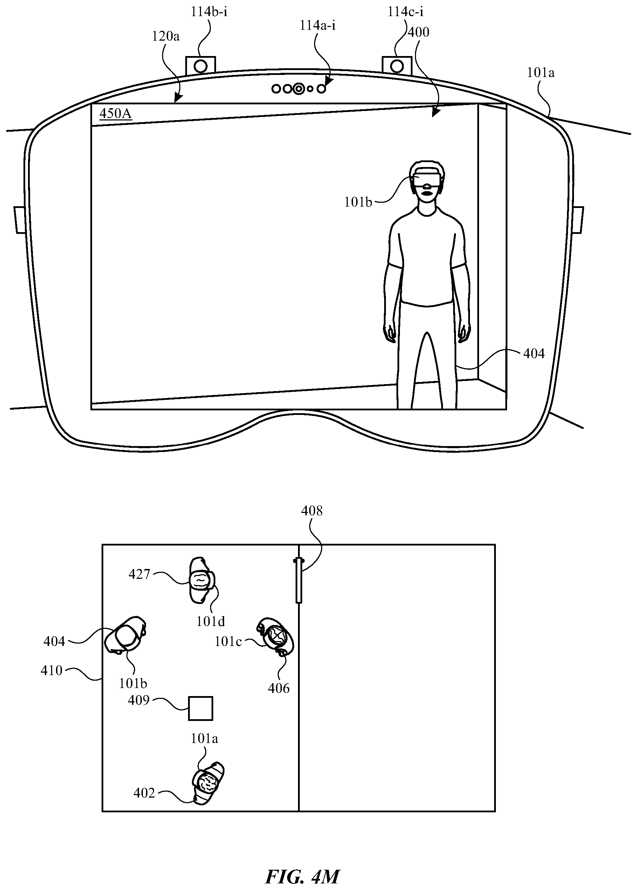

In some examples, in response to the input directed at first option 421 in FIG. 4L, electronic device 101a joins into the multi-user communication session electronic device 101d, without displaying a spatial avatar 429a or representation 429b of user 427, as shown in FIG. 4M, since the user 427 is collocated with the user 402 of electronic device 101a (as optionally determined by electronic device 101a and/or by the collocated electronic device 101a that detected the collocation of the electronic device 101d while being collocated with the electronic device 101a in the multi-user communication session). In some examples, when the user 427 of electronic device 101d is joined into the multi-user communication session, independent of whether a field of view of electronic device 101a includes the user 427 of electronic device 101d, electronic device 101a optionally provides the user 402 with a notification that the user 427 of electronic device 101d is now in the multi-user communication session, such as via a user interface notification that textually indicates that the fourth user 427 of electronic device 101d has joined the multi-user communication session. In particular, user 427 of electronic device 101d optionally would appear via optical passthrough when the field of view of user 402 of electronic device 101a includes the user 427 of electronic device 101d, such as shown from FIG. 4L to FIG. 4N. It should be noted that in FIG. 4N the three-dimensional environments, including virtual content 409, displayed via the electronic devices 101a through 101d to their respective users are optionally spatially aligned.

Accordingly, as outlined above, providing systems and methods for determining a mode of visual representation of a user of an electronic device that is joined into a multi-user communication session that is already active between users of other electronic devices enables different modes of display of users within the multi-user communication session based on whether the users are collocated or non-collocated users, thereby improving user-device interaction and efficiently utilizing computing resources.

In some circumstances, when respective electronic devices are collocated in a multi-user communication session and include audio devices for detecting and presenting audio to respective users of the respective electronic devices, audio feedback and audio spill (e.g., audio bleed) can occur. When these audio events occur, the audio experience of the collocated users can become undesirable. As an example, when electronic devices are collocated and are streaming the same movie, audio spill can occur when playback of the movie on a first electronic device is offset in time with playback of the movie on a second electronic device of the multi-user communication session, and the user of the second electronic device can hear the audio corresponding to the playback of the movie being presented by the first electronic device. In this case, the user of the second electronic device would, in addition to hearing audio signals from their own electronic device, hear the audio signals of the movie from the first electronic device, which is offset in time from playback of the movie on the second electronic device. As another example, audio feedback can occur when sounds from various electronic devices playing the movie are detected and amplified by other electronic devices. As another example, when respective electronic devices are collocated in a multi-user communication session and include audio devices for detecting and presenting audio to respective users of the respective electronic devices, and the multi-user communication session also includes non-collocated electronic devices, audio from the non-collocated users could be presented at different time times, which would result in different collocated users being presented with the same audio at different times, which would decrease user experience. As such, systems and methods that control audio properties of electronic devices to reduce undesirable coupling between audio being generated for presentation at different electronic devices that are collocated are desirable.

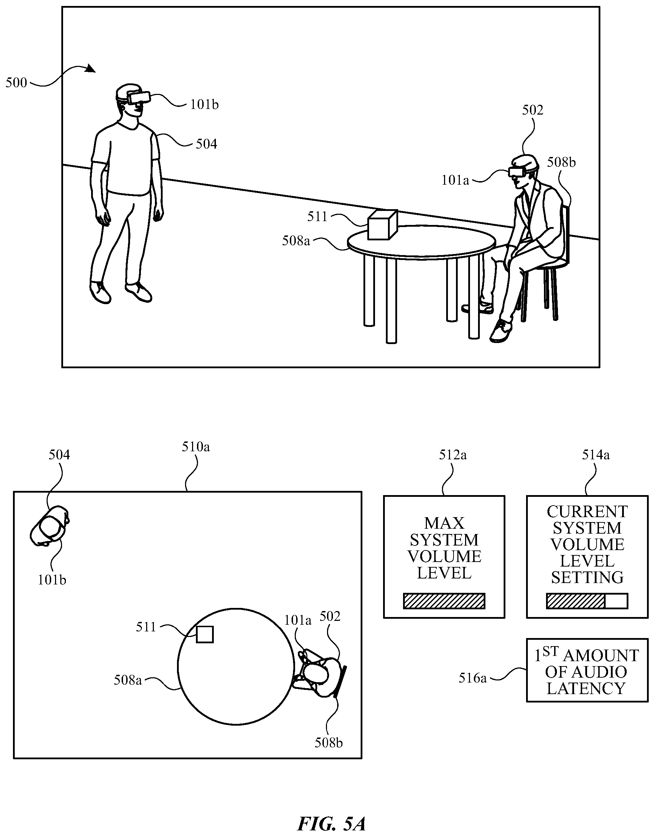

FIGs. 5A-5H illustrate examples of an electronic device in a multi-user communication session changing a level of a first audio property based on changes in distance between the electronic device and another electronic device that is collocated with the electronic device in the multi-user communication session according to some examples of the disclosure.

FIG. 5A illustrates user 502 of electronic device 101a and user 504 of electronic device 101b who are collocated in physical environment 500. These users 502 and 504 are in the multi-user communication session via their respective electronic devices 101a/101b. As such, user 504 of electronic device 101b is optionally presented in the three-dimensional environment visible via electronic device 101a via optical passthrough and user 502 of electronic device 101a is optionally presented in the three-dimensional environment visible via electronic device 101b via optical passthrough (e.g., provided that the respective user is in the field of view of the other user). In the illustrated example of FIG. 5A, user 502 of electronic device 101a is sitting on a physical chair 508b next to physical table 508a and user 504 of electronic device 101b is standing in the physical environment.

In some examples, electronic device 101a is in communication with one or more first audio input devices and one or more first audio output devices. The one or more first audio input devices include one or more first microphones that are optionally attached to or are integrated in electronic device 101a. For example, in the illustrated example of FIG. 5A, the user 502 is wearing electronic device 101a on the user's head, and the audio devices are optionally integrated into electronic device 101a. In some examples, the audio devices that are in communication with electronic device 101a include one or more characteristics of the audio devices described with reference to FIG. 2. For example, the audio devices of electronic device 101a optionally include one or more characteristics of speaker(s) 216a and microphone(s) 213a. The microphones of electronic device 101a are optionally configured to detect/capture sound in the environment of the user 502 of electronic device 101a, such as sound corresponding to a voice of the user in the environment of the user 502 of electronic device 101a. The audio output devices of electronic device 101a are optionally oriented in way that faces the ears of the user of electronic device 101a. In some examples, electronic device 101a includes speakers that face and/or are configured to be worn on, around, and/or inside of the ears of the user, and include speakers that are externally facing (e.g., that face outward away from the head or ears of the user) and are configured to generate sound for the hearing of persons in the physical environment that may or may not be in the multi-user communication session.

Similarly, in some examples, electronic device 101b is in communication with one or more second audio input devices and one or more second audio output devices. The one or more second audio input devices include one or more second microphones that are optionally attached to or are integrated in electronic device 101b. For example, in the illustrated example of FIG. 5A, the user 504 is wearing electronic device 101b on the user's head, and the audio devices are optionally integrated into electronic device 101b. In some examples, the audio devices that are in communication with electronic device 101b include one or more characteristics of the audio devices described with reference to FIG. 2. For example, the audio devices of electronic device 101b optionally include one or more characteristics of speaker(s) 216b and microphone(s) 213b. The microphones of electronic device 101b are optionally configured to detect/capture sound in the environment of the user 504 of electronic device 101b, such as sound corresponding to a voice of the user in the environment of the user 504 of electronic device 101b. The audio output devices of electronic device 101b are optionally oriented to face the ears of the user of electronic device 101b. In some examples, electronic device 101b includes speakers that face and/or are configured to be worn on, around, and/or inside of the ears of the user, and include speakers that are externally facing (e.g., that face outward away from the head or ears of the user) and are configured to generate sound for the hearing of persons in the physical environment that may or may not be in the multi-user communication session.

Since electronic devices 101a/101b are collocated, electronic devices 101a/101b optionally share an audio of the physical environment 500. For example, if an audio source, such as a speaker, was placed in physical environment 500, and was generating sound, users 502/504 would optionally hear the sound that the audio source is generating in the physical environment and would detect the sound as coming from the same location in the physical environment. Provided that electronic devices 101a/101b include microphones, electronic devices 101a/101b would optionally detect the audio being generated from the audio source in the physical environment of the user. In some examples, while the electronic devices 101a/101b are collocated, when user 502 speaks, electronic device 101b detects sound corresponding to user 502, and when user 504 speaks, electronic device 101a detects sound corresponding to user 504. Further, as described above in this disclosure, in some examples, when electronic devices 101a/101b share an audio space of a physical environment, audio data detected by first microphones of electronic device 101a is also detected by second microphones of electronic device 101b. Additionally or alternatively, electronic devices 101a/101b in FIG. 5A are optionally collocated in accordance with other characteristics of collocation described herein, such as those described with reference to FIG. 4O.

In FIG. 5A, electronic devices 101a/101b each present shared content 511 (e.g., shared virtual content, such as shared content 511 being visible only through electronic devices 101a/101b). Shared content 511 optionally includes one or more characteristics of shared content 409 of FIG. 4A. If the multi-user communication session is solely between electronic devices 101a/101b, shared content 511 optionally represents shared visual virtual content that is being shared in the multi-user communication session by electronic device 101a or electronic device 101b. If the multi-user communication session is between electronic devices 101a/101b, and a non-collocated user, then the shared content 511 could additionally or alternatively represent content that is being shared in the multi-user communication session by the non-collocated user (e.g., by the electronic device that is non-collocated with the electronic devices 101a/101b). Further, when the multi-user communication session is between electronic devices 101a/101b, and another electronic device of a non-collocated user, then shared content 511 is optionally also representative of a visual representation (e.g., a spatial avatar and/or a two-dimensional representation of the user such as those described above) and/or audio representation of that non-collocated user (e.g., a voice of the non-collocated user).

In the illustrated examples of FIG. 5A-5H, glyphs 512a-512h, 514a-514h, and 516a-516h are provided for reference for various audio levels and properties associated with electronic devices 101a/101b in the multi-user communication session in the respective figure.

Glyph 512a of FIG. 5A indicates a maximum system volume level for a respective electronic device (e.g., electronic device 101a and/or 101b). The maximum system volume level optionally corresponds to a maximum system volume level of electronic device 101a that can be outputted via the audio devices of electronic device 101a. For example, glyph 512a is optionally indicative of a maximum amount of gain or amplification of an audio signal that setting of electronic device 101a is able to provide to the audio signal. For example, if shared content 511 is a movie that is being played and the user 502 of electronic device is watching the movie, then electronic device 101a is optionally outputting audio corresponding to the movie. The maximum volume level of electronic device 101a is optionally indicated by 512a. Similarly, the maximum system volume level of electronic device 101b is optionally indicated by glyph 512a.

Glyph 514a of FIG. 5A indicates a current system volume level for a respective electronic device, such as for electronic device 101a. As shown in the illustrated example of FIG. 5A, glyph 514 includes a slider that is not completely filled. This indicates that the current setting of the volume level of electronic device 101a is less than the maximum volume level setting for electronic device 101a. Thus, for example, in response to user input while in the multi-user communication session, user 502 of electronic device 101a could optionally increase the volume level of electronic device 101a (or could decrease the volume level). It should be noted that the slider length of the slider of glyph 512a is the same as the slider length of glyph 514a in FIG. 5A, and this sameness is for indicating that the maximum setting for the current volume level of electronic device is the maximum volume level indicated by glyph 512a. It should also be noted that the current system volume level for electronic device 101a is optionally the same as or different from the current system volume level for electronic device 101b.

Further, in FIG. 5A, glyph 516a indicates that a difference in audio latency between electronic device 101a and electronic device 101b is a first amount. For example, provided that both devices receive the same audio signal, electronic device 101a optionally presents the audio signal at a first time and electronic device optionally presents that audio signal at a second time different from the first time, optionally due to distinguishing characteristics introduced during a manufacturing process of the respective electronic device 101a/101b even if electronic devices 101a/101b are the same type of device. As another example, if the multi-user communication session includes electronic devices 101a/101b, which are collocated, and includes a non-collocated electronic device, and the non-collocated electronic device is detecting that the user of the non-collocated electronic device is speaking, then when the audio signal corresponding to the voice of the user of the non-collocated electronic device is received by electronic devices 101a/101b, the processing times associated with processing the audio signal to present to the respective user 502/504 of the respective electronic device 101a/101b (via the respective audio output devices of electronic devices 101a/101b), is optionally different, thus resulting in a difference in audio latency between electronic devices 101a/101b.

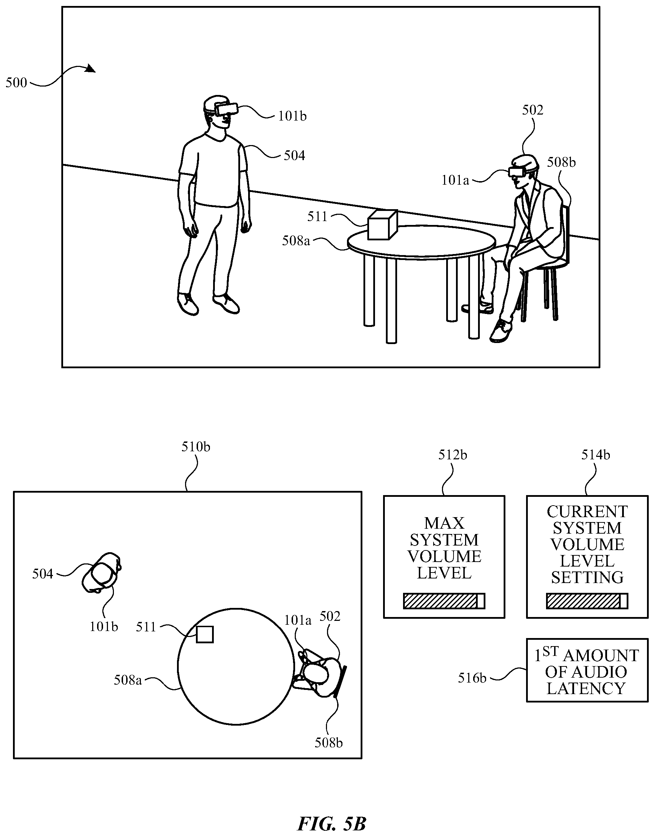

In FIG. 5A, electronic devices 101a/101b are a first distance apart, and from FIG. 5A to 5B, the distance between electronic devices 101/101b is reduced to a second distance less than the first distance. For example, from FIG. 5A to 5B, user 504 of electronic device 101b has walked closer to user 502 of electronic device 101a. In response to detecting this event that includes the reduction in distance between electronic devices 101a/101b, electronic device 101a reduces the maximum system volume level of electronic device 101a, as indicated by glyph 512b of FIG. 5B. In the illustrated example of the resulting change in maximum system volume level of electronic device 101a from FIG. 5A to 5B, even though the maximum system volume level of electronic device 101a has decreased due to the reduction in distance between electronic devices 101a/101b, the decrease in maximum system volume level has not caused a change in the current system volume level setting, as shown with glyph 514b of FIG. 5B, because the new maximum system volume level setting corresponds to a greater volume level than the current volume level of electronic device 101a in FIGs. 5A and 5B. Thus, in FIG. 5B, in response to user input to increase the volume level of electronic device 101a (e.g., a user input directed to a physical or virtual knob, user interface element, or button that is optionally a dedicated affordance for changing a volume level of electronic device 101a, and the user input requesting an increase in volume level), electronic device 101a would increase the volume level in accordance with the user input, up to the maximum volume level of electronic device indicated in glyph 512b in FIG. 5B. Accordingly, in some examples, when a collocated electronic device adjusts (e.g., changes) allowable volume levels (e.g., maximum allowable volume levels) due to changes in distance between collocated electronic devices, the current volume level settings of the collocated electronic device optionally is not changed.

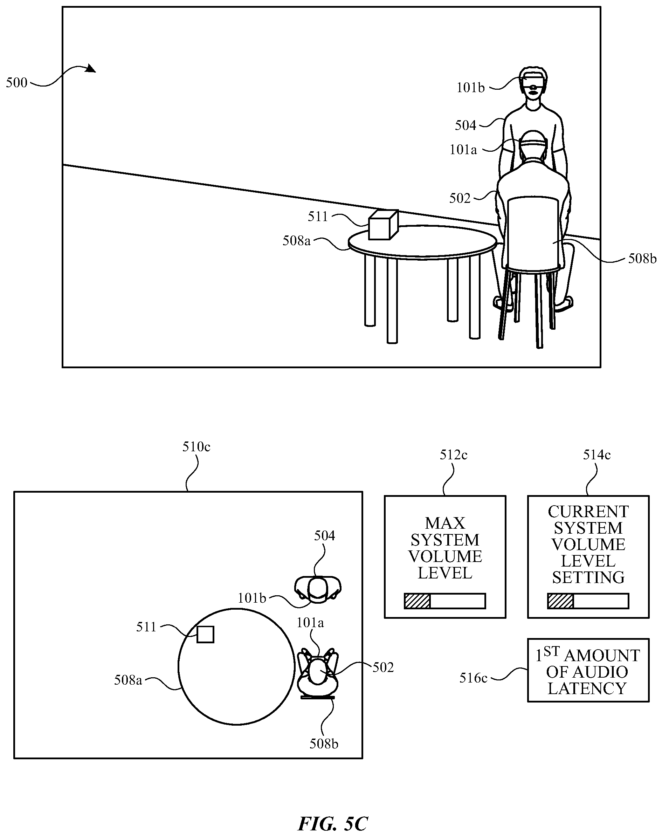

In FIG. 5B, electronic devices 101a/101b are a second distance apart, and from FIG. 5B to 5C, the distance between electronic devices 101a/101b is reduced to a third distance less than the second distance. For example, from FIG. 5B to 5C, user 504 of electronic device 101b has walked closer to user 502 of electronic device 101a. In response to detecting this event that includes the reduction in distance between electronic devices 101a/101b, electronic device 101a reduces the maximum system volume level of electronic device 101a, as indicated by glyph 512c of FIG. 5C. In the illustrated example of the resulting change in audio properties of the electronic device 101a from FIG. 5B to 5C, the maximum system volume level of electronic device 101a is reduced, as shown from glyph 512b of FIG. 5B to glyph 512c in FIG. 5C, and a current volume level of electronic device 101a is reduced, as shown from glyph 514b of FIG. 5B to glyph 514c in FIG. 5C. This reduction in current volume level of electronic device 101a occurs because the new maximum system volume level setting of FIG. 5C corresponds to a lower volume level than the current volume level of electronic device 101a in FIG. 5B. Thus, in FIG. 5C, in response to user input to increase the volume level of electronic device 101a from the illustrated current volume level, electronic device 101a would optionally forgo increasing the volume level in accordance with the user input because in FIG. 5C the illustrated current volume level of electronic device 101a (e.g., glyph 514c) is at the illustrated maximum allowable volume level of electronic device 101a (e.g., glyph 512c) given the distance between electronic devices 101a/101b. Further, in the illustrated example, the fill line of the slider in glyph 512c of FIG. 5C is intended to be representative of being equal in length as the full slider glyph 514c. These lengths are equal because from FIG. 5B to FIG. 5C, in response to the change in distance (e.g., from the second distance of FIG. 5B to the third distance of FIG. 5C), the maximum slider fill length of glyph 514c corresponds to the maximum volume level which has reduced in volume level to a position that is lower than a position of the current system volume level setting in FIG. 5B. Accordingly, in some examples, changes in allowable volume levels of collocated electronic devices due to changes in distance between the collocated electronic devices optionally affects current volume level settings of the collocated electronic devices. In this way, electronic device 101a reduces an amount of audio feedback and/or audio bleed between electronic devices 101a/101b in the multi-user communication session.

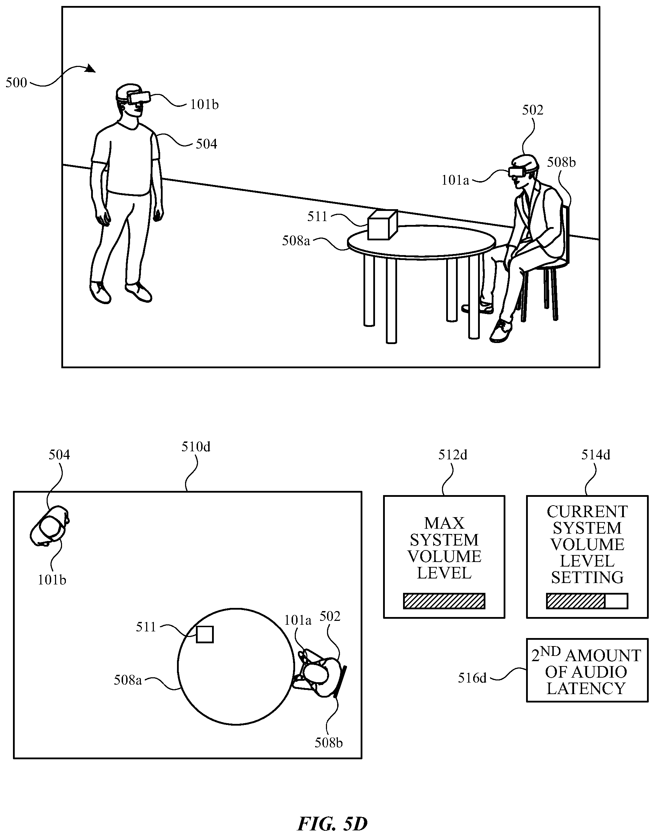

In some examples, the amount of change in the level of the audio property of electronic device 101a is based on an amount of a difference in audio latency between collocated electronic devices 101a/101b. In the illustrated examples of FIGs. 5A-5C, the amount of the difference in audio latency is a first amount, and the amount of the change in audio property of electronic device 101a is optionally based on the first amount. In the illustrated examples of FIGs. 5D-5G, the amount of the difference in audio latency is a second amount, greater than the first amount, and the amount of the change in audio property of electronic device 101a resulting from similar changes in distances described with reference to FIGs. 5A-5C will be shown to be respectively greater.

In FIG. 5D, electronic devices 101a/101b are the first distance (e.g., first distance described with reference to FIG. 5A) apart. However, in FIG. 5D, an amount of difference in audio latency between electronic devices 101a/101b is a second amount, as indicated by glyph 516d, which is greater than the first amount described with reference to FIGs. 5A-5C.

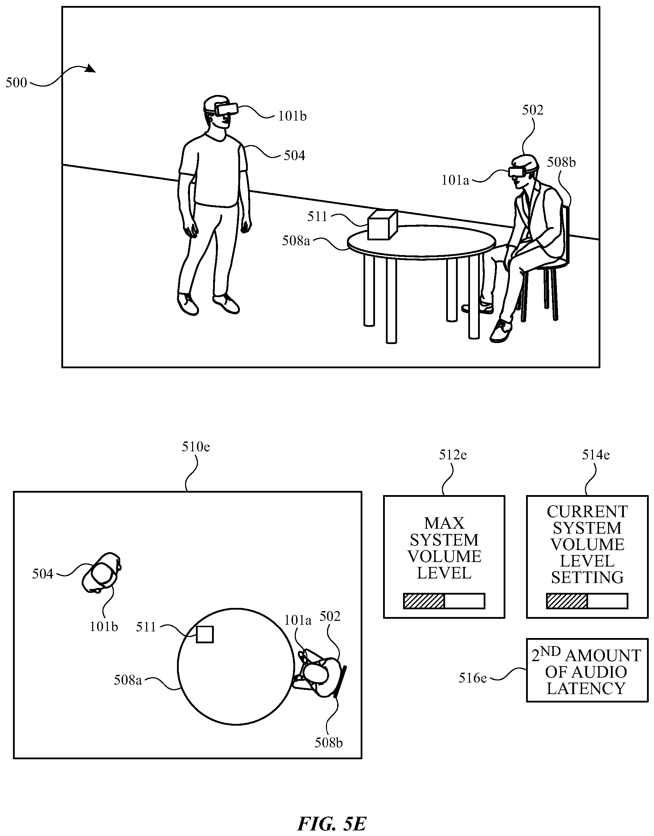

From FIG. 5D to FIG. 5E, the distance between electronic devices 101a/101b is reduced to a second distance (e.g., second distance described with reference to FIG. 5B), less than the first distance. For example, from FIG. 5D to 5E, user 504 of electronic device 101b has walked closer to user 502 of electronic device 101a. In response to detecting this event that includes the reduction in distance between electronic devices 101a/101b (and while the difference in amount of audio latency between electronic devices 101a/101b is the second amount), electronic device 101a reduces the maximum system volume level of electronic device 101a, as indicated by glyph 512e of FIG. 5E, to a level that is lower than the reduction of the maximum system volume level of electronic device 101a described with reference to FIGs. 5A and 5B. This difference in reduction of the maximum system volume level of electronic device 101a is optionally due to the different in amount of audio latency between electronic devices 101a/101b (e.g., the difference between the first amount described with reference to FIGs. 5A-5C and the second amount described with reference to FIGs. 5D-5F). That is, since the second amount of audio latency is greater than the first amount of audio latency, the same change in distance results in a greater change in level of the audio property. Further, in the illustrated example of the resulting change in audio properties of the electronic device 101a from FIG. 5D to FIG. 5E, the maximum allowable system volume level of electronic device 101a is reduced, as shown from glyph 512d of FIG. 5D to glyph 512e in FIG. 5E, and a current volume level of electronic device 101a is reduced, as shown from glyph 514d of FIG. 5D to glyph 514e in FIG. 5E. This reduction in current volume level of electronic device 101a occurs because the new maximum system volume level setting of FIG. 5E corresponds to a lower volume level than the current volume level of electronic device 101a in FIG. 5D. In some examples, the illustrated current volume level of electronic device 101a in glyph 514e in FIG. 5E is at the illustrated maximum allowable volume level of electronic device 101a in glyph 512e in FIG. 5E.

In some examples, electronic device 101a changes the level of the audio property by a first amount when a first change of displacement occurs at a first distance and changes the level of the audio property by a second amount, different from the first amount, when the second change of displacement occurs at a second distance, different from the first distance. For example, using a location of electronic device 101a as a reference, if electronic device 101b is 15 m away from electronic device 101a, and then is moved to being 10 m away from electronic device 101a, then electronic device 101a optionally reduces a maximum system volume level of electronic device 101a by a first amount, and if electronic device 101b is 6 m away from electronic device 101a, and then is moved to being 1 m away from electronic device 101a, then electronic device 101a optionally reduces a maximum system volume level of electronic device 101a by a second amount, greater than the first amount, even though the electronic device 101b moved the same amount of distance toward electronic device 101a in both cases. In some examples, electronic device 101a reduces the maximum system volume level of electronic device 101a by the second amount (greater than the first amount) in the second case because sound intensity of a sound source is inversely proportional to a distance from the sound source (e.g., sound intensity is proportional to the inverse of the square of distance from the sound source).

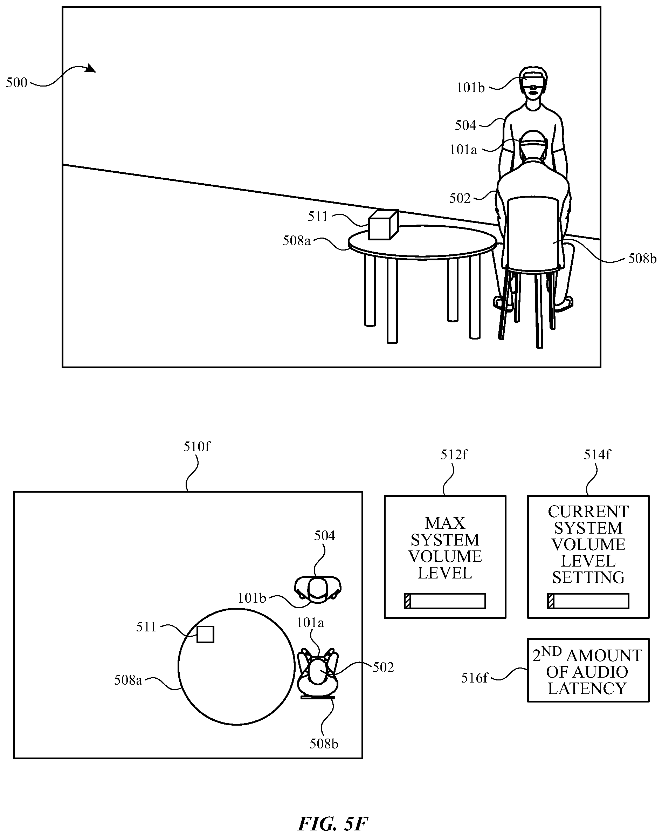

In FIG. 5E, electronic devices 101a/101b are a second distance (e.g., second distance described with reference to FIG. 5B) apart, and from FIG. 5E to 5F, the distance between electronic devices 101a/101b is reduced to a third distance (e.g., third distance described with reference to FIG. 5C) that is less than the second distance. For example, from FIG. 5E to 5F, user 504 of electronic device 101b has walked closer to user 502 of electronic device 101a. In response to detecting this event that includes the reduction in distance of electronic devices 101a/101b (and while the difference in amount of audio latency between electronic devices 101a/101b is the second amount), electronic device 101a reduces the maximum system volume level of electronic device 101a, as indicated by glyph 512f of FIG. 5F, to a level that is lower than the reduction of the maximum system volume level of electronic device 101a described with reference to FIG. 5F, even though the same change of distance occurred. As described earlier, this difference in reduction of the maximum system volume level of electronic device 101a is optionally due to the difference in amount of audio latency between electronic devices 101a/101b (e.g., the difference between the first amount described with reference to FIGs. 5A-5C and the second amount described with reference to FIGs. 5D-5F). Moreover, in the illustrated example of the resulting change in audio properties of the electronic device 101a from FIG. 5E to 5F, the maximum system volume level of electronic device 101a is reduced, as shown from glyph 512e of FIG. 5E to glyph 512f in FIG. 5F, and a current volume level of electronic device 101a is reduced, as shown from glyph S14e of FIG. 5E to glyph 514f in FIG. 5F, optionally because the highest allowable maximum system level of electronic device 101a in FIG. 5F is less than the current allowable maximum system level of electronic device 101a in FIG. 5E. In some examples, the illustrated current volume level of electronic device 101a in glyph 514f in FIG. 5F is at the illustrated maximum allowable volume level of electronic device 101a in glyph 512f in FIG. 5F. As such, in some examples, electronic device 101a changes an audio level of audio property based on an amount of relative audio latency between electronic devices that are collocated with electronic device 101a.

In some examples, when electronic device 101a is in a multi-user communication session with electronic device 101b and is collocated with electronic device 101b, electronic device 101b detects and transmits to electronic device 101a audio detected by electronic device 101b. For example, the detected audio optionally includes the user 504 of electronic device 101b speaking in the physical environment, and microphones of electronic device 101b detecting that audio of the user 504. In some examples, when electronic devices 101a/101b share an audio space of the physical environment in which electronic devices 101a/101b are collocated, the microphones of electronic device 101a likewise detect the audio that the microphones of electronic device 101b are detecting. For example, when the user 504 of electronic device 101b is speaking, the microphones of electronic device 101b are optionally detecting the user 504's voice and microphones of electronic device 101a are optionally detecting the user 504's voice. Based on the distance between electronic devices 101a/101b, the audio signals that are detected in the physical environment sourcing from the user 504 are optionally different in amplitude (e.g., in intensity or in signal strength). For example, if the distance between electronic devices 101a/101b is a first distance, and while the user 504 of electronic device 101b is speaking, the electronic device 101b optionally detects, via microphones of electronic device 101b, in the audio space of the physical environment, the voice of user 504 having a first signal strength and electronic device 101a optionally detects, via microphones of electronic device 101a, in the audio space of the physical environment, the voice of user 504 having a second signal strength, and if the distance between electronic devices 101a/101b is a second distance, greater than the first distance, and while the user 504 of electronic device 101b is speaking, electronic device 101b optionally detects, via microphones of electronic device 101b, in the audio space of the physical environment, the voice of user 504 having the first signal strength and electronic device 101a optionally detects, via microphones of electronic device 101a, in the audio space of the physical environment, the voice of user 504 having a third signal strength, less than the second signal strength. In some examples, to maintain an optimal audio presentation level of the voice of the user 504, who is collocated in the multi-user communication session in the physical environment with user 502, for the user 502, electronic device 101a generates audio that corresponds to the audio detected at electronic device 101b and/or the audio detected at electronic device 101a. For example, continuing with the example above that introduces that the signal strength of the voice of user 504 would be a third signal strength if the distance between electronic devices 101a/101b is the second distance, electronic device 101a optionally amplifies the audio corresponding to the user 504 to cause presentation of the audio signal to have the second strength at the second distance.

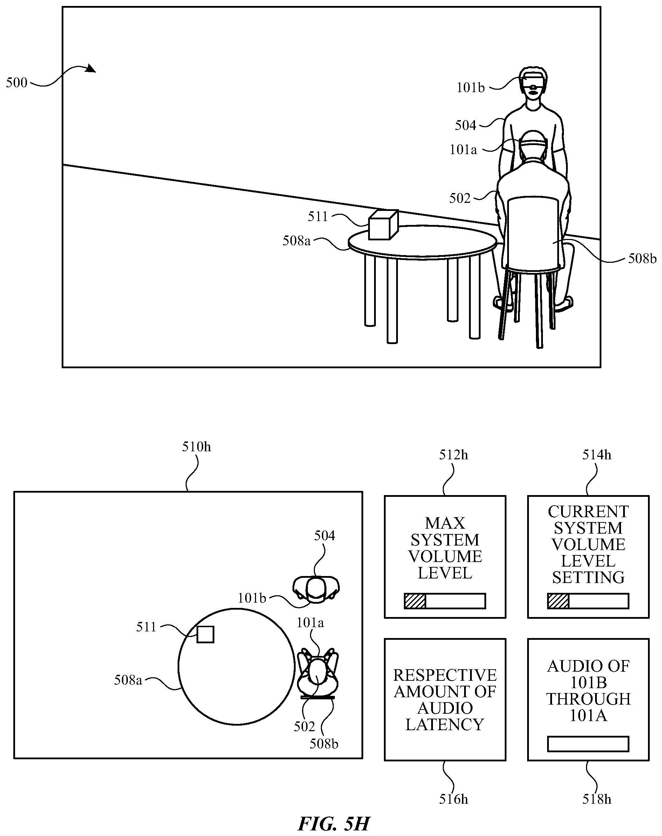

In some examples, when electronic device 101a is in a multi-user communication session with electronic device 101b and is collocated with electronic device 101b, electronic device 101b detects and transmits, to electronic device 101a, audio detected by electronic device 101b, but electronic device 101a forgoes amplifying and/or assisting in presenting the audio that it received from electronic device 101a. For example, FIG. 5H illustrates electronic device 101a forgoing amplifying audio signals detected at electronic device 101b, as shown with glyph 518h. In some examples, electronic device 101a of FIG. 5H forgoes amplifying audio signals transmitted from electronic device 101b because electronic device 101a detects that a distance between electronic devices 101a/101b is less than a threshold distance (e.g., 12 m, 10 m, 8 m, 5 m, 2 m, 0.8 m, 0.5 m, or another threshold distance).

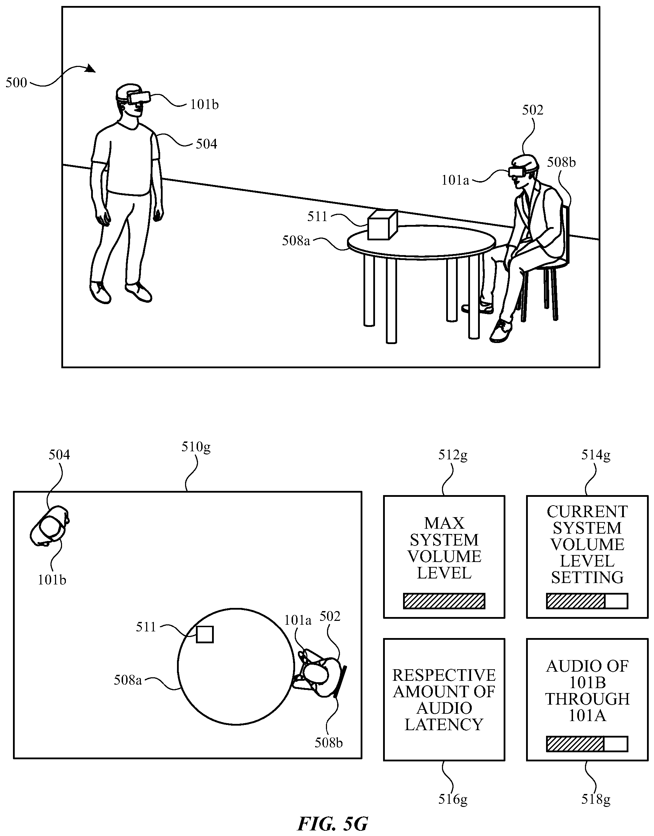

In some examples, electronic device 101a amplifies and/or otherwise assists in presentation of audio that it receives from electronic device 101a based on a distance between electronic devices 101a/101b. For example, FIG. 5G illustrates electronic device 101a amplifying audio signals detected at electronic device 101b, as shown with glyph 518g. Glyph 518g is provided for illustrating that some amount of audio transmitted from electronic device 101b is being amplified at electronic device 101a to be heard by user 502 of electronic device 101a. In some examples, electronic device 101a of FIG. 5G amplifies audio signals transmitted from electronic device 101b because electronic device 101a detects that a distance between electronic devices 101a/101b is more than a threshold distance (e.g., the threshold distance described above). As such, electronic device 101a optionally smartly determines whether or not to amplify audio signal transmitted from electronic device 101b based on a distance between electronic devices 101a/101b, and thus conserves computing resources and power that would be emitted in the process of amplifying and presenting audio signal transmitted from electronic device 101b.

In some examples, a first electronic device that is collocated in a multi-user communication session with a second electronic device, and the first electronic device amplifies audio based on user focus. For example, if the multi-user communication session includes a first real or virtual element associated with a first audio component and a second real or virtual element associated with a second audio component, and the first electronic device detects that user focus (e.g., gaze) is directed to the first real or virtual element in the multi-user communication session, then the first electronic device optionally amplifies the first audio component relative to the second audio component in the multi-user communication session. Continuing with this example, if the first electronic device detects that user focus is directed to the second real or virtual element in the multi-user communication session, then the first electronic device optionally amplifies the second audio component relative to the first audio component.

In some examples, an electronic device that is collocated in a multi-user communication session with another electronic device initiates a process to synchronize audio clocks with the other electronic device. In some examples, an electronic device that is collocated in a multi-user communication session with another electronic device synchronizes audio clocks by buffering audio received from non-collocated users in the multi-user communication session so that the received audio can be presented via the respective collocated electronic devices at the same time (and/or within 1 s, 0.1 s, 0.05 s, 0.001 s, or another time of the same time). For example, if a multi-user communication session includes a first user of a first electronic device who is collocated with a second user of a second electronic device and includes a third user of a third electronic device who is non-collocated relative to the first and second users, then first electronic device optionally buffers audio transmitted from (and/or detected at) the third electronic device to align presentation of audio it receives from the third electronic device with presentation at the second electronic device.

It is understood that the examples shown and described herein are merely exemplary and that additional and/or alternative elements may be provided within the three-dimensional environment for interacting with the illustrative content. It should be understood that the appearance, shape, form and size of each of the various user interface elements and objects shown and described herein are exemplary and that alternative appearances, shapes, forms and/or sizes may be provided. For example, the virtual objects representative of application windows (e.g., virtual objects 330, 435, 535 and 537) may be provided in an alternative shape than a rectangular shape, such as a circular shape, triangular shape, etc. Additionally or alternatively, in some examples, the various options, user interface elements, control elements, etc. described herein may be selected and/or manipulated via user input received via one or more separate input devices in communication with the electronic device(s). For example, selection input may be received via physical input devices, such as a mouse, trackpad, keyboard, etc. in communication with the electronic device(s).

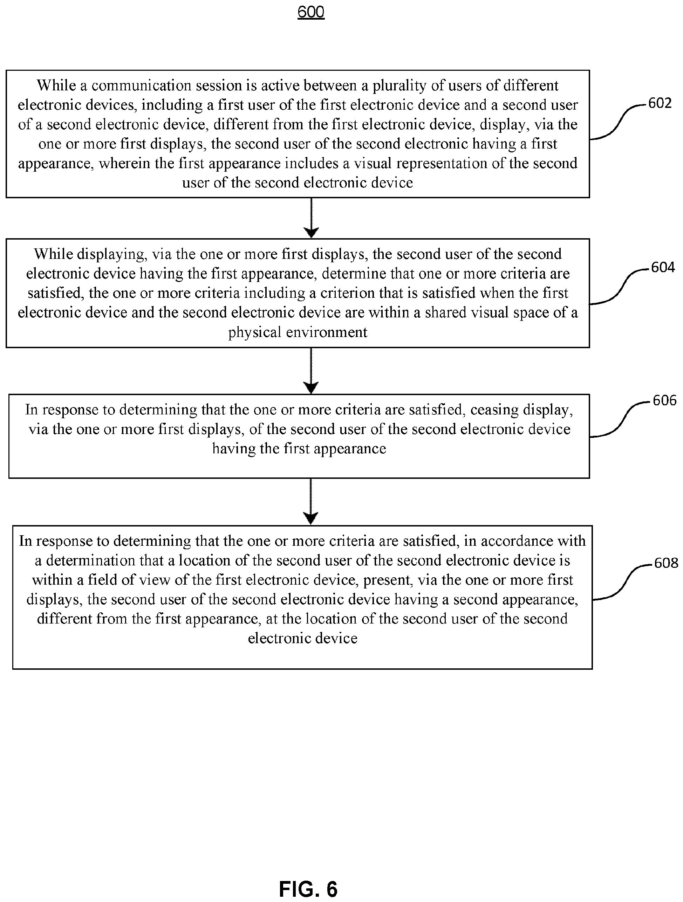

FIG. 6 is a flow diagram illustrating a method 600 for changing a mode of visual representation of a user in a multi-user communication session in response to detecting that the user changes from being a non-collocated user in the multi-user communication session to a collocated user in the multi-user communication session according to some examples of the disclosure. It is understood that method 600 is an example and that more, fewer, or different operations can be performed in the same or in a different order. Additionally, the operations in method 600 described below are, optionally, implemented by running one or more functional modules in an information processing apparatus such as general-purpose processors (e.g., as described with respect to FIG. 2) or application specific chips, and/or by other components of FIG. 2.

Therefore, according to the above, some examples of the disclosure are directed to a method (e.g., method 600 of FIG. 6) comprising, at a first electronic device (e.g., electronic device 101a of FIG. 4A) in communication with one or more first displays, one or more first input devices, and one or more first output devices (e.g., one or more first audio output devices), while a communication session is active between a plurality of users of different electronic devices, including a first user of the first electronic device and a second user of a second electronic device, different from the first electronic device, such as the multi-user communication session described with reference to FIGs. 4A-4H including user 402 of electronic device 101a and user 404 of electronic device 101b, displaying (602 in FIG. 6), via the one or more first displays, the second user of the second electronic having a first appearance, wherein the first appearance includes a visual representation of the second user of the second electronic device, such as electronic device 101a displaying spatial avatar 405a of user 406 in FIG. 4A, while displaying, via the one or more first displays, the second user of the second electronic device having the first appearance, determining (604 in FIG. 6) that one or more criteria are satisfied, the one or more criteria including a criterion that is satisfied when the first electronic device and the second electronic device are within a shared visual space of a physical environment, such as user 406 of electronic device 101c being collocated with user 402 of electronic device 101a as shown in FIG. 4D, and in response to determining that the one or more criteria are satisfied, ceasing displaying (606 in FIG. 6), via the one or more first displays, the second user of the second electronic device having the first appearance, such as shown with electronic device 101a no longer displaying spatial avatar 405a of user 406 in FIG. 4D, and in accordance with a determination that a location of the second user of the second electronic device is within a field of view of the first electronic device, presenting (608 in FIG. 6), via the one or more first displays, the second user of the second electronic device having a second appearance, different from the first appearance, at the location of the second user of the second electronic device, such as shown with electronic device 101a presenting via passthrough user 406 in FIG. 4D. As such, in some examples, an appearance of a user in a multi-user communication session is changed in response to detecting that the user transitions from being in the multi-user communication session as a remote user to a collocated user.

Additionally or alternatively, in some examples, the visual representation of the second user of the second electronic device is a two-dimensional representation of the second user of the second electronic device that is displayed in a window of a user interface, such as representation 405b of user 406 in FIG. 4C.

Additionally or alternatively, in some examples, the visual representation of the second user of the second electronic device is a three-dimensional representation of the second user of the second electronic device, such as spatial avatar 405a of user 406 in FIG. 4A.

Additionally or alternatively, in some examples, the visual representation of the second user of the second electronic device is a three-dimensional representation of the second user of the second electronic device, such as spatial avatar 405a of user 406 in FIG. 4G, wherein while displaying the three-dimensional representation of the second user of the second electronic device, a number of users of electronic devices that are within the shared visual space of the physical environment and in the communication session is less than a threshold number of users of electronic devices (e.g., the threshold described with reference to FIGs. 4G and 4H) that are within the shared visual space of the physical environment in the communication session, such as the user 402 of electronic device 101a and the user 404 of electronic device 101b in FIG. 4G, and the method 600 further comprises while displaying the second user of the second electronic device having the first appearance, detecting, via the one or more first input devices, a change in the number of users of electronic devices that are within the shared visual space of the physical environment and in the communication session to more than the threshold number of users of electronic devices that are within the shared visual space of the physical environment in the communication session, such as user 402 of electronic device 101a, the user 404 of electronic device 101b, and user 427 of electronic device 101d in FIG. 4H, and in response to detecting the change in the number of users of electronic devices that are within the shared visual space of the physical environment in the communication session to more than the threshold number of users of electronic devices that are within the shared visual space of the physical environment and in the communication session, changing the visual representation of the second user of the second electronic device from the three-dimensional representation of the second user of the second electronic device to a two-dimensional representation of the second user of the second electronic device, including displaying, via the one or more first displays, the two-dimensional representation of the second user of the second electronic device in a window of a user interface, such as shown with the transition from displaying spatial avatar 405a of user 406 of electronic device 101c to representation 405b of user 406 of electronic device 101c.

Additionally or alternatively, in some examples, the one or more criteria further includes a criterion that is satisfied when the first electronic device and the second electronic device are connected to the same wireless local area network.

Additionally or alternatively, in some examples, the one or more criteria further includes a criterion that is satisfied when image data captured by one or more first image capture devices in communication with the first electronic device includes image data of the second electronic device, such as external image sensors of electronic device 101a in FIG. 4D detecting image data of electronic device 101c.

Additionally or alternatively, in some examples, the one or more criteria further includes a criterion that is satisfied when audio data detected by one or more first microphones in communication with the first electronic device is also detected by one or more second microphones in communication with the second electronic device, such as microphones of electronic device 101a in FIG. 4D detecting audio data in physical environment 400 that is also detected by electronic device 101c in FIG. 4D.

Additionally or alternatively, in some examples, the one or more criteria further include a criterion that is satisfied when a first contextual mapping of a physical environment of the first electronic device at least partially overlaps with a second contextual mapping of a physical environment of the second electronic device, such as described with reference to SLAM maps above and/or such as external image sensors of electronic device 101a in FIG. 4D detecting image data of physical environment 400 in FIG. 4D and external image sensors of electronic device 101c in FIG. 4D detecting image data of physical environment 400 in FIG. 4D electronic device 101c. Additionally or alternatively, in some examples, the first electronic device or the second electronic device detected the at least partial overlapping of the first contextual mapping of the physical environment of the first electronic device with the second contextual mapping of the physical environment of the second electronic device.

Additionally or alternatively, in some examples, the method 600 further comprises after presenting the second user of the second electronic device having the second appearance at the location of the second user of the second electronic device, detecting, via the one or more first input devices, that the one or more criteria are no longer satisfied, such as the user 406 of electronic device 101c walking out of physical environment 400 in FIG. 4D, and in response to detecting that the one or more criteria are no longer satisfied, displaying, via the one or more first displays, the second user of the second electronic device having the first appearance, such as the spatial avatar 405a of user 406 in FIG. 4E or the representation 405b in FIG. 4F.

Additionally or alternatively, in some examples, the method 600 further comprises detecting, via the one or more first input devices, a request to display, via the one or more first displays, shared virtual content in the communication session, and in response to detecting the request to display the shared virtual content in the communication session, displaying, via the one or more first displays, the shared virtual content at a first location in a three-dimensional environment relative to the first user of the first electronic device, such as shared content 409 in FIG. 4A, and in accordance with a determination that the one or more criteria are satisfied, initiating a process to cause the shared virtual content to be displayed via one or more second displays in communication with the second electronic device at the first location in the three-dimensional environment relative to the second user of the second electronic device, such as shared content 409 in FIG. 4A being displayed by electronic device 101c in a three-dimensional environment visible to user 406 by way of electronic device 101c.

Additionally or alternatively, in some examples, a three-dimensional environment displayed, via the one or more first displays, includes shared virtual content of the communication session, such as shared virtual content 409 in FIG. 4A.

Additionally or alternatively, in some examples, the communication session was activated in response to a request to display shared virtual content in the communication session, such as in response to electronic device 101a requesting for shared virtual content 409 of FIG. 4A to be shared in a multi-user communication session that includes user 404 of electronic device 101b and user 406 of electronic device 101c.

Additionally or alternatively, in some examples, the method 600 further comprises while displaying, via the one or more first displays, the second user of the second electronic device having the first appearance, such as spatial avatar 405a in FIG. 4A, presenting, via the one or more first audio output devices, audio detected by one or more second input devices in communication with the second electronic device, such as electronic device 101a presenting audio captured by one or more microphones of electronic device 101c in FIG. 4A, and in response to determining that the one or more criteria are satisfied, ceasing presenting, via the one or more first audio output devices, the audio detected by the one or more second input devices in communication with the second electronic device. For example, from FIG. 4A to FIG. 4D, the one or more criteria are optionally satisfied, and in response, in FIG. 4D, electronic device ceases presenting via speakers of electronic device 101a audio detected by microphones of electronic device 101c.

Additionally or alternatively, in some examples, the shared virtual content is displayed via the one or more first displays in the communication session, such as shared virtual content 409 in FIG. 4A, and the shared virtual content of the communication session includes an audio component. For example, the shared virtual content 409 is a movie including a user interface showing a visual component of the movie and including audio associated with the movie. Additionally or alternatively, in some examples, the method 600 further comprises while presenting, via the one or more first audio output devices, the audio component of the shared virtual content of the communication session, in accordance with a determination that the one or more criteria are satisfied, forgoing presenting, via the one or more first audio output devices, audio detected by the one or more second input devices in communication with the second electronic device, such as forgoing presenting via the first audio output devices an audio effect corresponding to a voice of electronic device 101c, which is collocated with electronic device 101a in FIG. 4D, in accordance with a determination that the one or more criteria are not satisfied, presenting, via the one or more first audio output devices, the audio detected by the one or more second input devices in communication with the second electronic device, such as presenting via the first audio output devices the audio effect corresponding to a voice of electronic device 101c, which is not collocated with electronic device 101a in FIG. 4A.

Additionally or alternatively, in some examples, the method 600 further comprises in response to detecting that the one or more criteria are satisfied, in accordance with a determination that the second position of the second user of the second electronic device is not within a field of view of the first electronic device, forgoing presenting, via the one or more first displays, the second user of the second electronic device having the second appearance at the location of the second user of the second electronic device relative to the location of the first user of the first electronic device. For example, if user 404 of electronic device 101c was not in a field of view of electronic device 101a (e.g., if user 402 of electronic device 101a was not looking toward electronic device 101c in FIG. 4D, but instead looking away from electronic device 101c (e.g., opposite the direction of looking toward electronic device 101c in FIG. 4D), then user 406 of electronic device 101c, though collocated with electronic device 101a is optionally not visible via display 120a (e.g., until user 406 of electronic device 101c is in a field of view of electronic device 101a).

Some examples of the disclosure are directed to a first electronic device comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of a first electronic device, cause the first electronic device to perform any of the above methods.

Some examples of the disclosure are directed to a first electronic device, comprising one or more processors, memory, and means for performing any of the above methods.

Some examples of the disclosure are directed to an information processing apparatus for use in a first electronic device, the information processing apparatus comprising means for performing any of the above methods.

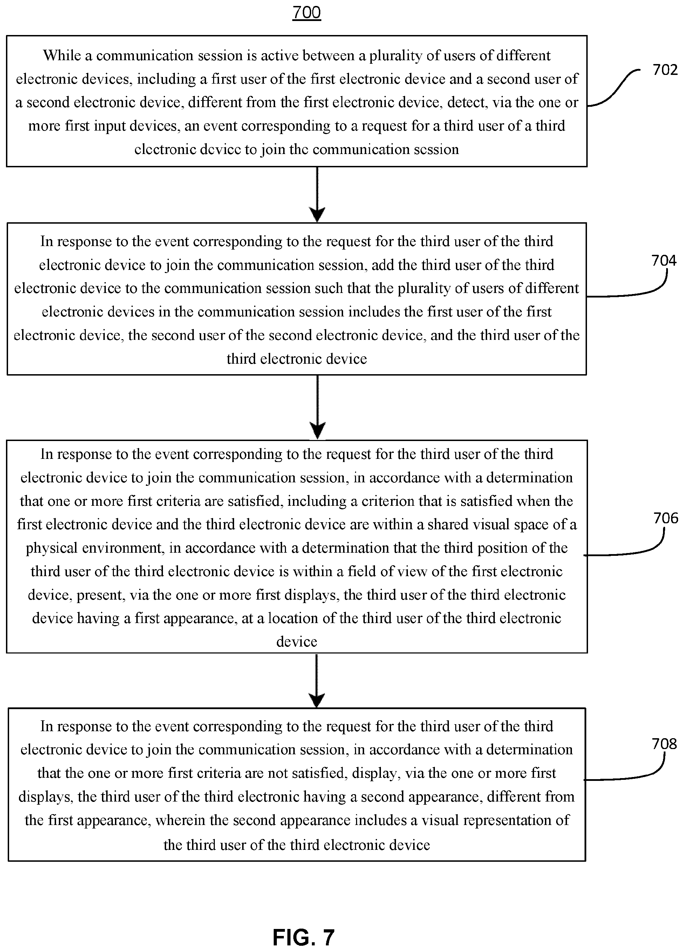

FIG. 7 is a flow diagram illustrating a method 700 for determining a mode of visual representation of a user of an electronic device that is joined into a multi-user communication session that is already active between users of other electronic devices, according to some examples of the disclosure. It is understood that method 700 is an example and that more, fewer, or different operations can be performed in the same or in a different order. Additionally, the operations in method 700 described below are, optionally, implemented by running one or more functional modules in an information processing apparatus such as general-purpose processors (e.g., as described with respect to FIG. 2) or application specific chips, and/or by other components of FIG. 2.

Therefore, according to the above, some examples of the disclosure are directed to a method (e.g., method 700 of FIG. 7) comprising, at a first electronic device (e.g., electronic device 101a of FIG. 4I) in communication with one or more first displays, one or more first input devices, and one or more first output devices (e.g., one or more first audio output devices), while a communication session is active between a plurality of users of different electronic devices, including a first user of the first electronic device and a second user of a second electronic device, different from the first electronic device, detecting (702 in FIG. 7), via the one or more first input devices, an event corresponding to a request for a third user of a third electronic device to join the communication session, such as an event that causes display of message element 420 in FIG. 4I and/or selection of first potion 421 in FIG. 4I, and in response to the event corresponding to the request for the third user of the third electronic device to join the communication session, adding (704 in FIG. 7) the third user of the third electronic device to the communication session such that the plurality of users of different electronic devices in the communication session includes the first user of the first electronic device, the second user of the second electronic device, and the third user of the third electronic device, such as adding user 427 of electronic device 101d into a multi-user communication session that was between user 402 of electronic device 101a, user 404 of electronic device 101b, and user 406 of electronic device 10c, and in accordance with a determination that one or more first criteria are satisfied, including a criterion that is satisfied when the first electronic device and the third electronic device are within a shared visual space of a physical environment, such as user 427 of electronic device 101d being collocated with user 402 of electronic device 101a as shown in FIG. 4N, in accordance with a determination that the third position of the third user of the third electronic device is within a field of view of the first electronic device, presenting (706 in FIG. 7), via the one or more first displays, the third user of the third electronic device having a first appearance, at a location of the third user of the third electronic device, such as shown with user 427 of electronic device 101d being presented via optical passthrough by electronic device 101a, and in accordance with a determination that the one or more first criteria are not satisfied, displaying (708 in FIG. 7), via the one or more first displays, the third user of the third electronic having a second appearance, different from the first appearance, wherein the second appearance includes a visual representation of the third user of the third electronic device, such as spatial avatar 429a or representation 429b of user 427 of electronic device 101d in FIG. 4J or 4K.

Additionally or alternatively, in some examples, when the event is detected, the communication session is solely between electronic devices that are within a shared visual space of the physical environment, such as a multi-user communication session being solely between user 402-406 of electronic devices 101a-101c in FIG. 4I, which are collocated in the illustrated example.

Additionally or alternatively, in some examples, when the event is detected, the communication session is solely between electronic devices that are not within the shared visual space of the physical environment. For example, in FIG. 4I, the event optionally corresponds to a request to add user 404 of electronic device 101b to an active multi-user communication session and when the event is detected, the active multi-user communication session is optionally only between user 402 of electronic device 101a and user 427 of electronic device 101d, without including user 4024 of electronic device 101b and user 406 of electronic device 101c, which are in the same physical environment as electronic device 101a in FIG. 4I.

Additionally or alternatively, in some examples, the visual representation of the third user of the third electronic device is a two-dimensional representation of the third user of the second electronic device that is displayed in a window of a user interface, such as representation 429b of user 427 of electronic device 101d in FIG. 4K.

Additionally or alternatively, in some examples, the visual representation of the third user of the third electronic device is a three-dimensional representation of the third user of the second electronic device, such as spatial avatar 429a of user 427 of electronic device 101d in FIG. 4J.

Additionally or alternatively, in some examples, the one or more criteria further includes a criterion that is satisfied when the first electronic device and the third electronic device are connected to the same wireless local area network.

Additionally or alternatively, in some examples, the one or more criteria further includes a criterion that is satisfied when image data captured by one or more first image capture devices in communication with the first electronic device includes image data of the third electronic device.

Additionally or alternatively, in some examples, the one or more criteria further includes a criterion that is satisfied when audio data detected by one or more first microphones in communication with the first electronic device is also detected by one or more second microphones in communication with the third electronic device.

Additionally or alternatively, in some examples, the one or more criteria further includes a criterion that is satisfied when a first contextual mapping of a physical environment of the first electronic device at least partially overlaps with a second contextual mapping of a physical environment of the third electronic device.

Additionally or alternatively, in some examples, the first electronic device or the third electronic device detected the at least partial overlapping of the first contextual mapping of the physical environment of the first electronic device with the second contextual mapping of the physical environment of the third electronic device.

Additionally or alternatively, in some examples, method 700 comprises after presenting the third user of the third electronic device having the first appearance at the location of the third user of the electronic device, determining that the one or more criteria are no longer satisfied, and in response to determining that the one or more criteria are no longer satisfied, displaying, via the one or more first displays, the third user of the third electronic device having the second appearance, such as described above with reference to examples of method 600.

Additionally or alternatively, in some examples, in accordance with a determination that the one or more criteria are not satisfied, in accordance with a determination that a location of the third user of the third electronic device in a physical environment of the third electronic device is a first remote location, the visual representation of the third user of the third electronic device is displayed at a first location, and in accordance with a determination that the location of the third user of the third electronic device is a second remote location, different from the first remote location, in the physical environment of the third electronic device, the visual representation of the third user of the third electronic device is displayed at the first location, such as described with reference to FIGs. 4A-4B.

Additionally or alternatively, in some examples, in accordance with a determination that a number of the plurality of users of different electronic devices that are within the shared visual space of the physical environment is at least a threshold number, the visual representation of the third user of the third electronic device is a two-dimensional representation of the second user of the second electronic device, and in accordance with a determination that the number of the plurality of users of different electronic that are within the shared visual space of the physical environment is less than the threshold number, the visual representation of the third user of the third electronic device is a three-dimensional representation of the second user of the second electronic device, such as described above with reference to examples of method 600 and/or FIGs. 4G-4H.

Additionally or alternatively, in some examples, the one or more first output devices includes one or more first audio output devices, and method 700 comprises in accordance with a determination that the one or more first criteria are not satisfied, presenting, via the one or more audio output devices, audio detected by one or more third input devices in communication with the third electronic device, and in accordance with a determination that the one or more first criteria are satisfied, forgoing presenting, via the one or more audio output devices, the audio detected by one or more third input devices in communication with the third electronic device, such as described above with reference to examples of method 600.

Additionally or alternatively, in some examples, the one or more first displays include a head-mounted display system and the one or more audio output devices are worn by the first user of the first electronic device, such as described above with reference to examples of method 600.

Some examples of the disclosure are directed to a first electronic device comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of a first electronic device, cause the first electronic device to perform any of the above methods.

Some examples of the disclosure are directed to a first electronic device, comprising one or more processors, memory, and means for performing any of the above methods.

Some examples of the disclosure are directed to an information processing apparatus for use in a first electronic device, the information processing apparatus comprising means for performing any of the above methods.

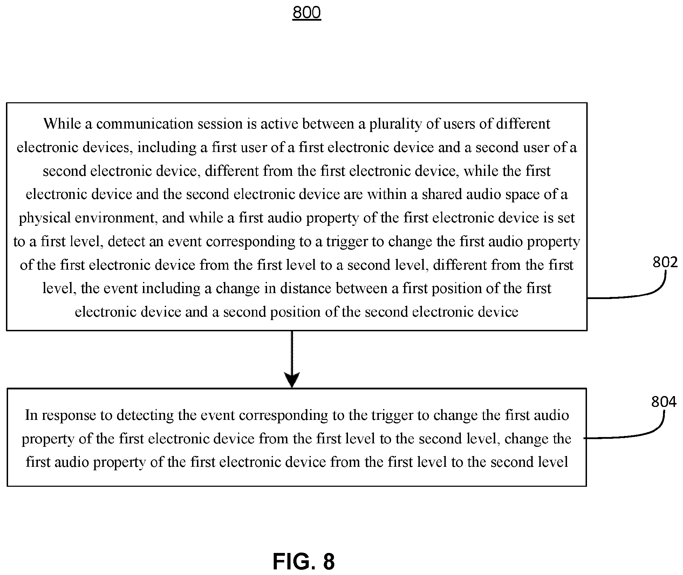

FIG. 8 is a flow diagram illustrating a method 800 for changing a level of a first audio property of a first electronic device that is collocated with a second electronic device in a multi-user communication session according to some examples of the disclosure. One or more examples of method 800 are illustrated and/or described above with reference to one or more of FIGs. 5A-5H. It is understood that method 800 is an example and that more, fewer, or different operations can be performed in the same or in a different order. Additionally, the operations in method 800 described below are, optionally, implemented by running one or more functional modules in an information processing apparatus such as general-purpose processors (e.g., as described with respect to FIG. 2) or application specific chips, and/or by other components of FIG. 2.

Therefore, according to the above, some examples of the disclosure are directed to a method (e.g., method 800 of FIG. 8) comprising, at a first electronic device (e.g., electronic device 101a of FIG. 4I) in communication with one or more first displays, one or more first input devices, and one or more first audio output devices, while a communication session is active between a plurality of users of different electronic devices, including a first user of the first electronic device (e.g., user 502 of electronic device 101a in FIG. 5A) and a second user of a second electronic device (e.g., user 504 of electronic device 101b in FIG. 5A), different from the first electronic device, while the first electronic device and the second electronic device are within a shared audio space of a physical environment (e.g., physical environment 500 in FIG. 5A), and while a first audio property of the first electronic device is set to a first level (e.g., glyph 512a of FIG. 5A indicating a maximum volume of electronic device 101a being set to a first level), detecting (802 in FIG. 8), an event corresponding to a trigger to change the first audio property of the first electronic device from the first level to a second level, different from the first level, the event including a change in distance between a first position of the first electronic device and a second position of the second electronic device, such as the decrease in distance between electronic devices 101a/101b from FIG. 5A to 5B, and in response to detecting the event corresponding to the trigger to change the first audio property of the first electronic device from the first level to the second level, changing (804 in FIG. 8) the first audio property of the first electronic device from the first level to the second level, such as glyph 512b of FIG. 5B indicating a maximum volume of electronic device 101a being set to a second level less than the first level in FIG. 5A in response to the change of distance from FIG. 5A to 5B.

Additionally or alternatively, in some examples, while the first electronic device and the second electronic device are within the shared audio space of the physical environment, audio data detected by one or more first microphones in communication with the first electronic device is also detected by one or more second microphones in communication with the second electronic device, such as described with reference to microphones of electronic device 101a detecting audio sourced from user 504 (e.g., the voice of the user 504) of electronic device 101b, which is also detecting audio sourced from user 504 of electronic device 101b via microphones of electronic device 101b.

Additionally or alternatively, in some examples, the first audio property is a system volume level of the first electronic device, such as the current volume level of electronic device 101a, as indicated by glyphs 514b and 514c, decreasing in accordance with the change of distance between electronic devices 101a/101b from FIGs. 5B to 5C.

Additionally or alternatively, in some examples, the first audio property is a maximum system volume level of the first electronic device, such as the maximum volume level of electronic device 101a, as indicated by glyphs 512b and 512c, decreasing in accordance with the change of distance between electronic devices 101a/101b from FIGs. 5B to 5C.

Additionally or alternatively, in some examples, the first audio property further is a maximum system volume level for the second electronic device, such that while the first audio property of the first electronic device is set to the first level, the first audio property of the second electronic is set to the first level. Additionally or alternatively, in some examples, method 800 further comprises in response to detecting the event corresponding to the trigger to change the first audio property of the first electronic device from the first level to the second level, initiating a process to cause the second electronic device to change the first audio property of the second electronic device from the first level to the second level. For example, in FIGs. 5A-5H, glyphs 512a-512h are optionally correspond to the maximum volume level setting for electronic devices 101a/101b. As another example, when electronic device 101a detects the change of distance between electronic devices 101a/101b, electronic device 101a optionally transmits a signal to electronic device 101b to cause electronic device 101b to change the level of the audio property at electronic device 101b, such as to cause the maximum allowable volume level of electronic device 101b to be the same as the maximum allowable volume level of electronic device 101a, based on the distance between electronic devices 101a/101b. As such, the maximum volume level for both electronic devices 101a/101b is optionally adjusted in response to a change in distance between electronic devices 101a//101b. Further, in some examples, user 504 and electronic device 101b of FIGs. 5A-5H are representative of one or more users and electronic devices that are collocated with user 502 of electronic device 101a, and the maximum volume level for all of the collocated electronic devices in the multi-user communication session could change based on the change in distance between two or more (or all) of the collocated electronic devices.

Additionally or alternatively, in some examples, the first level is greater than the second level, such as shown from glyph 512a in FIG. 5A to glyph 512a in FIG. 5B.

Additionally or alternatively, in some examples, the second level is greater than the first level. For example, in response to electronic device 101a an increase in distance between electronic devices 101a/101b, such as electronic devices 101a/101b being located at their respective positions in FIG. 5B to being located at their respective positions in FIG. 5A, electronic device 101a optionally increase the maximum volume level of electronic device 101a to its level illustrated in glyph 512a in FIG. 5A. In some examples, electronic device 101a increases the current volume level of electronic device 101a based on increases in distances between electronic devices 101a/101b.

Additionally or alternatively, in some examples, in accordance with a determination that the change in distance between the first position of the first electronic device and the second position of the second electronic device is a first amount of change in distance, a difference between the first level and the second level of the first audio property is a first amount of difference, and in accordance with a determination that the change in distance between the first position of the first electronic device and the second position of the second electronic device is a second amount of change in distance, different from the first amount of change in distance, the difference between the first level and the second level of the first audio property is a second amount of difference, different from the first amount of difference, such as described herein above.

Additionally or alternatively, in some examples, in accordance with a determination that the change in distance corresponds to a decrease in distance between the first position of the first electronic device and the second position of the second electronic device, the second level of the audio property is less than the first level of the first audio property, and in accordance with a determination that the change in distance corresponds to an increase in distance between the first position of the first electronic device and the second position of the second electronic device, the second level of the audio property is greater than the first level of the first audio property.

Additionally or alternatively, in some examples, the second level of the first audio property of the first electronic device is based on an audio latency between the first electronic device and the second electronic device, such as described with reference to FIGs. 5A-5C and 5D-5F.

Additionally or alternatively, in some examples, in accordance with a determination that an amount of audio latency between the first electronic device and the second electronic device is a first amount, a difference in level between the second level and the first level of the first audio property of the first electronic device is a first respective difference in amount, and in accordance with a determination that the amount of audio latency between the first electronic device and the second electronic device is a second amount, different from the first amount, a difference in level between the second level and the first level of the first audio property of the first electronic device is a second respective difference in amount, different from the first respective difference in amount, such as described with reference to FIGs. 5A-5C and 5D-5F.

Additionally or alternatively, in some examples, the first electronic device presents, via the one or more first audio output devices, an audio component of the communication session, and the first audio property is a maximum system volume level of the first electronic device, when the event corresponding to the trigger to change the first audio property of the first electronic device from the first level to the second level is detected, the audio component of the communication session is presented via the one or more first audio output devices at a first volume level, and the audio component of the communication session continues to be presented via the one or more first audio output devices at the first volume level in response to detecting the event corresponding to the trigger to change the first audio property of the first electronic device from the first level to the second level, such as described with reference to glyphs 514a/514b in FIGs. 5A and 5B.

Additionally or alternatively, in some examples, the first electronic device presents, via the one or more first audio output devices, an audio component of the communication session, the first audio property is a maximum system volume level of the first electronic device, when the event corresponding to the trigger to change the first audio property of the first electronic device from the first level to the second level is detected, the audio component of the communication session is being presented at a first volume level, and method 800 further comprises in response to detecting the event corresponding to the trigger to change the first audio property of the first electronic device from the first level to the second level, presenting, via the one or more audio output devices, the audio component of the communication session at a second volume level different from the first volume level, such as described with reference to glyphs 514b/514c in FIGs. 5B and 5C.

Additionally or alternatively, in some examples, the first audio property of the first electronic device is a maximum volume level (e.g., glyph 512a in FIG. 5A), and method 800 further comprises while the first audio property of the first electronic device is set to a first respective level, detecting a second event corresponding to a request to display shared virtual content in the communication session, wherein the shared virtual content is associated with an audio component, such as electronic device 101a detecting a request to display shared content 511 of the multi-user communication session, and shared content 511 corresponding to a movie, and in response to detecting the second event corresponding to the request to display the shared virtual content in the communication session, displaying, via the one or more first displays, the shared virtual content, such as electronic device 101a displaying in the viewpoint of the user 502 the movie, setting the first audio property of the first electronic device to a second respective level, different from the first respective level, relative to the audio component of the shared virtual content, such as electronic device 101a setting glyph 512a to the illustrated level or a second level different from the illustrated level based on the detection of playback of a movie in the multi-user communication session (and/or optionally in addition to being based on the distance between electronic devices 101a/101b), and presenting, via the one or more first audio output devices, the audio component associated with the shared virtual content at a respective volume level that is no greater than the second respective level.

Additionally or alternatively, in some examples, in accordance with a determination that a distance between the first position of the first electronic device and the second position of the second electronic device is above a threshold distance, presenting, via the one or more first audio output devices, audio detected by one or more second microphones in communication with the second electronic device, such as shown and described with reference to glyph 518g of FIG. 5G, and in accordance with a determination that the distance between the first position of the first electronic device and the second position of the second electronic device is less than the threshold distance, forgoing presenting, via the one or more first audio output devices, audio detected by the one or more second microphones in communication with the second electronic device, such as shown and described with reference to glyph 518h of FIG. 5H.

Additionally or alternatively, in some examples, the one or more first displays include a head-mounted display system and the one or more audio output devices are worn by the first user of the first electronic device, such as described above with reference to examples of method 600.

Some examples of the disclosure are directed to a first electronic device comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of a first electronic device, cause the first electronic device to perform any of the above methods.

Some examples of the disclosure are directed to a first electronic device, comprising one or more processors, memory, and means for performing any of the above methods.

Some examples of the disclosure are directed to an information processing apparatus for use in a first electronic device, the information processing apparatus comprising means for performing any of the above methods.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the disclosure and its practical applications, to thereby enable others skilled in the art to best use the disclosure and various described examples with various modifications as are suited to the particular use contemplated.

### NUMBERED STATEMENTS OF INVENTION

1. A method comprising:
   at a first electronic device in communication with one or more first displays, one or more first input devices, and one or more first output devices:
   while a communication session is active between a plurality of users of different electronic devices, including a first user of the first electronic device and a second user of a second electronic device, different from the first electronic device:
      displaying, via the one or more first displays, the second user of the second electronic having a first appearance, wherein the first appearance includes a visual representation of the second user of the second electronic device;
   while displaying, via the one or more first displays, the second user of the second electronic device having the first appearance:
      determining that one or more criteria are satisfied, the one or more criteria including a criterion that is satisfied when the first electronic device and the second electronic device are within a shared visual space of a physical environment; and
   in response to determining that the one or more criteria are satisfied:
      ceasing displaying, via the one or more first displays, the second user of the second electronic device having the first appearance; and
      in accordance with a determination that a location of the second user of the second electronic device is within a field of view of the first electronic device:
         presenting, via the one or more first displays, the second user of the second electronic device having a second appearance, different from the first appearance, at the location of the second user of the second electronic device.
2. The method of statement 1, wherein the visual representation of the second user of the second electronic device is a two-dimensional representation of the second user of the second electronic device that is displayed in a window of a user interface.
3. The method of statement 1, wherein the visual representation of the second user of the second electronic device is a three-dimensional representation of the second user of the second electronic device.
4. The method of statement 1, wherein the visual representation of the second user of the second electronic device is a three-dimensional representation of the second user of the second electronic device, wherein while displaying the three-dimensional representation of the second user of the second electronic device, a number of users of electronic devices that are within the shared visual space of the physical environment and in the communication session is less than a threshold number of users of electronic devices that are within the shared visual space of the physical environment in the communication session, and the method further comprising:
   while displaying the second user of the second electronic device having the first appearance:
      detecting, via the one or more first input devices, a change in the number of users of electronic devices that are within the shared visual space of the physical environment and in the communication session to more than the threshold number of users of electronic devices that are within the shared visual space of the physical environment in the communication session; and
   in response to detecting the change in the number of users of electronic devices that are within the shared visual space of the physical environment in the communication session to more than the threshold number of users of electronic devices that are within the shared visual space of the physical environment and in the communication session:
      changing the visual representation of the second user of the second electronic device from the three-dimensional representation of the second user of the second electronic device to a two-dimensional representation of the second user of the second electronic device, including displaying, via the one or more first displays, the two-dimensional representation of the second user of the second electronic device in a window of a user interface.
5. The method of any of statements 1-4, wherein the plurality of users includes a third user of a third electronic device, different from the first electronic device and the second electronic device, that is displayed with the second appearance, wherein the visual representation of the second user of the second electronic device is a three-dimensional representation of the second user of the second electronic device, and wherein the three-dimensional representation of the second user of the second electronic device is concurrently displayed with a selectable option that is selectable to control a spatial state associated with one or more users of the plurality of users that satisfy the one or more criteria, the method further comprising:
   while concurrently displaying the second user of the second electronic device having the first appearance, the third user of the third electronic device having the second appearance, and the selectable option, detecting an indication of a selection of the selectable option; and
   in response to detecting the indication of the selection of the selectable option:
      changing the visual representation of the second user of the second electronic device from the three-dimensional representation of the second user of the second electronic device to a two-dimensional representation of the second user of the second electronic device, including displaying, via the one or more first displays, the two-dimensional representation of the second user of the second electronic device in a window of a user interface, without changing an appearance of the third user of the third electronic device.
6. The method of statement 5, wherein detecting the indication of the selection of the selectable option includes detecting, via the one or more first input devices, a selection input directed to the selectable option provided by the first user.
7. The method of statement 5, wherein:
   the selectable option is further displayed by the third electronic device;
   detecting the indication of the selection of the selectable option includes receiving, from the third electronic device, input data indicating respective input provided by the third user corresponding to the selection of the selectable option that is detected by the third electronic device.
8. The method of any of statements 1-7, wherein the one or more criteria further includes a criterion that is satisfied when the first electronic device and the second electronic device are connected to the same wireless local area network.
9. The method of any of statements 1-8, wherein the one or more criteria further includes a criterion that is satisfied when image data captured by one or more first image capture devices in communication with the first electronic device includes image data of the second electronic device.
10. The method of any of statements 1-9, wherein the one or more first input devices includes one or more first microphones and wherein the one or more criteria further includes a criterion that is satisfied when audio data detected by the one or more first microphones is also detected by one or more second microphones in communication with the second electronic device.
11. The method of any of statements 1-10, wherein the one or more criteria further include a criterion that is satisfied when a first contextual mapping of a physical environment of the first electronic device at least partially overlaps with a second contextual mapping of a physical environment of the second electronic device.
12. The method of statement 11, wherein the first electronic device or the second electronic device detected the at least partial overlapping of the first contextual mapping of the physical environment of the first electronic device with the second contextual mapping of the physical environment of the second electronic device.
13. The method of any of statements 1-12, comprising:
   after presenting the second user of the second electronic device having the second appearance at the location of the second user of the second electronic device:
      detecting, via the one or more first input devices, that the one or more criteria are no longer satisfied; and
   in response to detecting that the one or more criteria are no longer satisfied:
      displaying, via the one or more first displays, the second user of the second electronic device having the first appearance.
14. The method of any of statements 1-13, comprising:
   detecting, via the one or more first input devices, a request to display, via the one or more first displays, shared virtual content in the communication session; and
   in response to detecting the request to display the shared virtual content in the communication session:
      displaying, via the one or more first displays, the shared virtual content at a first location in a three-dimensional environment relative to the first user of the first electronic device; and
      in accordance with a determination that the one or more criteria are satisfied, initiating a process to cause the shared virtual content to be displayed via one or more second displays in communication with the second electronic device at the first location in the three-dimensional environment relative to the second user of the second electronic device.
15. The method of any of statements 1-14, wherein a three-dimensional environment displayed, via the one or more first displays, includes shared virtual content of the communication session.
16. The method of any of statements 1-15, wherein the communication session was activated in response to a request to display shared virtual content in the communication session.
17. The method of any of statements 1-16, wherein the one or more first output devices includes one or more first audio output devices, and the method comprising:
   while displaying, via the one or more first displays, the second user of the second electronic device having the first appearance, presenting, via the one or more first audio output devices, audio detected by one or more second input devices in communication with the second electronic device; and
   in response to determining that the one or more criteria are satisfied, ceasing presenting, via the one or more first audio output devices, the audio detected by the one or more second input devices in communication with the second electronic device.
18. The method of any of statements 1-17, wherein the one or more first output devices includes one or more first audio output devices, wherein shared virtual content is displayed via the one or more first displays in the communication session, and the shared virtual content of the communication session includes an audio component, the method further comprising:
   while presenting, via the one or more first audio output devices, the audio component of the shared virtual content of the communication session:
      in accordance with a determination that the one or more criteria are satisfied, forgoing presenting, via the one or more first audio output devices, audio detected by the one or more second input devices in communication with the second electronic device; and
   in accordance with a determination that the one or more criteria are not satisfied, presenting, via the one or more first audio output devices, the audio detected by the one or more second input devices in communication with the second electronic device.
19. The method of any of statements 1-18, comprising:
   in response to detecting that the one or more criteria are satisfied:
   in accordance with a determination that the second position of the second user of the second electronic device is not within a field of view of the first electronic device:
   forgoing presenting, via the one or more first displays, the second user of the second electronic device having the second appearance at the location of the second user of the second electronic device relative to the location of the first user of the first electronic device.
20. The method of any of statements 1-19, wherein the one or more first displays include a head-mounted display system and the one or more output devices include one or more audio output devices, and wherein the head-mounted display system and the one or more audio output devices are worn by the first user of the first electronic device.
21. A first electronic device comprising:
   one or more processors;
   memory; and
   one or more programs stored in the memory and configured to be executed by the one or more processors, the one or more programs including instructions for performing the method of any of statements 1-20.
22. A non-transitory computer readable storage medium storing one or more programs, the one or more programs comprising instructions, which when executed by one or more processors of a first electronic device, cause the first electronic device to perform the method of any of statements 1-20.
23. A first electronic device, comprising:
   one or more processors;
   memory; and
   means for performing the method of any of statements 1-20.
24. An information processing apparatus for use in a first electronic device, the information processing apparatus comprising:
   means for performing the method of any of statements 1-20.
25. A method comprising:
   at a first electronic device in communication with one or more first displays, one or more first input devices, and one or more first output devices:
   while a communication session is active between a plurality of users of different electronic devices, including a first user of the first electronic device and a second user of a second electronic device, different from the first electronic device:
      detecting, via the one or more first input devices, an event corresponding to a request for a third user of a third electronic device to join the communication session; and
   in response to the event corresponding to the request for the third user of the third electronic device to join the communication session:
      adding the third user of the third electronic device to the communication session such that the plurality of users of different electronic devices in the communication session includes the first user of the first electronic device, the second user of the second electronic device, and the third user of the third electronic device; and
      in accordance with a determination that one or more first criteria are satisfied, including a criterion that is satisfied when the first electronic device and the third electronic device are within a shared visual space of a physical environment:
         in accordance with a determination that the third position of the third user of the third electronic device is within a field of view of the first electronic device:
         presenting, via the one or more first displays, the third user of the third electronic device having a first appearance, at a location of the third user of the third electronic device; and
      in accordance with a determination that the one or more first criteria are not satisfied:
         displaying, via the one or more first displays, the third user of the third electronic having a second appearance, different from the first appearance, wherein the second appearance includes a visual representation of the third user of the third electronic device.
26. The method of statement 25, wherein when the event is detected, the communication session is solely between electronic devices that are within the shared visual space of the physical environment.
27. The method of statement 25, wherein when the event is detected, the communication session is solely between electronic devices that are not within the shared visual space of the physical environment.
28. The method of any of statements 25-27, wherein the visual representation of the third user of the third electronic device is a two-dimensional representation of the third user of the third electronic device that is displayed in a window of a user interface.
29. The method of any of statements 25-27, wherein the visual representation of the third user of the third electronic device is a three-dimensional representation of the third user of the third electronic device.
30. The method of any of statements 25-29, wherein the one or more criteria further includes a criterion that is satisfied when the first electronic device and the third electronic device are connected to the same wireless local area network.
31. The method of any of statements 25-30, wherein the one or more criteria further includes a criterion that is satisfied when image data captured by one or more first image capture devices in communication with the first electronic device includes image data of the third electronic device.
32. The method of any of statements 25-31, wherein the one or more criteria further includes a criterion that is satisfied when audio data detected by one or more first microphones in communication with the first electronic device is also detected by one or more second microphones in communication with the third electronic device.
33. The method of any of statements 25-32, wherein the one or more criteria further includes a criterion that is satisfied when a first contextual mapping of a physical environment of the first electronic device at least partially overlaps with a second contextual mapping of a physical environment of the third electronic device.
34. The method of statement 33, wherein the first electronic device or the third electronic device detected the at least partial overlapping of the first contextual mapping of the physical environment of the first electronic device with the second contextual mapping of the physical environment of the third electronic device.
35. The method of any of statements 25-34, comprising:
   after presenting the third user of the third electronic device having the first appearance at the location of the third user of the electronic device:
      determining that the one or more criteria are no longer satisfied; and
   in response to determining that the one or more criteria are no longer satisfied:
      displaying, via the one or more first displays, the third user of the third electronic device having the second appearance.
36. The method of any of statements 25-35, wherein:
   in accordance with a determination that the one or more criteria are not satisfied:
   in accordance with a determination that a location of the third user of the third electronic device in a physical environment of the third electronic device is a first remote location, the visual representation of the third user of the third electronic device is displayed at a first location; and
   in accordance with a determination that the location of the third user of the third electronic device is a second remote location, different from the first remote location, in the physical environment of the third electronic device, the visual representation of the third user of the third electronic device is displayed at the first location.
37. The method of any of statements 25, 26, and 28-36, wherein:
   in accordance with a determination that a number of the plurality of users of different electronic devices that are within the shared visual space of the physical environment is at least a threshold number, the visual representation of the third user of the third electronic device is a two-dimensional representation of the third user of the third electronic device; and
   in accordance with a determination that the number of the plurality of users of different electronic that are within the shared visual space of the physical environment is less than the threshold number, the visual representation of the third user of the third electronic device is a three-dimensional representation of the third user of the third electronic device.
38. The method of any of statements 25-37, wherein the one or more first output devices includes one or more first audio output devices, and the method comprising:
   in accordance with a determination that the one or more first criteria are not satisfied, presenting, via the one or more audio output devices, audio detected by one or more third input devices in communication with the third electronic device; and
   in accordance with a determination that the one or more first criteria are satisfied, forgoing presenting, via the one or more audio output devices, the audio detected by one or more third input devices in communication with the third electronic device.
39. The method of any of statements 25-38, wherein the one or more first displays include a head-mounted display system and the one or more first output devices includes one or more first audio output devices, and wherein the head-mounted display system and the one or more first audio output devices are worn by the first user of the first electronic device.
40. A first electronic device comprising:
   one or more processors;
   memory; and
   one or more programs stored in the memory and configured to be executed by the one or more processors, the one or more programs including instructions for performing the method of any of statements 25-39.
41. A non-transitory computer readable storage medium storing one or more programs, the one or more programs comprising instructions, which when executed by one or more processors of a first electronic device, cause the first electronic device to perform the method of any of statements 25-39.
42. A first electronic device, comprising:
   one or more processors;
   memory; and
   means for performing the method of any of statements 25-39.
43. An information processing apparatus for use in a first electronic device, the information processing apparatus comprising:
   means for performing the method of any of statements 25-39.
44. A first electronic device comprising:
   one or more processors;
   memory; and
   one or more programs stored in the memory and configured to be executed by the one or more processors, the one or more programs including instructions for performing a method comprising:
      while a communication session is active between a plurality of users of different electronic devices, including a first user of the first electronic device and a second user of a second electronic device, different from the first electronic device:
         displaying, via one or more first displays, the second user of the second electronic having a first appearance, wherein the first appearance includes a visual representation of the second user of the second electronic device;
      while displaying, via the one or more first displays, the second user of the second electronic device having the first appearance:
         determining that one or more criteria are satisfied, the one or more criteria including a criterion that is satisfied when the first electronic device and the second electronic device are within a shared visual space of a physical environment; and
      in response to determining that the one or more criteria are satisfied:
         ceasing displaying, via the one or more first displays, the second user of the second electronic device having the first appearance; and
         in accordance with a determination that a location of the second user of the second electronic device is within a field of view of the first electronic device:
            presenting, via the one or more first displays, the second user of the second electronic device having a second appearance, different from the first appearance, at the location of the second user of the second electronic device.
45. A non-transitory computer readable storage medium storing one or more programs, the one or more programs comprising instructions, which when executed by one or more processors of a first electronic device, cause the first electronic device to perform a method comprising:
   while a communication session is active between a plurality of users of different electronic devices, including a first user of the first electronic device and a second user of a second electronic device, different from the first electronic device:
      displaying, via one or more first displays, the second user of the second electronic having a first appearance, wherein the first appearance includes a visual representation of the second user of the second electronic device;
   while displaying, via the one or more first displays, the second user of the second electronic device having the first appearance:
      determining that one or more criteria are satisfied, the one or more criteria including a criterion that is satisfied when the first electronic device and the second electronic device are within a shared visual space of a physical environment; and
   in response to determining that the one or more criteria are satisfied:
      ceasing displaying, via the one or more first displays, the second user of the second electronic device having the first appearance; and
      in accordance with a determination that a location of the second user of the second electronic device is within a field of view of the first electronic device:
         presenting, via the one or more first displays, the second user of the second electronic device having a second appearance, different from the first appearance, at the location of the second user of the second electronic device.

## Claims

1. A method comprising:
at a first electronic device in communication with one or more first displays, one or more first input devices, and one or more first output devices:
while a communication session is active between a plurality of users of different electronic devices, including a first user of the first electronic device and a second user of a second electronic device, different from the first electronic device:
displaying, via the one or more first displays, the second user of the second electronic having a first appearance, wherein the first appearance includes a visual representation of the second user of the second electronic device;
while displaying, via the one or more first displays, the second user of the second electronic device having the first appearance:
determining that one or more criteria are satisfied, the one or more criteria including a criterion that is satisfied when the first electronic device and the second electronic device are within a shared visual space of a physical environment; and
in response to determining that the one or more criteria are satisfied:
ceasing displaying, via the one or more first displays, the second user of the second electronic device having the first appearance; and
in accordance with a determination that a location of the second user of the second electronic device is within a field of view of the first electronic device:
presenting, via the one or more first displays, the second user of the second electronic device having a second appearance, different from the first appearance, at the location of the second user of the second electronic device.

2. The method of claim 1, wherein the visual representation of the second user of the second electronic device is a three-dimensional representation of the second user of the second electronic device, wherein while displaying the three-dimensional representation of the second user of the second electronic device, a number of users of electronic devices that are within the shared visual space of the physical environment and in the communication session is less than a threshold number of users of electronic devices that are within the shared visual space of the physical environment in the communication session, and the method further comprising:
while displaying the second user of the second electronic device having the first appearance:
detecting, via the one or more first input devices, a change in the number of users of electronic devices that are within the shared visual space of the physical environment and in the communication session to more than the threshold number of users of electronic devices that are within the shared visual space of the physical environment in the communication session; and
in response to detecting the change in the number of users of electronic devices that are within the shared visual space of the physical environment in the communication session to more than the threshold number of users of electronic devices that are within the shared visual space of the physical environment and in the communication session:
changing the visual representation of the second user of the second electronic device from the three-dimensional representation of the second user of the second electronic device to a two-dimensional representation of the second user of the second electronic device, including displaying, via the one or more first displays, the two-dimensional representation of the second user of the second electronic device in a window of a user interface.

3. The method of claim 1, wherein the plurality of users includes a third user of a third electronic device, different from the first electronic device and the second electronic device, that is displayed with the second appearance, wherein the visual representation of the second user of the second electronic device is a three-dimensional representation of the second user of the second electronic device, and wherein the three-dimensional representation of the second user of the second electronic device is concurrently displayed with a selectable option that is selectable to control a spatial state associated with one or more users of the plurality of users that satisfy the one or more criteria, the method further comprising:
while concurrently displaying the second user of the second electronic device having the first appearance, the third user of the third electronic device having the second appearance, and the selectable option, detecting an indication of a selection of the selectable option; and
in response to detecting the indication of the selection of the selectable option:
changing the visual representation of the second user of the second electronic device from the three-dimensional representation of the second user of the second electronic device to a two-dimensional representation of the second user of the second electronic device, including displaying, via the one or more first displays, the two-dimensional representation of the second user of the second electronic device in a window of a user interface, without changing an appearance of the third user of the third electronic device.

4. The method of claim 3, wherein detecting the indication of the selection of the selectable option includes detecting, via the one or more first input devices, a selection input directed to the selectable option provided by the first user.

5. The method of claim 3, wherein:
the selectable option is further displayed by the third electronic device;
detecting the indication of the selection of the selectable option includes receiving, from the third electronic device, input data indicating respective input provided by the third user corresponding to the selection of the selectable option that is detected by the third electronic device.

6. The method of any of claims 1-5, wherein the one or more criteria further include:
a criterion that is satisfied when the first electronic device and the second electronic device are connected to the same wireless local area network;
a criterion that is satisfied when image data captured by one or more first image capture devices in communication with the first electronic device includes image data of the second electronic device;
a criterion that is satisfied when audio data detected by one or more first microphones of the one or more first input devices is also detected by one or more second microphones in communication with the second electronic device; and/or
a criterion that is satisfied when a first contextual mapping of a physical environment of the first electronic device at least partially overlaps with a second contextual mapping of a physical environment of the second electronic device.

7. The method of any of claims 1-12, comprising:
after presenting the second user of the second electronic device having the second appearance at the location of the second user of the second electronic device:
detecting, via the one or more first input devices, that the one or more criteria are no longer satisfied; and
in response to detecting that the one or more criteria are no longer satisfied:
displaying, via the one or more first displays, the second user of the second electronic device having the first appearance.

8. The method of any of claims 1-7, comprising:
detecting, via the one or more first input devices, a request to display, via the one or more first displays, shared virtual content in the communication session; and
in response to detecting the request to display the shared virtual content in the communication session:
displaying, via the one or more first displays, the shared virtual content at a first location in a three-dimensional environment relative to the first user of the first electronic device; and
in accordance with a determination that the one or more criteria are satisfied, initiating a process to cause the shared virtual content to be displayed via one or more second displays in communication with the second electronic device at the first location in the three-dimensional environment relative to the second user of the second electronic device.

9. The method of any of claims 1-8, wherein a three-dimensional environment displayed, via the one or more first displays, includes shared virtual content of the communication session.

10. The method of any of claims 1-9, wherein the communication session was activated in response to a request to display shared virtual content in the communication session.

11. The method of any of claims 1-10, wherein the one or more first output devices includes one or more first audio output devices, and the method comprising:
while displaying, via the one or more first displays, the second user of the second electronic device having the first appearance, presenting, via the one or more first audio output devices, audio detected by one or more second input devices in communication with the second electronic device; and
in response to determining that the one or more criteria are satisfied, ceasing presenting, via the one or more first audio output devices, the audio detected by the one or more second input devices in communication with the second electronic device.

12. The method of any of claims 1-11, wherein the one or more first output devices includes one or more first audio output devices, wherein shared virtual content is displayed via the one or more first displays in the communication session, and the shared virtual content of the communication session includes an audio component, the method further comprising:
while presenting, via the one or more first audio output devices, the audio component of the shared virtual content of the communication session:
in accordance with a determination that the one or more criteria are satisfied, forgoing presenting, via the one or more first audio output devices, audio detected by the one or more second input devices in communication with the second electronic device; and
in accordance with a determination that the one or more criteria are not satisfied, presenting, via the one or more first audio output devices, the audio detected by the one or more second input devices in communication with the second electronic device.

13. The method of any of claims 1-12, comprising:
in response to detecting that the one or more criteria are satisfied:
in accordance with a determination that the location of the second user of the second electronic device is not within a field of view of the first electronic device:
forgoing presenting, via the one or more first displays, the second user of the second electronic device having the second appearance at the location of the second user of the second electronic device relative to the location of the first user of the first electronic device.

14. A first electronic device comprising:
one or more processors;
memory; and
one or more programs stored in the memory and configured to be executed by the one or more processors, the one or more programs including instructions for performing the method of any of claims 1-13.

15. A computer readable medium comprising one or more programs, the one or more programs comprising instructions, which when executed by one or more processors of a first electronic device, cause the first electronic device to perform the method of any of claims 1-13.
